# EUROPEAN PATENT APPLICATION

(11) **EP 1 811 205 A1**
(43) Date of publication of application: **25.07.2007**
(21) Application number: 05791902.9
(22) Date of filing: 21.09.2005
(51) Int. Cl.: F16H 55/17, F16H 55/26, F16H 3/00, F16H 19/02, F16G 1/28

(54) **SLIDING SHEET TYPE OF VARIABLE-TEETH GEAR**

(30) Priority: 21.09.2004 CN 200410077965
(71) Applicant: Beijing Vit Mobile Technologies Co., Ltd, Beijing 102200 (CN)
(72) Inventor: WANG, Guobin, Technology Park Changping District Beijing 102200 (CN)
(74) Representative: Mittler, Enrico
(86) International application number: PCT/CN2005/001527
(87) International publication number: WO 2006/032206

(57) **Abstract**

A variable-tooth gear with SSFT pertains to the technical fields of gearing, and variable mechanical transmissions. The variable-tooth gear is designed in accordance with "the principle of configuring variable-teeth through universally shaped SSs". The working surface is composed of a large number of thin SSs (sliding-needles) superposed on one another. The meshing tooth profiles of arbitrary shapes can be configured by the free and infinite sliding of the SSs. Since the direction of sliding of the SSs is different from the direction of forces acting thereupon, the SSs can freely deform with the current tooth profiles. The direction of the force acting upon the SS when transmitting power is perpendicular to the free-sliding direction, or the angle therebetween is within the equivalent friction angle, therefore the SS possesses the self-locking property. The tooth profile thus remains unchanged when the SSs are under stress. All the SSs form an integrally closed elastic enclosure ring, possessing the effect of "rigidity and flexibility being combined, variable-tooth being fixed". Therefore the load capacity is high, the transmission is a one-stage transmission and the transmission efficiency is high. There are only two key components, such that the structure is simple, the cost is low and the size is compact. This variable-tooth gear realizes, to the core, the concept of "continuously variable transmission via gear meshing", and can be applied to vehicles or industrial fields of high speed and large power.

## Description

### Field of the Invention

The present invention relates to the technical fields of gearing, and the design and manufacture of continuously variable mechanical transmissions.

### Related Art of the Invention

Gearing is the most widely used transmission mechanism in current machinery. Gearing has such advantages as being capable of keeping constant the instant angular velocity ratio between two gears; maintaining a large range of transmission power, varying from several hundredths to hundred of thousands of kilowatts; a large range of applicable circumferential velocities, varying from a very low level up to 300 m/s; a high transmission efficiency, with the primary transmission efficiency as high as 98~99%; and a long life endurance. However, its manufacturing and installation should be of high accuracy. More significantly, its transmission ratio is a constant value so as to make continuously variable shifting impossible. Current mechanical CVTs (continuously variable transmissions) generally employ frictional driving. These transmissions have the following disadvantages in general, (1) it is hardly possible to achieve an output of ultra low rotary speed, and the range of speed shifting is relatively narrow; (2) the transmission torque is small and the transmission power is not quite large; (3) low load capacity, and low resistance to overload and impact; (4) high requirements on the manufacture and lubrication of the components, with the components being of short life endurance, with complex designs and processes and high manufacture costs; (5) high sliding ratio and low mechanical efficiency; with some of them being even present with the phenomena of discontinuous pulse outputs and power flows. As far as the prior art is concerned, all CVTs of the friction type need large normal pressing forces to transmit power, thereby increasing the loads to each bearing; there exists significant elastic sliding and geometrical sliding among transmission bodies; efficient contact surfaces for power transmitting, theoretically being line contact or point contact, are small, so as to cause large local stresses, and even to cause the working surfaces to be abraded or be stuck in serious cases; the transmission efficiency is low and the transmitting power is limited; and their service life are short. Currently, the CVT based on slidable-sheet (SS) formed chain is the only chain-type CVT that employs a grooved sprocket (tooth-type sprocket) and a SS formed chain to transmit power via a quasi-meshing manner. This approach is different from both the meshing transmission and friction transmission, however it is an intervenient quasi-meshing transmission manner. It has many advantages, for example, low sliding ratio, accurate transmission, high resistance to wearing and impact, etc. However, the chain of this type suffers from high manufacture cost, and it has large mass, which impedes the efforts to increase the operation velocity even further. In addition, the polygon-effect of the chain transmission may cause pulses in the output velocity. A pulse-type CVT employs a geometrically closed lower pair structure, works reliably, and has a high load capacity and a stable shifting performance. Furthermore, its transmission ratio ranges widely, with the minimal rotary speed output being substantially zero. The shifting operation can be performed at the rest condition or under the operation state. In addition, it is of a simple structure and a compact size, and its manufacture cost is also low. However, the current pulse-type CVT suffers from several serious weaknesses which limit its further application to even wider fields, i.e., (I) pulses in the output make it not suitable for applications that require high output uniformity. Even though pulses may be suppressed via multiple-phase superimposing and the assistant cooperation from an overrunning clutch, and the pulse level at the output end may be significantly reduced as compared to the theoretic results due to the inertial factor of the entire operation system and the overrunning effect from the overrunning clutch, this is merely a superficial phenomenon. The actual power flow transmission is still output in the form of pulses at intervals, conforming to the theoretic results. The discontinuousness in this power flow is a main factor contributing to the low efficiency of the pulse-type CVT. (II) The reciprocating mechanism in the pulse-type CVT prevents it from being applied in the field of high speed. The vibration resulting from the unbalanced inertial forces and inertial torques will considerably increase at high speeds, and the resulting dynamic load is a main reason leading to low mechanic efficiency. (III) As the only mechanism for friction transmission in the whole system, the overrunning clutch, which is the output mechanism, presents as well a series of corresponding drawbacks arising from friction transmission, and therefore is the weakest part in the dynamic link of the whole system. The relatively low load capacity and low resistance to impact prevent the pulse-type CVT from being applied to fields of large power, high efficiency and high speed. (IV) The multiple-phase structure provided to reduce the pulse level will cause excessive redundant restrictions in the system, which makes the machine sensitive to the error and working environment, decreases the efficiency and increases the dynamic load. The increased phases also cause a complex mechanism, a complicate installation and adjustment process, with failure rate and cost being increased.

### Summary of the Invention

With regard to this, the main object of the invention is to provide a variable-tooth gear with slidable-sheet formed teeth (SSFT), which has characteristics of large load capacity, high transmission efficiency, simple structure, low cost and compactness. This variable-tooth gear realizes, to the core, the concept of "continuously variable transmission via gear meshing", and can be widely applied to vehicles or industrial fields of high speed and large power.

A further object of the invention is to provide a variable-tooth rack with SSFT, which has characteristics of large load capacity, high transmission efficiency, simple structure, low cost and compactness. This variable-tooth rack realizes in deed the concept of "continuously variable transmission via rack meshing", and can be widely applied to vehicles or industrial fields of high speed and large power.

To fulfill the above objects, the technical solution of the invention is carried out in ways specified as follows:

The invention discloses an infinitely meshing variable-tooth gear with SSFT, characterized in that, it consists of a gear body and a plurality of SSs provided in the gear body; wherein the SSs can freely slide so as to form a tooth profile of any shape.

At least one SS holder is provided in the gear body of the variable-tooth, and the SS holder is a support SS holder or a fill SS holder; and according to its arrangement manner, the SS holder is classified into a spaced type or a continuous type, where the spaced type is constituted by the SSs being arranged at intervals, and the continuous type consists of alternately arranged support SS holders and fill SS holders;
said SSs are arranged in the SS holders; a SS assembly is at least formed by a ring of SS groups that are classified into the spaced type and the continuous type; the ring of SS groups consists of a plurality of SS groups each being formed by a plurality of effect-equivalent SSs attached together; rings of SS groups comprise a spaced type ring of SS groups, wherein each SS group consists of SSs of the same type, and a continuous type ring of SS groups, which is formed by combining alternately arranged SSs of different types, including "the support SS groups" and "the fill SS groups"; the SSs comprise support SSs and fill SSs, respectively placed in support SS holders and fill SS holders disposed alternately, thereby constituting a complete ring of SS groups having independent function, and the same variable-tooth gear having a plurality of rings of SS groups is referred to as a multiple-ring variable-tooth gear; the SSs can freely move within a certain range in the respective SS holders, and the tooth profile of any shape can be formed by the free movement of the SSs;
the sliding trajectory of the SSs can be classified into a type of returning in a same direction and a type of returning in an oblique direction; can be classified into a spur SS type and a bevel SS type, according to the arrangement orientation of the SSs; can be classified into an outside support type, an outside interaction crossing support type, a central support type, a central interaction crossing support type, an outside and central double support type, and an outside and central interaction crossing support type, according to the embedding and inserting manner of the SSs into the gear body and the manner of the gear body with respect to position, support and stop of the SSs; can be classified into returning types via gravity, attraction force, repellent force, elastic force, spring force, electromagnetic force, centrifugal force, inertial force, hydraulic pressure, gas pressure, flow impact force from gas and liquid, etc., according to the types and forms of the returning driving forces acting on the SSs; and can be classified into free returning SSs and passive returning SSs;
the constraining device for the SSs is stop legs 25 for the SSs or is an outer constraining ring 23, wherein there can be one or two stop legs for the SS; the stop leg for a SS is of a convex type or a concave type, alternatively, a constraining ring, string or rod can be inserted through a hole which is punched in a SS to carry out constraining;
the variable-tooth gear can be classified into a spaced type variable-tooth gear and a continuous type variable-tooth gear according to the arrangement of SS groups in a ring of SS groups; can be classified into a single-ring variable-tooth gear and a multiple-ring variable-tooth gear according to the number of the rings of SS groups contained in one single gear; can be classified into a variable-tooth gear of a returning in a same direction type and a returning in an oblique direction type according to the sliding trajectories of the SSs; can be classified into a spur SS variable-tooth gear and a bevel SS variable-tooth gear according to the properties of the profiles of the SS meshing teeth; and can be classified into a combination type, a layered combination type and a single-piece type according to the structure of the gear body;
said infinitely meshing variable-tooth gear with SSFT is a variable-tooth cylindrical gear configured by superposing two halves, each half consisting of restraining wall surfaces for support SSs and fill SSs, positioning and supporting stop bosses, centrifuge-restraining wall surfaces for SSs, SS retracting seat restraining surfaces, and a superposing surface of a wheel and a disc, etc. the two halves constituting a complete gear body when superposed to each other, and the SS restraining wall surfaces, the positioning and supporting stop bosses, the centrifuge-restraining wall surfaces for SSs, and the SS retracting seat restraining surfaces being superposed so as to form a ring of SS holders;
alternatively, said infinitely meshing variable-tooth gear with SSFT is a variable-tooth conic gear configured by a variable-tooth conic gear body 39 and an assistant wheel body I, two rings of SS groups being symmetrically arranged on both sides of the variable-tooth conic gear body 39, with the ring of SS groups being composed of the SSs specialized for the variable-tooth conic gear, each of the two sides of the variable-tooth conic gear and one assistant wheel body I in combination forming a ring of SS holders, in which a ring of SS groups is disposed; or, the variable-tooth conic gear is composed of a variable-tooth conic gear body of a vane wheel shape and an assistant wheel body II, the SSs employing SSs of the type in which both sides integrally operate; or, the variable-tooth conic gear can be dispensed with one of its two symmetric halves to form a variable-tooth conic gear of a single-ring bevel type;
alternatively, said infinitely meshing variable-tooth gear with SSFT is a multiple-ring variable-tooth conic gear comprising a multiple-ring variable-tooth gear 62, a wheel basic body 63 and a SS assembly; the SS assembly is a SS assembly of a multiple-ring spaced type, with all SSs being the single and same type of SSs specialized for the variable-tooth conic gear, the SSs of the same type being arranged at intervals to form a ring of SS groups, a plurality of rings of SS groups of different radii constituting the whole SS assembly of a multiple-ring spaced type; wherein the SSs can be regularly arranged or arranged in a staggered manner;
alternatively, the multiple-ring variable-tooth conic gear is of a structure of a layered combination type, being composed by combining a plurality of layered wheel bodies and a wheel base body II; the layered wheel bodies can be classified into the wheel body specialized for the SSs with two stop legs and the wheel body specialized for the SSs with one stop leg;
alternatively, the multiple-ring variable-tooth conic gear is of a one-piece structure, installation holes 72 for embedding the SS holders are trepanned at the positions of its working surfaces corresponding to the arrangement locations of the SS groups, the SS groups are fitted in groups into each separate free SS holder 71, the free SS holders 71 are fitted into the installation holes 72 for embedding the SS holders, either by means of interference fitting, thermal fitting or weld fitting; or by means of thread fitting, the screw coupling surfaces of the SS holders 71 and the installation holes 72 are threaded surface; the installation holes 72 can be quadrate holes or circular holes; or by means of clearance fitting, the returning trajectories of the SSs can be a type of "returning in a same direction" or a type of "returning in an oblique direction";
alternatively, the multiple-ring variable-tooth conic gear can employ a principle of arranging the wide and narrow SSs in a staggered manner so as to densely arrange the SSs throughout the disc;
the variable-tooth conic gear of a small taper can be classified into a parted type structure and a one-piece type structure, comprising a continuous type, wherein the SS groups are superposed without gap therebetween and the rings of SS groups are composed by alternatively arranging the same type of SS groups at intervals; and a spaced type, wherein there are gaps between the SS groups and the rings of SS groups contain SS groups of the same type; "a staggered relaying" manner or a non-staggered manner can be employed to arrange the SSs; or the variable-tooth conic gear of a small taper takes a structure of "one-piece multiple-ring variable-tooth gear", installation holes for embedding the SS holders are trepanned at the positions of its working surfaces corresponding to the arrangement locations of SS groups, the SS groups are fitted in groups into each separate free SS holder, and the free SS holders are fitted into the installation holes for embedding the SS holders;
a variable-tooth flat disc gear of the type of returning in an oblique direction is composed by a variable-tooth gear body of the type of returning in an oblique direction, and an assistant flat disc wheel body of the type of returning in an oblique direction; the returning trajectories of the SSs are arranged to form an angle with the direction of the returning forces;
a variable-tooth inner conic disc gear of the type of returning in an oblique direction is composed by a variable-tooth gear body of the type of returning in an oblique direction and an assistant inner conic wheel body of the type of returning in an oblique direction; the returning trajectories of the SSs are arranged to form an angle with the direction of the returning forces;
a single-ring SS wheel of the type returning via elastic force: through channels are made on the flat disc to form a single-ring SS holder ring into which SSs are disposed;
a multiple-ring SS wheel of the type returning via elastic force: through channels are made on the flat disc to form multiple-ring SS holder rings into which SSs are disposed;
a multiple-ring SS conic wheel of the type returning via elastic force: through channels are made on the double-sided conic disc to form multiple-ring SS holder rings into which SSs or sliding-needles are disposed;
the arrangement of the SS holders can be a normal type and a staggered relaying type;
alternatively: sliding-needles are disposed in the SS holders (may also referred to as sliding-needle holders) which can be rectangular, circular or sector in shape;
the constraining wall surfaces and the positioning and supporting stop bosses of all the variable-tooth gears and the SS wheel bodies are of an outside support type, an outside interaction crossing support type, a central support type, a central interaction crossing support type, an outside and central double support type, or an outside and central interaction crossing support type.

A SS variable-tooth gear can mesh with a disc having convex teeth and concave grooves for meshing and a tooth-and-groove bench to implement infinitely meshing transmission and realize continuously variable shifting and continuously clutching, so as to manufacture a CVT and a SS clutch;
its key components include an infinitely meshing variable-tooth gear with SSs, a tooth-and-groove wheel and a tooth-and-groove meshing ring,
a CVT with a variable-tooth cylindrical gear: the input shaft is coupled to the tooth-and-groove wheel, the variable-tooth gear is coupled to an output shaft via guiding splines or splines, the variable-tooth gear can freely move in the axial direction while transmitting torques, thereby continuously varying the meshing radius with the tooth-and-groove wheel to perform continuously variable transmission; an electromagnet or a permanent magnet can be provided on the tooth-and-groove wheel disc or at a place corresponding thereto so as to induce magnetic forces onto the SSs to make them return, or a permanent magnet or an electromagnet can be provided inside the variable-tooth gear, all SSs are permanently magnetized or electro-magnetized so as to be moved outwards via repellent forces to implement returning; alternatively, returning can be performed via the magnetic induction interactions between the magnetic field and the inducing current induced by the movement of SSs in the magnetic field (or alternate electromagnet field); alternatively, the generation device which generates the returning driving forces for SSs can be stationary and does not participate in motion, the electromagnet itself can be stationary and does not follow the tooth-and-groove disc to move, the SSs can be attracted to return by magnetic induction; (as for returning via electromagnetic forces) the design radial dimension of free centrifugal returning at the state of SSs separating from the gear wheel can be larger than, equal to, or smaller than the returning radial dimension when meshing with the tooth-and-groove wheel; a central recess 9 can be provided at the center of the tooth-and-groove wheel; the distance between the grooves of the tooth-and-groove wheel can be or can not be a multiple of the distance between the SS groups; a lubricant hole (or a lubricant slit) can be provided on the wheel body, the inside of the wheel body can also be designed as a structure of a centrifugal pump, a friction traction ring 22 can be provided at the outer edge of the variable-tooth gear, the friction traction ring can be made of elastic materials such as rubber; an non-closed outer constraining ring for SSs 23 can be disposed on the outer circumference of the variable-tooth gear, an arc-shaped transition guiding zone 24 can be designed in the direction that faces the SSs' rotations into the constraining ring so as to improve the operation reliability, now the SSs can be dispensed with the stop legs, the SSs can also be replaced by sliding-needles; alternatively, a stress-suppressing pad layer 26 can be attached to the bottom of the concave grooves of the tooth-and-groove disc, which pad is generally made of elastic and soft filling materials, such as spray coating rubber materials, etc.;
a multiple-shift speed transmission with a variable-tooth cylindrical gear, characterized in that , the tooth-and-groove disc is of the type specialized for stepped transmission, after the pattern of teeth and grooves are optimized for each segment and for each step, the distribution of the tooth profiles of the tooth-and-groove disc is made regular, shuttle-shaped teeth can be staggered or uniformly arranged in the radial direction; or a shuttle-shaped gear 30 can replace the SS variable-tooth gear to implement meshing transmission via fixed meshing teeth with a shuttle-shaped toothed disc 31;
a constant mesh multiple-speed transmission comprises a concentric toothed disc with multiple cones 32, transmission shaft 33, conic gear 34, a reverse-shifting gear 35, the concentric toothed disc with multiple cones 32 is configured by concentrically arranging a plurality of conic gears of different radii, the conic gear at each radius has its respective conic gear which keeps constant mesh therewith, a synchronous meshing shifting manner containing a synchronizer locking ring and a coupling sleeve, or an electronically or hydraulically controlled clutch, or the shifting device of the SS clutch in this patent is employed by the conic gear and its respective transmission shaft to implement stepped or automatic speed shifting;
alternatively, in a combination design of multiple-phase sets a parallel coupling can be employed to increase power, or a series coupling can be employed to increase transmission ratio; the multiple-phase variable-tooth gear arranged in the manner of parallel coupling can be distributed according to the progressive differential principle; the two sides of the SS variable-tooth gear can mesh with the tooth-and-groove disc so as to output power in shunt; or a type with a single tooth-and-groove disc and transmitting at both sides of the variable-tooth gear can be employed;
a CVT with variable-tooth conic gear: its key components include conic disc tooth-and-groove wheels 42 and a variable-tooth conic gear 43; other components include a shifting lever 44, a sun gear 45, a planet gear 46 and the like, an output shaft is fixedly coupled to the conic disc tooth-and-groove wheel to introduce power flow, two conic disc tooth-and-groove wheels are symmetrically disposed to sandwich a double-ring variable-tooth conic gear therebetween, the two conic disc tooth-and-groove wheels mesh with the double rings of the SSs of the variable-tooth conic gear, respectively, so as to implement meshing transmission to output power; the variable-tooth conic gear and the planet gear 46 are concentrically fixedly coupled, and are coupled to a planet bracket via a rotary pair, the rotary axis of the planet bracket is concentric with the sun gear and the output shaft, the planet gear meshes with the sun gear, and the sun gear is fixedly coupled to the output shaft;
alternatively: the conic tooth-and-groove wheels serve as "a shifting and displacing wheel" fixedly coupled to the planet gear;
alternatively: the shifting assistant mechanism can be of other types;
alternatively: the variable-tooth conic gear is replaced with a variable-tooth flat disc gear of the oblique returning type, the conic disc tooth-and-groove wheels are replaced with flat disc tooth-and-groove wheels; the meshing type therebetween can be of an inner meshing type or an outer meshing type;
the pressing force between the tooth-ant-groove wheels and the variable-tooth gear can be very small or even nil; or the tooth-and-groove wheels and the variable-tooth gear do not contact with each other, with spacing therebetween, and the meshing transmission is completely implemented by returning SSs;
alternatively: a structure of a single conic disc tooth-and-groove wheel and a single-ring variable-tooth conic gear, or an arrangement of "two variable-tooth conic gears sandwiching the double-sided conic disc tooth-and-groove wheels in the opposite directions" can be employed to perform transmission;
a planet conic disc variable-tooth gear CVT: the conic disc tooth-and-groove wheel 42 serves as a sun gear, with a plurality of variable-tooth conic gears arranged on its circumference as planet gears, the outer sides thereof mesh with a large tooth-and-groove wheel of an inner meshing type 48, so as to constitute a transmission structure of a planet conic disc type; in addition, an inner meshing single-stage transmission can also be employed, with the variable-tooth conic gear 43 meshing with the large tooth-and-groove wheel of the inner meshing type 48;
the shifting and transmission structure of the variable-tooth gear can be: a variable-tooth conic gear meshing with a tooth-and-groove wheel of an inner meshing type to implement transmission; a variable-tooth conic gear meshing with a tooth-and-groove wheel of an outer meshing type to implement transmission; an oblique returning variable-tooth gear of a flat disc type meshing with a tooth-and-groove wheel of an outer meshing type to implement transmission; an oblique returning variable-tooth gear of an inner conic disc type meshing with a tooth-and-groove wheel of an outer meshing type to implement transmission; a tooth-and-groove wheel of a flat disc type meshing with a variable-tooth conic gear; a variable-tooth conic gear with a small taper meshing with a tooth-and-groove wheel of an outer meshing type to implement transmission, wherein: B in the meshing manner of the variable-tooth conic gear with the tooth-and-groove wheel, the meshing curvature and orientation match; a conic disc tooth-and-groove wheel with a small taper meshing with a variable-tooth conic gear; wherein the conic disc tooth-and-groove wheel with a small taper is a hollow tooth-and-groove wheel having meshing teeth and grooves on the inner and outer conic surfaces, and can mesh in the inner side with the variable-tooth conic gear or mesh in the outer side with the variable-tooth conic gear;
a multiple-disc type transmission: by alternatively superposing a plurality of variable-tooth conic gears with large tapers and the tooth-and-groove wheels of large tapers, their meshing points can be designed in accordance with the progressive differential principle;
alternatively: the generation device which generates the returning driving forces for SSs can be stationary and does not participate in motion, for example: the electromagnet itself can be stationary and does not follow the tooth-and-groove disc to move, and the SSs can be attracted to return by magnetic induction;
a belt type CVT with a multiple-ring variable-tooth conic gear: being composed of two pairs of multiple-ring variable-tooth conic gears, the rotational shafts of which are parallel, with sandwiching a driving belt, the distance between the convex and concave meshing grooves of the driving belt and the distance between the SS groups can be designed in accordance with "the progressive differential principle";
a belt CVT of returning via elastic nipping force type: the SS holders are formed by making through channels on the double-sided conic disc, a multiple-ring SS conic wheel of returning via an elastic force type is formed by placing the SSs or sliding needles into the holders, these holders are arranged by disposing, according to the principle of the convex and concave portions opposing each other, two belts with opposing teeth and grooves arranged on the two working side surfaces thereof, in the way that the driving belts' convex teeth and concave grooves are opposed to each other, the SSs are urged to slide transversely, and therefore implement returning via elastic forces, so as to implement the meshing transmission of the conic wheel and the belt; the overall layout of the conic wheel and the driving belts: the two driving belts are stretched by the two set of SS conic wheel assemblies, the rotation shaft of which are parallel, to implement power transmission, each set of SS conic wheel assembly comprises a double-sided conic disc, two support conic discs, and the driving belt consists of two clipping tooth-and-groove belts with convex teeth and concave grooves arranged on the working side surfaces thereof;
a wheel CVT of returning via elastic nipping force type: consists of a pair of conic disc tooth-and-groove wheels and a single-ring SS wheel of returning via elastic force type sandwiched by the opposing convex teeth and concave grooves of the conic disc tooth-and-groove wheels, the single-ring SS wheel of returning via elastic force type comprises a SS wheel body for translations, fill SSs of returning via elastic force type and support SSs of returning via elastic force type; and it can be classified into an inner meshing type and an outer meshing type;
a transmission in which the flat disc type tooth-and-groove wheel oppositely clips SSs of returning via elastic force type: comprises a pair of flat disc tooth-and-groove wheels and a single-ring SS wheel of returning via elastic force type, with the single-ring SS wheel being sandwiched by the opposing convex teeth and concave grooves;
transmissions of a small taper variable-tooth conic gear series: the input variable-tooth conic gear and the output variable-tooth conic gear are arranged conversely, the two variable-tooth conic gears are coupled by an inner meshing cylindrical tooth-and-groove ring with meshing teeth and grooves on the inner surface to implement infinitely shifting; or, the two variable-tooth conic gears are coupled by a conic tooth-and-groove ring with meshing teeth and grooves on both the inner and outer surfaces to implement continuously variable shifting; or: the two variable-tooth conic gears are coupled by an inner meshing cylindrical tooth-and-groove ring with meshing teeth and grooves on both the inner and the outer surfaces to implement continuously variable shifting;
alternatively: the input variable-tooth conic gear and the output variable-tooth conic gear are arranged in the same direction, the type of an intermediate member can implement transmission via a rigid conic toothed ring of inner meshing type, and can also implement transmission via a flexible belt, for example, via meshing of the driving belt with meshing teeth and grooves on the inner surface thereof with the two variable-tooth conic gears to implement transmission;
alternatively: a one-stage direct transmission type can be employed, which is a type without any intermediate member; transmission is performed via directly meshing of the variable-tooth conic gear having a small taper with the rigid tooth-and-groove ring;
a variable-tooth rotary shaft roller gear CVT comprises: key components: a variable-tooth cylindrical gear , a rotary shaft roller wheel; and assistant components: a fixing bracket, a revolution bracket, a planet conic gear, a sun conic gear and the related components; the variable-tooth cylindrical gear is coupled to the output shaft, and is fitted on the fixing bracket; the rotary shaft roller wheel and the planet conic wheel 116 are coupled to the output shaft 33, and are fitted on the rotatable bracket , the planet conic wheel 116 meshes with the sun conic gear 117, the sun conic gear is coupled to the input shaft; as the shifting lever 44 is turned, the whole revolution bracket will rotate around the axis of the input shaft, at which time the planet conic gear rotates around the sun conic gear, but the meshing state therebetween can be always maintained so as to transmit the torque of the input shaft to the rotary shaft roller wheel, due to the rotations of the revolution bracket, the angle between the rotation axes of the rotary shaft roller wheel and the variable-tooth cylindrical gear is changed, so that the transmission ratio varies;
alternatively: a rotary shaft roller wheel of the type in which the density of the rollers can be changed can be employed, the density/number of the rollers can be changed according to changes of the transmission ratio, all rollers come into operation at high speeds, and the number of rollers that operate at low speeds is reduced to half of the total number; the roller wheel with variable density is configured by interposing two halves with sparse rollers, when it is required that the roller wheel has denser rollers, the two half roller wheels can be interposed so as to double the roller density, and the density will be reduced to one half if the two halves are separated;
alternatively: multiple-phase mechanisms can be arranged in parallel, wherein two variable-tooth cylindrical gears are employed at an upper position and a lower position to mesh with the rotary shaft roller wheel, so as to double power; an arrangement can also be employed where two rotary shaft roller wheels are provided respectively at an upper position and a lower position of the variable-tooth cylindrical gear to mesh therewith;
alternatively: a multiple-phase layout can be employed, wherein a plurality of rotary shaft roller wheels is provided along the circumferential direction of the variable-tooth cylindrical gear to mesh therewith; or: a plurality of variable-tooth cylindrical gears is provided along the circumferential direction of the rotary shaft roller wheel to mesh therewith;
the rollers of the rotary shaft roller wheel can take a conic shape, and the performance of continuously variable transmission is basically improved by using of the self-locking property; its working surface can also be made to be an arc shape; alternatively: the rotary shaft roller wheel can be replaced with a gear, a bevel gear, a worm wheel or a worm to mesh with the SSs of the variable-tooth cylindrical gear, the variable-tooth cylindrical gear can also be replaced with a variable-tooth conic gear;
alternatively: a transmission in which the rotation shaft of the rotary shaft roller wheel is fixed and the rotation shaft of the variable-tooth cylindrical gear can rotate is employed;
a variable-tooth CVT with a radius-varying metal block belt: comprises a metal block belt wheel, the radius of which belt is continuously variable, and a variable-tooth cylindrical gear; continuously variable shifting is realized by changing the radius spanned by the metal blocks of the metal block belt wheel and making them mesh with the variable-tooth gear; the metal block belt wheel, the radius of which belt is continuously variable, is composed by two opposing conic discs sandwiching a metal block belt therebetween, the metal block belt is a flexible convex-concave tooth block belt (also referred to as a chain of tooth blocks) consisting of alternately superposing several convex tooth blocks 119 and concave tooth blocks 120 coupled by a tooth block coupling string 118 running therethrough, the radius of the metal block belt on the conic disc can be changed as the distance of the two opposing conic discs changes, so as to implement continuously variable radius; alternatively: in order to improve the unity of the metal block belt wheel, the conic surface of the conic discs can be provided with convex-concave grooves so as to mesh with the flexible metal block belt to form a stable unity, at which time the side wall of this metal block belt is of a SS belt structure; or elastic force and spring force, etc. can be employed to return the SSs and make them mesh; in addition, the conic disc can also be replaced with a multiple-ring variable-tooth conic gear, the meshing surface is formed by alternately superposing the convex and concave tooth blocks of the metal block belt so as to mesh with the SSs of the variable-tooth conic gear, or in order to facilitate shifting via sliding in the radial direction, idler wheels 141 can be provided on the side walls of the metal blocks; alternatively: the metal block belt can also be replaced by a rubber belt with grooves on the outer side and on both the side walls; a transmission assembly being capable of working continuously can be formed by symmetrically arranging two metal block belt wheels, with each wheel meshing with one variable-tooth cylindrical gear, and a continuous output of power flow is realized by alternate complement meshing of two variable-tooth cylindrical gears and two metal block belt wheels; a metal block belt wheel with infinitely varying radius can be of an inner stretching type, in which the stretching device is located inside of the wheel body, or of an outside stretching type, in which the stretching device is located outside of the wheel body, and the stretching string and stretching device thereof can be arranged sideward; alternatively: a gear with a fixed number of teeth can be substituted for the variable-tooth gear to mesh with the metal block belt so as to implement continuously variable shifting;
a variable-tooth gear CVT with radius-varying tooth segments: comprises a toothed ring assembly capable of changing radius infinitely, and a variable-tooth cylindrical gear, etc, where continuously variable shifting is realized by changing the radius spanned by the toothed ring and making it mesh with the variable-tooth gear; the toothed ring capable of changing radius infinitely is formed by combining several tooth segments, each of which is coupled to the radial sliding rail via a translation pair, to assure the continuity of the working tooth surfaces of the toothed ring, at least two sets of toothed rings are alternately arranged in a staggered manner to form a toothed ring assembly, each set meshing with a variable-tooth cylindrical gear, respectively, or meshing with different rings of SS groups of a double-ring variable-tooth cylindrical gear, so as to form a CVT assembly capable of independently performing a work cycle, a continuous output of power flow is thus realized by alternate complement meshing of two variable-tooth cylindrical gears and two toothed rings; alternatively: the combination of the two sets of toothed rings can be replaced with a single-toothed ring formed by the step tooth segments 125 being alternately interposed; the meshing manner of the variable-tooth gear and the radius-varying toothed ring can take an inner meshing type and an outer meshing type;
a transmission mechanism of an inner meshing planet type: variable-tooth gears mesh with a large toothed ring composed of a plurality of tooth segments from inside, the variable-tooth gears and gears a are coaxially fixedly coupled, the gears a and gears b mesh with each other, gears b in turn mesh with a sun gear, the rotation shafts of gears a, gears b and the sun gear 45 are coupled in a triangular shape via a planet bracket 50, the distances of the shafts of the gears a and gears b are fixed, the distances of the shafts of the gears b and the sun gear 45 is fixed, and the gears a and the sun gear 45 are coupled by a coupling body 142 in such a way that the distance between their shafts can be infinitely adjusted; during speed adjusting, the radius of the toothed ring assembly is changed and the distance between the shafts of gears a and the sun gear 45 is synchronically changed so as to implement shifting; generally, "the sun gear and the planet bracket" serve as input and output transmission terminals; alternatively: the tooth segments can employ non-involution tooth profiles; the variable-tooth gear can employ "transmission by SSs with bevel teeth"; alternatively: a single-ring variable-tooth cylindrical gear having wider SSs can also be employed to replace the set of two variable-tooth cylindrical gears or the double-ring variable-tooth cylindrical gear;
a SS clutch of an axial coupling type : generally comprises teeth and grooves of two tooth-and-groove disc surfaces oppositely clipping a SS wobble-plate;
a shifting transmission with a constant mesh SS type gear: comprises a constant mesh gear with a tooth-and-groove disc on a side wall, a shifting push lever, a thrust bearing, oppositely clipping grooved disc for returning via elastic force, positioning and coupling pins, a SS wobble-plate and bolts; the transmission shaft is coupled to the wobble-plate via a guiding spline, the SS wobble-plate is divided into two halves to be coupled by a bolt into a whole, each half wobble-plate is provided with a ring of SS groups which functions independently, the two rings of SS groups are clipped by a pair of tooth-and-groove discs with opposing teeth and grooves, respectively, the pair of opposite clipping tooth-and-groove discs refer to a mobile tooth-and-groove disc 129, and the sidewall tooth-and-groove disc surface of the constant mesh gear 127, both being coupled by the positioning and coupling pin 130 to assure synchronous rotations, but they can move axially with respect to each other; the engagement between the two constant mesh gears 127 and the transmission shaft is via a bearing joint, the shifting push lever 128 is coupled to the two mobile tooth-and-groove discs 129 via the thrusting bearing, respectively; alternatively: the returning manner of such SSs can employ "an electromagnetic driving manner"; or: the SSs used in the SS wobble-plate can be the SSs of a segment shape in section or sliding-needles; or the design of alternative and dense arrangement of the fill SS groups and the support SSs;
a SS clutch of a radial coupling type: comprises a coupling sleeve 133 with teeth and grooves on the inner loop, and a SS grooved wheel 134, the upper portion of such a SS is in the form of an arc, allowing for a natural transition when being inserted; after being inserted, the coupling sleeve and the SS grooved wheel can perform infinitely meshing; the design can also be employed thus that the fill SS groups and the support SS groups are disposed alternately and densely;
a SS clutch of a conic surface coupling type: comprises a SS conic disc 135 and a coupling sleeve 136 for a tooth-and-groove conic disc; after the SS conic disc is coupled to the coupling sleeve for a tooth-and-groove conic disc, the SSs return under the effect of centrifugal forces and mesh with the tooth-and-groove conic disc so as to implement the engagement of the clutch;
an overrunning clutch of a SS type: comprises SSs, a SS grooved wheel 134, and a planet wheel outer loop 140; in operation, the planet wheel outer loop 140 rotates in a reciprocating manner, the SSs return under the effect of centrifugal force and so mesh with the single-direction teeth and grooves of the planet wheel outer loop, so as to transmit the torque to the SS grooved wheel 134 and rotate it, in addition, the oil lubrication via a centrifugal pump can be employed;
alternatively: the SSs and the blocking grooves can take a radiating form, the cross sections of the SSs can be of a segment shape; the type in which the SSs are densely arranged throughout the ring can be employed; or a spaced type can be employed; in such a mechanism, the SSs are constrained by the planet wheel outer loop, therefore the SSs do not need stop legs; alternatively: the "progressive differential principle" can be considered when the distances and the number of the single-direction teeth and grooves of the planet wheel and the SS tooth-and-groove wheel are designed as a whole; the load capacity can be improved by increasing the width and the thickness of the SSs of the clutch; "the self-locking property" can be utilized to design the teeth and grooves of the planet wheel outer loop to improve the performance of infinitely meshing ;
alternatively: a Mode A transmission comprises a Mode A main wheel body I, a Mode A main wheel body II, a Mode A assistant wheel body, Mode A support SSs, and Mode A SSs and the like;
alternatively: a Mode B transmission comprises a Mode B main wheel body, a Mode B assistant wheel body, Mode B SSs, a nut fork, and a speed adjustment guiding sleeve and the like;
a CVT of a type in which steel needles and steel sheets mesh, the infinitely meshing is implemented by interposing the steel needles 211 and steel sheets 212 into each other; the steel needles 211 are disposed throughout the inner side of the belt, and the transversely arranged steel sheets are disposed throughout the outer side of the wheel, the infinitely meshing is implemented by interposing the steel needles and steel sheets into each other;
an infinitely meshing transmission with fluid deformable at a fixed volume, its infinitely meshing device unit is a deformable meshing unit 213 which is closely filled with fluid and has a fixed volume, the infinitely meshing is implemented by meshing with the inner teeth of the driving belt 151 through the deformable property of the fluid at a constant volume, or such fluid is "a magnetorheological fluid";
a CVT of an operation separated and effect combined type, characterized in that: two pairs of conic discs sandwich therebetween a driving belt with convex and concave meshing teeth on the inner side. The key difference of its continuously variable shifting principle from that of the prior art metal belt CVT is the fact that the operations of infinitely changing radius and infinitely meshing are separated; a number of infinitely meshing device units that can perform infinitely changing radius in synchronization with the driving belt are coaxially disposed in the opposing inner space between the two conic discs, the infinitely meshing device unit comprises a unit carrier and a meshing body; the meshing body meshs with the convex and concave meshing teeth on the inner side of the driving belt so as to implement transmission via infinitely meshing; the meshing body of the infinitely meshing device unit can be a SS variable-tooth meshing device, a magnetorheological fluid/electrorheological fluid meshing device, an infinitely meshing device via a worm/worm rack, an infinitely meshing device via skidding blocks; and its driving belt can be a flexible driving belt with teeth on the inner side, and can also be a flexible driving chain with teeth on the inner side.

A transmission of a SS variable-teeth meshing type: its infinitely meshing device unit comprises the meshing unit carrier 155 and a SS group consisting of several SSs (including sliding-blocks); the SS group infinitely meshes with the driving belt 151 to transmit power; an idler wheel 152 embodied as a double-wheel, a single wheel or a drum-like wheel can be provided on the beam for a SS holder, the idler wheel(s) cooperates with the radial rail 146, there are provided stop seats 153 for SS holders and returning springs 154 under the SS groups, the returning spring being classified into a flat spring and a corrugated spring, there can be provided a rolling bearing or a sliding bearing between the idler wheel and the rotation shaft, or even the sliding motion is implemented directly by lubricating contacts without providing the idler wheel; on the conic disc 147 are provided several radial rails 146 which match the orientation of the generatrix of the conic disc, these rails cooperate with the idler wheels on the respective meshing unit carrier 155 so as to form a translation pair coupling; the driving belt operates at a stable radial position and implements, together with the meshing body, i.e., the SS groups of the meshing device unit, infinitely meshing; a sliding-block can be add to a SS group , if the direction of the force acting upon the SSs is to the left, the sliding-block should be installed at the left side, and vice versa, if the SSs are acted by forces in two directions under rotation, then one sliding-block should be installed at either side thereof; alternatively, the CVT employs a metal pressing belt having teeth at the inner side thereof, this metal pressing belt comprises metal rings 159, metal blocks of a fill type 160, and metal blocks of a meshing type 161, the metal blocks of a fill type and the metal blocks of a meshing type are alternately superposed to form a metal belt with teeth on its inner side; alternatively: the driving belt can be a synchronous metal belt of a hole-meshing type, the whole driving belt is constructed by closely superposing multiple layers of metal rings with holes therein, all holes corresponding one by one so as to form rectangular holes for SSs to insert therethrough, in operation, the SSs mesh with the rectangular holes so as to implement transmission; alternatively, the radial constraining rail of the infinitely meshing device unit 148 is as follows; the whole interior of the conic disc is excavated such that the outer wall surface 164 and the inner wall surface 165 of the conic disc become conic surfaces similar in orientations, several sliding grooves 166 are notched on the conic surface along its generatrix; alternatively: the radial rail is a cylindrical guiding groove 168, corresponding cooperation between the meshing device unit and the cylindrical guiding groove employs a cylindrical rolling translation pair 167; it is also possible to provide a stretching spring 163; alternatively: the contact angle between the SSs and the surfaces of the meshing tooth is less than the equivalent friction angle, a wearable adhesive layer 190 can be provided on the surfaces of the meshing teeth of the driving belt, a wearable metal paste block with high hardness or a coating of wearable material can be adhered, or the belt base can directly undergo hardening treatment;
a device to eliminate the gaps between the metal blocks on the slack side of the metal belt comprises: an urging wheel 172, a small gear 173, a driving wheel 174, a large gear 175, and a clamping mechanism 176; the urging wheel and the driving wheel are both pressed firmly onto both sides of the metal belt (a pressure belt) 170, the urging wheel is fixedly coupled to the small gear, the driving wheel is fixedly coupled to the large gear, and the small gear and the large gear maintain meshing transmission; alternatively: a motor can be employed to directly drive the urging wheel 172; alternatively: the manner of directly impacting via a gas flow or fluid flow of high speed can also be employed to urge the metal blocks to accelerate so as to eliminate gaps therebetween;
a magnetorheological/electrorheological fluid CVT: its infinitely meshing device unit is "a magnetorheological/electrorheological fluid" meshing device, the meshing body is a magnetorheological/electrorheological fluid infinitely meshing body 177, at the instance before meshing, there is no magnetic field, "magnetorheological fluid" takes a liquid form, so it can sufficiently deform in accordance with the current meshing tooth profiles, when a magnetic field is applied after meshing, the magnetorheological fluid will immediately assume a solid state and become a solid tooth profile with which it meshes, and the magnetic field is removed after the meshing is released, so the magnetorheological fluid assumes the liquid state again; alternatively: "the magnetorheological fluid" and "the electrorheological fluid" mix and combine with the SS groups, the SSs, when under the effect of forces, mix with the magnetorheological fluid, at the dynamic instance when the SSs come into meshing, the magnetorheological fluid which mixes with the SSs assumes a liquid state, so the SSs can smoothly slide and deform, and once the SSs assume a complete meshing state and stop sliding, the magnetorheological fluid mixing therewith assumes a solid state and integrates firmly with the SSs so as to form a fixed tooth profiles;
alternatively: a magnetorheological/electrorheological fluid CVT comprises a driving belt/chain 180 containing magnetorheological/electrorheological fluids on the inner side thereof, meshing bodies 178 with fixed tooth profiles, and a conic disc, magnetorheological/electrorheological fluids are provided on the inner side of the driving belt base, in other words, the meshing bodies of the infinitely meshing device unit are of fixed tooth profiles, and the tooth profiles of the magnetorheological fluids or electrorheological fluids on the inner side of the belt base change according to the deformation of the tooth profiles of the meshing bodies 178 so as to implement infinitely meshing;
alternatively: a magnetorheological/electrorheological fluid CVT comprises: a member capable of infinitely varying radius via magnetorheological/electrorheological fluids 181, bodies 177 capable of infinitely meshing via electrorheological fluids, and a soft cavity for magnetorheological/electrorheological fluids 179; the processes of the infinitely radius-varying and infinitely meshing are implemented by magnetorheological/electrorheological fluids, the process of the infinitely radius-varying is implemented by infinitely changing the volume of soft cavity 179 for magnetorheological/electrorheological fluids and by "liquefied deforming" of the magnetorheological/electrorheological fluids, once the process of the radius-varying completes, the magnetorheological/electrorheological fluids then solidify and the radius is fixed, so as to construct the cylinder capable of infinitely radius-varying; the process of infinitely meshing is conducted by several bodies capable of infinitely meshing via electrorheological fluids 177 on the outer circumference and the driving belt 151;
alternatively: the "magnetorheological fluids" can be packed into a soft bag to mesh with the fixed teeth, and the fixed teeth for meshing can be manufactured into an arc shape;
alternatively: the magnetorheological fluids can also directly adhere to the surface of the smooth belt, and mesh with the friction surface conic disc with large roughness to implement transmission; alternatively: the driving belt is a driving belt with teeth on both sides, and magnetorheological/electrorheological fluids are provided on the conic surface of the conic disc; alternatively: the magnetorheological/electrorheological fluids are provided on the side surfaces of the driving belt, and the corresponding conic surface of the conic disc is provided with convex teeth and concave grooves, at the dynamic instances of coming into meshing and releasing from meshing, the magnetorheological/electrorheological fluids "liquefy", while in other regions they are in a "solidified" solid state;
a rack CVT with a worm/worm rack: its infinitely meshing device unit employs a meshing device operating in "a manner of infinitely meshing via a worm/worm rack", and can be of a "worm and worm rack meshing" type, a driving belt/chain in a worm rack toothed shape 183, the worm 182 infinitely meshes with the driving belt/chain in a worm rack toothed shape 183 under the driving of a controller 184 to transmit power; or it can be of a type in which two worms racks mesh, the worm rack 185 translates and infinitely meshes with the driving belt/chain in a worm rack toothed shape 183 under the driving of the controller 184;
an infinitely meshing transmission with sliding-blocks: its infinitely meshing device unit is a "sliding-block infinitely meshing" device, the tooth profiles on the inner side of the sliding meshing triangular toothed belt, a chain 186 whose triangular teeth at the inner side meshes through sliding, capable of meshing via sliding with the tapered tooth blocks 187 by automatically finding the meshing points through mechanical sliding, the tapered tooth blocks 187 moves in the trails 189, in x direction, they can return via centrifugal forces; in y direction, they are self-locked, in operation, the tapered tooth blocks can freely return in x direction until they reach the optimal meshing end of the triangular-tooth driving belt capable of meshing via sliding 186 so as to mesh sufficiently with the surfaces of the triangular teeth; they are self-locked in y direction, by juxtaposing and operating two types of tapered tooth blocks, denoted by a and b, which are orientated along complementary rails, it is realized thus that the infinitely meshing device unit can infinitely mesh with the triangular-tooth driving belt capable of meshing via sliding 186 at any point in the regions that the tooth blocks can slide;
a CVT with a variable-tooth gear capable of radius varying, the variable-tooth gear capable of radius varying is composed of a plurality of infinitely meshing device units 148, the infinitely meshing device units can synchronously move in the radial direction along their respective radial sliding trail 123, respectively;
alternatively: the infinitely meshing device units 148 mesh with an internal gear ring 191, or: the infinitely meshing device units 148 mesh with an external gear ring 192; or: a variable-tooth cylindrical gear meshes with external meshing tooth segments 193;
a conic disc without a physic spindle in the inner side, with no transmission shaft between the two conic discs, the infinitely meshing device unit can move into a region of a smaller radius;
alternatively: the carrier for the infinitely meshing device unit is a flexible carrier for the infinitely meshing device unit, the carrier for the meshing unit employs a flexible, a pliable structure, the carrier of the meshing unit is attached to the teeth on the inner side of the belt so as to sufficiently mesh therewith, and its curvature can completely coincide with that of the inner side of the belt;
a transmission of a type without a centrifugal pressing effect, the radial motion of the meshing device unit is controlled by a radial synchronization controller 196, in operation, the centrifugal force poses no centrifugal pressing effect onto the conic disc 147, and it suffices to notch radial through grooves on the conic disc 147,
its radial synchronization controller 196 can employ a screw nut structure, the nut 198 is coupled to the meshing device units 148, and the synchronous motions of respective meshing device units 148 in the radial direction are achieved by synchronously controlling the rotation angles of respective screws;
alternatively: in the radial synchronization controller, each infinitely meshing device unit 148 comes into contact with the inner conic surface of a recessed conic disc 199 via idler wheels 152, and the synchronous motions of respective meshing device units 148 in the radial direction are achieved by controlling the distance of the recessed conic discs 199 on both sides;
alternatively: the motion trajectories of the infinitely meshing device units 148 are subject to the constraint of a respective corresponding spiral rail with variable radius 201 on a radius-varying rotary disc 200, and the radius-varying rotary disc 200 implements the synchronous motions of respective meshing device units 148 in the radial direction;
alternatively: the infinitely meshing device units 148 are coupled to the radius-varying rotary disc 200 via a linkage mechanism, or a two-rod linkage mechanism is employed; the synchronous motions of respective meshing device units 148 in the radial direction are realized by rotating the radius-varying rotary disc 200;
alternatively: the rotation angle of the radius-varying rotary disc 200 is automatically monitored in real-time by a hydraulic or mechanic manner;
alternatively: any one of the infinitely meshing device units is constrained by a trajectory of the idler wheel, the coupling constraints among all meshing device units are conducted by a synchronous radial motion mechanism so as to realize radius varying synchronously and
equally;
alternatively: the infinitely meshing device units 148 can be directly inserted into the conic body to transmit torque without being providing with any assistant constraining devices, the T-shaped groove of the trajectory of the idler wheel is changed to a rectangular groove to cooperate with the infinitely meshing device units, the radius is varied freely in the radial direction, the driving belt 151 directly imposes a slave radial dimension constraint on the respective meshing device units 148, and all the infinitely meshing device units on the same conic disc should be coupled to each other by a synchronous radial motion mechanism such that all infinitely meshing device units move in the radial direction synchronously,
alternatively: the synchronous constraint in the radial direction can be implemented by coupling the linkage mechanism to the radius-varying rotary disc 200, or: the screw and nut structure which is not self-locking in either direction is employed, and all screw nuts move synchronously through the joint of the conic gear mechanism 203 so as to implement the synchronous radial constraints;
alternatively: the infinitely meshing device unit implements synchronous radius-varying through the control of the radius-varying rotary disc 200 and the linkage mechanism 202; it is not necessary to notch radial rail grooves on the conic disc 147, or rectangular grooves are provided on the conic disc 147 to cooperate with the infinitely meshing device unit,
a transmission of the type containing a central guiding and constraining disc, a central guiding and constraining disc 204 is disposed between the two conic discs 147 so as to transmit torques and guide in the radial direction, the central guiding and constraining disc 204 is of a flat disc type or a double-sided conic disc type, or: a radial synchronization controller is provided in the center of the central guiding and constraining disc 204;
alternatively: a separating device via electromagnetic traction is provided, and the conic disc combined by split parts is employed, comprising an inner conic disc 147 and an outer conic disc casing 205 with a predetermined axial spacing therebetween, and an electromagnetic sucking disc 206 is provided in the inner conic disc 147 and/or an outer conic disc casing 205, or: the electromagnetic sucking disc is replaced with a hydraulic or pneumatic device;
an electromagnetic traction controller for seating SSs, wherein stop bars against returning and seating of SSs 207 is controlled by the electromagnetic forces of the electromagnetic sucking disc 206;
alternatively: a mechanic traction controller for seating SSs, a seating control disc 209 is rotated, and a cam 208 is entrained by the idler wheel 152 mechanism to rotate, and the stop bars against returning and seating of SSs 207 are hence urged to move, so as to seat the SSs to achieve the separation of the SSs from the inner meshing teeth of the driving belt;
a driving belt with single-direction meshing teeth, the inner meshing teeth are divided into two halves, each half region is designed to be a single-direction tooth surface;
a CVT with a meshing type steel ring, comprises a steel ring with meshing teeth on the inner side 210 and the corresponding conic disc.

The tooth-and-groove wheel is classified into a flat disc type and a conic disc type, its working disc surface comprises convex teeth and concave grooves; its groove pattern is: a single tooth pattern in the form of radiating in radial direction, an arrangement equivalent in the interval density of teeth and grooves, a type of being knurled throughout a disc, a type with a uniform array of protuberances throughout the disc surface, a type with a uniform array of dimples throughout the disc surface, a specialized type for the bevel SS variable-tooth gear, a tooth-and-groove disc type for stepped transmission, a type where the tooth-and-groove pattern is optimized for each segment and for each step, a type where the shuttle-shaped teeth are alternately arranged in the radial direction, or a type where the shuttle-shaped teeth are uniformly arranged in the radial direction;
said meshing ring with teeth and grooves is: a conic type or a cylindrical type; wherein, the conic tooth ring can be classified into: a conic tooth ring meshing at the inner and outer sides, a conic tooth ring meshing at the inner side, and a conic tooth ring meshing at the outer side; the cylindrical tooth ring can be classified into: a cylindrical tooth ring meshing at the inner side, a cylindrical tooth ring meshing at the inner and outer sides, and a cylindrical tooth ring meshing at the outer side.

The infinitely meshing variable-tooth gear with SSFT is characterized in that: said SSs are SSs specialized for the variable-tooth cylindrical gear, SSs specialized for the variable-tooth conic gear that are of "the type in which one side works independently", SSs specialized for the variable-tooth conic gear that are of "the type in which both sides work integrally", SSs specialized for the SS variable-tooth conic gear with of a small taper, SSs specialized for the variable-tooth gear of the rotary shaft roller gear CVTs, SSs specialized for the variable-tooth gear of returning in an oblique direction type, SSs specialized for the SS tension driving belt, or SSs of the returning via elastic force type, all of them include support SSs, fill SSs, the support SSs contact the wall of the wheel body holder to receive forces, and the fill SSs contact the support SSs to receive forces, being classified into an outside support type, an outside interaction crossing support type, a central support type, a central interaction crossing support type, an outside and central double support type, and an outside and central interaction crossing support type; the SSs can also be circular SSs; the working surfaces of the SSs can be of an arc shape, and the working surfaces can be further decreased so as to form "a local force-receiving zone in an arc shape", the arc-shaped profile of the working surfaces can be modified to a linear profile; a thick SS can be added to each end of the SS group, the stop legs of the fill SSs can be as long as those of the support SSs, and they can have one or two stop legs;
cross sections of the SSs can be cross sections of the same thickness or be of a segment shape, or be cross sections of different shapes; the shapes of the cross sections of the contact regions between the SSs and the teeth and grooves can be: a single slant, double slants, circular surfaces, the contact section angle θ thereof can coincide with the slanting angle of the wall surfaces of the teeth and grooves;
the constraining device for the SSs can be stop legs for SSs 25 and an outer constraining ring 23, wherein there can be one or two stop legs for a SS; the stop leg for a SS can be of a convex type or a concave type, alternatively, a constraining ring, string or rod can be inserted through a hole which is punched in the SS to carry out constraining;
there can be one or two stop legs for a SS; the stop leg for a SS can be of a convex type or a concave type, alternatively, a constraining ring, string or rod can be inserted through a hole which is punched in the SS to carry out constraining, or the constraining is implemented by the outer constraining ring 23,
the SSs of returning via elastic force type include: Mode A fill SSs of returning via elastic force type, Mode A support SSs of returning via elastic force type, Mode B support SSs of returning via elastic force type, Mode B fill SSs of returning via elastic force type; the meshing surfaces on both sides of the SSs can be made into an arc shape or a rectangular shape; or: the returning of the SSs of the SS wheel can take a free returning manner, the SSs of returning via elastic force type are divided into two halves, and a returning spring wire 109 is interposed therebetween, so as to implement returning via spring forces; or injecting gas flow or liquid flow through a gas flow hole 110 to realize the returning type via flow impact forces; or: an electromagnetic traction device is disposed on the conic disc tooth-and-groove wheel or at positions of equivalent effect, the returning type via electromagnetic forces can be realized in such a way that SSs on the SS wheel are electromagnetically attracted or repelled by electromagnetic traction forces; the stop legs for the SSs can be provided at the middle of the SSs, and the SSs can have one or two stop legs;
alternatively: the SSs of returning via spring force type can be provided with returning spring wires arranged at the end thereof, the returning trajectories of the SSs can be a type of returning in translation, or a type of returning in rotation; or: a flat spring, or a corrugated spring can be disposed on the bottom of the SSs;
alternatively: the SSs of a type of supporting on one side can also be employed, its corresponding variable-tooth gear body is a gear body 144 without a stop boss, which is superposed with a gear body having a stop boss to constrain and position the SSs;
alternatively: the SSs can be disposed as a needle shape or a block shape; and the cross section of the needle shape can be circular or rectangular.

The infinitely meshing variable-tooth gear with SSFT is characterized in that: the force direction when transmitting power is perpendicular to the free-sliding direction, or the angle therebetween is within the equivalent friction angle, the SS possesses self-locking property; the principle of "self-locking meshing property" is employed to design the SSs in meshing;
the arrangement principle of the meshing points of said SSs and the tooth-and-groove wheel employs "the progressive toothwise differential principle".

The present invention also discloses an infinitely meshing variable-tooth rack with SSFT, the infinitely meshing variable-tooth rack with SSFT comprises a variable-tooth rack body and a plurality of sliding-teeth built in the rack body; wherein, the SSs can move in the variable-tooth rack body due to returning forces, and the SSs protrude out of the opposing contour surfaces on the variable-tooth rack body so as to form tooth profiles of any shape.

Said variable-tooth rack body is a rigid variable-tooth rack body or a flexible variable-tooth rack body, said variable-tooth rack body is: a velocity-locking block with SSs disposed therein, or a velocity-locking block with sliding-needles disposed therein; and said flexible variable-tooth rack is: a SS tension driving belt;
wherein, a velocity-locking block 138 having SSs mounted therein can be clipped by two symmetrically arranged traction belts 137 whose meshing convex teeth and concave grooves oppose, whereby non-frictional meshing transmission is achieved by means of the meshing teeth and grooves of the two traction belts with regard to the returning process via elastic force of the sliding-sleets;
wherein, the SS tension driving belt is composed of two sets of split metal rings with convex and concave grooves clipping from the opposite directions a series of support metal sheets and fill metal sheets arranged at intervals, each set of the metal rings is configured by superposing several metal rings with convex and concave grooves, the recessed shoulders of the support metal sheets and the fill metal sheets are different and engaged with the convex and concave grooves of the split metal ring 82, a predetermined play is provided between the recessed shoulders of the metal sheets and the meshing grooves of the metal rings; the shapes of the metal SSs are classified into Mode A and Mode B, including metal SSs 80, 81, 85, 86; to prevent the distance between every two sets of the metal rings from changing, they are fixedly coupled to each other by a coupling body 83 for the metal belts;
alternatively: the SS tension driving belt comprises a metal ring 87 with a positioning groove in the middle, Mode C support metal sheets 88 and Mode C fill metal sheets 89, there are several metal rings 87 with a positioning groove in the middle superposed in the upper and lower portions of the metal sheets so as to constrain the SSs, a predetermined play is provided between the support SSs and the positioning grooves of the metal rings so as to allow for the metal sheets to slide transversely when the SS belt meshes with the tooth-and-groove wheel;
alternatively: the SS tension driving belt comprises metal rings 90 with convex-concave grooves on both sides, Mode D fill metal sheets 91, Mode D support metal sheets 92, the several metal rings 90 are superposed in the upper and lower portions of the metal sheets so as to constrain the SSs, a predetermined play is also provided between the SSs and the convex-concave grooves of the metal rings so as to allow for the metal sheets to slide transversely when the SS belt meshes with the tooth-and-groove wheel;
alternatively: the SS holders can be of a circular shape, a rectangular shape, or a sector shape;
said infinitely meshing variable-tooth rack with SSFT meshes with a tooth-and-groove boss, the working surface of the tooth-and-groove boss comprises teeth and grooves; and the tooth-and-groove boss is classified into a rigid tooth-and-groove boss, and a flexible tooth-and-groove boss;
wherein, the flexible tooth-and-groove boss is a traction belt containing meshing convex teeth and concave grooves, or a tooth-and-groove driving belt of a tooth meshing type, this driving belt is classified into a pressing belt, and a tension belt;
the tension belt includes: being composed of a belt base 65, an enforced layer 66, and meshing support blocks 64; the transmission via meshing of convex teeth and concave grooves is realized by arranging the meshing support blocks 64 at intervals, the meshing support blocks can be arranged at regular intervals or at irregular intervals; alternatively, a plate-and-pin chain of meshing type: meshing blocks 78 are provided on chain pins 76 or chain plates 77, meshing blocks can be provided on the chain pins 76 or chain plates 77, or: meshing blocks can be provided on both the chain pins 76 and the chain plates 77; or: the metal ring driving belt: being configured by superposing a plurality of metal rings with convex teeth and concave grooves on both sides, in a manner of one corresponding to another; alternatively, Mode B driving belt; the belt base is made of non-metal materials, its enforced layer be enforced with steel strings or nylon strings, etc., the two sides are wearable wall surfaces, and are made into a shape of meshing convex teeth and concave grooves, in addition, its transverse convex and concave tooth profiles can extend all the way through the whole belt base; alternatively: the prior art belt or chain is refitted, and the working side surface of the belt or chain is a convex tooth and concave groove capable of meshing with the SSs;
the pressing belt includes: a metal belt of the meshing type, a metal belt with meshing convex teeth and concave grooves configured by alternately combining metal rings and wide, narrow metal blocks; or: a metal belt configured by firstly composing a wide metal block group from wide metal blocks and a narrow metal block group from narrow metal blocks and then alternately combining the wide metal block group with the narrow metal block group; or: the narrow metal blocks can employ "a cross section of an arc shape", the regions of both sides of the wide metal blocks that participate in meshing can be provided with slant surfaces, whereby the continuously variable transmission performance is basically improved by means of the self-locking meshing property; alternatively: the wide, narrow metal blocks can be replaced with "concave metal blocks" and "convex metal blocks" of the flexible metal belt for the transmission with variable-tooth conic gear of a small taper.

Said SSs are SSs specialized for the variable-tooth cylindrical gear, SSs specialized for the variable-tooth conic gear that is of "the type in which one side works independently", SSs specialized for the variable-tooth conic gear that is of "the type in which both sides work integrally", SSs specialized for the SS variable-tooth conic gear with a small taper, SSs specialized for the variable-tooth gear of the rotary shaft roller gear CVTs, SSs specialized for the variable-tooth gear of returning in an oblique direction type, SSs specialized for the SS tension driving belt, or SSs of the returning via elastic force type, all of them include support SSs, fill SSs, the support SSs contact the wall of the wheel body holder to receive forces, and the fill SSs contact the support SSs to receive forces, being classified into an outside support type, an outside interaction crossing support type, a central support type, a central interaction crossing support type, an outside and central double support type, and an outside and central interaction crossing support type; the SSs can also be circular SSs; the working surfaces of the SSs can be of an arc shape, and the working surface can be further decreased so as to form "a local force-receiving zone in an arc shape", the arc-shaped profile of the working surface can be modified to a linear profile; a thick SS can be added to each end of the SS group, and the stop legs of the fill SSs can be as long as those of the support SSs, they can have one or two stop legs;
cross sections of the SSs can be cross sections of the same thickness or be of a segment shape, or be cross sections of different shapes; the cross section shapes of the contact regions of the SSs and the teeth and grooves can be: a single slant, double slants, circular surfaces, the contact section angle θ can coincide with the slanting angle of the wall surfaces of the teeth and grooves;
the constraining device for the SSs can be stop legs for SSs 25, and an outer constraining ring 23, wherein there can be one or two stop legs for a SS; the stop leg for a SS can be of a convex type or a concave type, alternatively, a constraining ring, string or rod can be inserted through a hole which is punched in the SS to carry out constraining;
there can be one or two stop legs for a SS; the stop leg for a SS can be of a convex type or a concave type, alternatively, a constraining ring, string or rod may be inserted through a hole which is punched in the SS to carry out constraining, or constraining is implemented by the outer constraining ring 23,
the SSs of returning via elastic force type include: Mode A fill SSs of returning via elastic force type, Mode A support SSs of returning via elastic force type, Mode B support SSs of returning via elastic force type, Mode B fill SSs of returning via elastic force type; the meshing surfaces on both sides of the SSs can be made into an arc shape or a rectangular shape; or: the returning of the SSs of the SS wheel can take a free returning manner, the SSs of returning via elastic force type are divided into two halves, and a returning spring wire 109 is interposed therebetween, so as to implement returning via spring forces; or injecting gas flow or liquid flow through a gas flow hole 110 to realize the returning type via flow impact forces; or: an electromagnetic traction device is disposed on the conic disc tooth-and-groove wheel or at positions of equivalent effect, the returning type via electromagnetic forces can be realized in such a way that SSs on the SS wheel are electromagnetically attracted or repelled by electromagnetic traction forces; the stop legs for the SSs can be provided at the middle of the SSs, and the SSs can have one or two stop legs;
alternatively: the SSs of returning via spring force type can have returning spring wires arranged at the end thereof, the returning trajectories of the SSs can be of a type of returning in translation, or a type of returning in rotation; or: a flat spring, or a corrugated spring can be disposed on the bottom of the SSs;
alternatively: the SSs of a type of supporting on one side can also be employed, its corresponding variable-tooth gear body is a gear body 144 without a stop boss, which is superposed with a gear body having a stop boss to constrain and position the SSs;
alternatively: the SSs can be disposed as a needle shape or a block shape; and the cross section of the needle shape can be circular or rectangular,
the arrangement principle of the meshing points of said SS variable-tooth rack and the tooth-and-groove boss employs "the progressive toothwise differential principle".

### Brief Description of the Accompanying Drawings

Fig. 1 is a structure diagram of a variable-tooth cylindrical gear CVT;
Fig. 2 is a structure diagram of the outer shape of the variable-tooth cylindrical gear;
Fig. 3 is a structure diagram of the variable-tooth cylindrical gear body;
Fig. 4 is a structure diagram of the SS for the variable-tooth cylindrical gear;
Fig. 5 is an inner structure diagram of the variable-tooth cylindrical gear;
Fig. 6 is a plan view showing the inner structure of the variable-tooth cylindrical gear;
Fig. 7 is a structure diagram of an outer constraining ring for the SS;
Fig. 8 is a structure diagram of SSs with different shapes;
Fig. 9 is a structure diagram of a tooth-and-groove wheel;
Fig. 10 is a schematic view of the distribution of the teeth and grooves of tooth-and-groove wheels (I);
Fig. 11 is a schematic view of the distribution of the teeth and grooves of tooth-and-groove wheels (II);
Fig. 12 is a schematic view of a transmission with a shuttle-shaped gear and disc;
Fig. 13 is a schematic view of a multiple-speed transmission that is normally in meshing state;
Fig. 14 is a schematic view of the transmission with multiple-phase variable-tooth gears in parallel;
Fig. 15 is a view for analyzing the progressive difference arrangement of multiple-phase variable-tooth gears in parallel;
Fig. 16 is a schematic view exemplifying the arrangement of multiple-phase variable-tooth gears;
Fig. 17 is a structure diagram of a variable-tooth conic gear and its components (I);
Fig. 18 is a structure diagram of a variable-tooth conic gear and its components (II);
Fig. 19 is a structure diagram of variable-tooth conic gear CVT;
Fig. 20 is a schematic view of a variable-tooth gear of obliquely returning type ;
Fig. 21 is a schematic view of a variable-tooth conic gear with oblique SSs ;
Fig. 22 is a schematic view exemplifying the arrangement of transmission via a variable-tooth gear;
Fig. 23 is the schematic view of returning, meshing and transmitting of the SSs;
Fig. 24 is the view used for analyzing the self-locking property of the SSs;
Fig. 25 is a structure diagram of a belt type CVT with a multiple-ring variable-tooth conic gear;
Fig. 26 is a structure diagram of components of a multiple-ring variable-tooth conic gear;
Fig. 27 is structure diagram of a belt specialized for Mode A CVTs;
Fig. 28 is a structure diagram of a multiple-ring variable-tooth conic gear CVT of combined gear body type;
Fig. 29 is a structure diagram of a single piece multiple-ring variable-tooth conic gear of the type of being inserted from outside;
Fig. 30 is a structure diagram of a metal belt of meshing type;
Fig. 31 is a structure diagram of a pin-plate chain of meshing type;
Fig. 32 is a structure diagram of a series of driving belts;
Fig. 33 is a structure diagram of a series of driving belts via SSs' tension;
Fig. 34 is a structure diagram of a driving belt via sliding-needles' tension;
Fig. 35 is a structure diagram of a belt CVT of returning via elastic nipping force type;
Fig. 36 is a structure diagram of a wheel CVT of returning via elastic nipping force type;
Fig. 37 is a view showing the shifting mechanism of a small taper variable-tooth conic gear series;
Fig. 38 is a structure diagram of a variable-tooth rotary shaft roller gear CVT;
Fig. 39 is a structure diagram of a variable-tooth CVT with a radius-varying metal block belt;
Fig. 40 is a structure diagram of a variable-tooth gear CVT with radius-varying tooth segments;
Fig. 41 is a structure diagram of a SS clutch of an axial coupling type;
Fig. 42 is a structure diagram of a SS clutch of a radial coupling type;
Fig. 43 is a structure diagram of a SS clutch of a conic surface coupling type;
Fig. 44 is a structure diagram of an infinitely meshing device with blocks and a belt;
Fig. 45 is a structure diagram of an overrunning clutch of a SS type;
Fig. 46 is plan view of various SSs;
Fig. 47 is a structure diagram of a CVT of an operation separated and effect combined type (I);
Fig. 48 is an exploded view of key components of an operation separated and effect combined type conic disc;
Fig. 49 is a structure diagram of a CVT of an operation separated and effect combined type (II);
Fig. 50 is a sectioned structure diagram of a conic disc;
Fig. 51 is an exploded view of an infinitely meshing device unit;
Fig. 52 is a schematic view of a synchronous metal belt meshing through inner teeth (I);
Fig. 53 is a schematic view of a synchronous metal belt meshing through inner teeth (II);
Fig. 54 is a perspective view of metal blocks;
Fig. 55 is a schematic view of a synchronous metal belt of a hole-meshing type;
Fig. 56 is a view of the principle of meshing transmission of a transmission;
Fig. 57 is a schematic view of other types of transmissions;
Fig. 58 is a view for illustrating the principle of eliminating a gap between metal blocks on the slack side of the pressure belt;
Fig. 59 is a diagram for analyzing the self-locking and wedging mechanism of SSs;
Fig. 60 is a diagram of the principle of a magnetorheological/electrorheological fluid transmission (I);
Fig. 61 is a diagram of the principle of a magnetorheological/electrorheological fluid transmission (II);
Fig. 62 is a diagram of the principle of a magnetorheological/electrorheological fluid transmission (III);
Fig. 63 is a diagram of the principle of an infinitely meshing transmission with a worm/worm rack;
Fig. 64 is a diagram for analyzing the principle of an infinitely meshing transmission with sliding-blocks;
Fig. 65 shows another solution of constraining the SSs;
Fig. 66 is a structure diagram of a CVT with a variable-tooth gear capable of radius varying;
Fig. 67 is a schematic view of a conic disc without a physic spindle in the inner side;
Fig. 68 is a view of the principle of an infinitely meshing transmission with a worm/worm rack;
Fig. 69 is a view for analyzing the principle of an infinitely meshing transmission with sliding-blocks;
Fig. 70 shows examples of a radial synchronization controller;
Fig. 71 exemplifies a radial synchronization controller (II);
Fig. 72 is a structure diagram of a conic disc with rectangle grooves;
Fig. 73 is a structure diagram of a transmission of the type containing a central guiding and restraining disc;
Fig. 74 is a structure diagram of a separating device via electromagnetic tractions;
Fig. 75 shows an electromagnetic traction device for seating SSs;
Fig. 76 shows a mechanic traction controller for seating SSs;
Fig. 77 is a structure diagram showing the structure of a separated transmission type with single-direction meshing teeth;
Fig. 78 shows a CVT with a meshing type steel ring;
Fig. 79 shows a CVT of a type in which steel needles and steel sheets mesh;
Fig. 80 shows an infinitely meshing transmission with fluid deformable at a fixed volume;
Fig. 81 is a structure diagram of a Mode A transmission which has been put in practice; and
Fig. 82 is a structure diagram of a Mode B transmission which has been put in practice.

Wherein: 1 an output shaft 2 a bearing 3 a variable-tooth cylindrical gear body 4 a fill SS 5 a support SS 6 a flat disc tooth-and-groove wheel 7 meshing teeth, grooves 8 an input shaft 9 a central recess 10 guiding splines/splines 11 SS restraining wall surface 12 a positioning and supporting stop boss 13 a lubricant hole 14 a lubricant gap 15 a positioning pin hole 16 a SS retracting seat restraining surface 17 a positioning couple pin 18 a shaft-assembling hole (including a spline groove) 19 a superposing surface of a wheel and a disc 20 an oblique support SS 21 an oblique fill SS 22 a frictional traction ring 23 an outer constraining ring 24 a constraining ring-guiding zone 25 a stop leg for SS 26 a stress-suppressing pad layer 27 a centrifuge-restraining surface for SS 28 a suction inlet of a centrifugal pump 29 an impeller groove of the centrifugal pump 30 a shuttle-shaped gear 31 a shuttle-shaped toothed disc 32 a concentric toothed disc with multiple cones 33 a transmission shaft 34 a conic gear 35 a reverse-shifting gear 36 a variable-tooth cylindrical gear 37 a tooth-and-groove wheel with conic teeth on the circumference 38 a cylindrical gear 39 a variable-tooth conic gear body 40 an assistant wheel body (I) 41 an assistant wheel body (II) 42 a conic disc tooth-and-groove wheel 43 a variable-tooth conic gear 44 a shifting lever 45 a sun gear 46 a planet gear 47 a rotary pair 48 a large tooth-and-groove wheel of the inner meshing type 49 a displacement pair 50 a planet bracket 51 a variable-tooth gear body of the type of returning in an oblique direction 52 an assistant flat disc wheel body of the type of returning in an oblique direction 53 an assistant inner conic disc wheel body of the type of returning in an oblique direction 54 a variable-tooth flat disc gear of the type of returning in an oblique direction 55 a variable-tooth inner conic disc gear of the type of returning in an oblique direction 56 a double sided conic disc tooth-and-groove wheel 57 a conic disc tooth-and-groove wheel with inner and outer meshing surfaces 58 a SS 59 a SS holder 60 a multiple-ring variable-tooth conic gear (conic disc) 61 Mode A driving belt 62 a multiple-ring variable-tooth conic gear body 63 a wheel basic body (I) 64 a meshing support block 65 a belt base 66 an enforced layer 67 a wheel basic body (II) 68 a layered wheel body 69 Mode B driving belt 70 a multiple-ring conic wheel body of one piece 71 a free SS holder 72 an installation hole for SS holders 73 a narrow metal block 74 a wide metal block 75 a metal ring 76 a chain pin 77 a chain plate 78 a meshing block 79 a strengthened steel wire 80 Mode A support metal sheet 81 Mode A fill metal sheet 82 a parted metal ring with convex and concave grooves 83 a coupling body for metal belt 84 a recessed shoulder 85 Mode B support metal sheets 86 Mode B fill metal sheets 87 a metal ring comprising positioning grooves in the middle 88 Mode C support metal sheets 89 Mode C fill metal sheets 90 a metal ring with convex-concave grooves on both sides 91 Mode D fill metal sheets 92 Mode D support metal sheets 93 a sliding-needle holder of a circular shape 94 a sliding-needle 95 a sliding-needle holder of a rectangle shape 96 a belt with nipping teeth and grooves 97 a support conic disc 98 a double-sided conic disc 99 a SS wheel body for translations 100 Mode A fill SS of returning via elastic force type 101 Mode A support SS of returning via elastic force type 102 Mode B support SS of returning via elastic force type 103 Mode B fill SS of returning via elastic force type 104 a parted wheel body with small taper 105 a conic toothed ring with inner and outer meshing surfaces 106 a cylindrical toothed ring with an inner meshing surface 107 a cylindrical toothed ring with inner and outer meshing surfaces 108 a cylindrical toothed ring with an outer meshing surface 109 a returning spring wire 110 a gas flow hole 111 a fixing bracket 112 a roller 113 a rotary shaft roller wheel 114 a revolution bracket 115 a transmission spline 116 a planet conic gear 117 a sun conic gear 118 a tooth block coupling string 119 a convex tooth block 120 a concave tooth block 121 a stretching string 122 a stretching device 123 a radial rail 124 a tooth segment 125 a step tooth segment 126 a gear with a constant mesh tooth-and-groove disc 127 a shifting push lever 128 a thrusting bearing 129 a mobile tooth-and-groove disc 130 a positioning and coupling pin 131 a SS wobble-disc 132 a bolt 133 a coupling sleeve with teeth and grooves on the inner loop 134 a SS grooved wheel 135 a SS conic disc (with multiple rings or a single ring) 136 a coupling sleeve with a tooth-and-groove conic disc 137 a traction belt 138 a velocity-locking block 139 a pressing device 140 a planet wheel outer loop 141 an idler wheel 142 a length-variable coupling body 143 a constraining ring 144 a wheel body without a stop boss 145 a driving shaft 146 a radial rail 147 a conic disc 148 an infinitely meshing device unit 149 a sliding spline 150 a casing (a framework) 151 a driving belt/chain with teeth on the inner side 152 an idler wheel 153 a bottom stop seat of a SS holder 154 a returning spring (a flat spring plus a corrugated spring) 155 a meshing unit carrier (or a beam for a SS holder) 156 a SS 157 a sliding-block 158 a metal block 159 a metal ring 160 a metal block of a fill type 161 a metal block of a meshing type 162 a synchronous metal belt of a hole meshing type 163 a stretching spring 164 an outer wall surface of a conic disc 165 an inner wall surface of a conic disc 166 a sliding groove 167 a cylindrical rolling translation pair 168 a cylindrical guiding groove 169 a driving conic disc 170 a metal belt (a pressure belt) 171 a driven conic disc 172 an urging wheel 173 a pinion 174 a driving wheel 175 a large gear 176 a clamping mechanism 177 bodies capable of infinitely meshing via magnetorheological/electrorheological fluids 178 a meshing body with a fixed tooth profile 179 a soft cavity for magnetorheological/electrorheological fluids 180 a driving belt/chain containing magnetorheological/electrorheological fluids on the inner side 181 a body capable of infinitely varying radius via magnetorheological/electrorheological fluids 182 a worm 183 a driving belt/chain in a worm rack toothed shape 184 a controller 185 a worm rack 186 a triangular-tooth driving belt/chain capable of meshing via sliding 187 a tapered tooth block capable of sliding 188 a guiding moving pair 189 a rail 190 a wearable adhesive layer 191 an internal gear ring 192 an external meshing gear 193 an external meshing tooth segment 194 a guiding arc plate for seating SSs 195 a flexible structure carrier of meshing units 196 a radial synchronization controller 197 a screw 198 a nut 199 a recessed conic disc 200 a radius-varying rotary disc 201 a spiral rail with variable radius 202 a linkage mechanism 203 a conic gear mechanism 204 a central guiding and restraining disc 205 an outer conic disc casing 206 an electromagnetic sucking disc 207 stop bars against returning and seating of SSs 208 a cam 209 a seating control disc 210 a meshing type steel ring with teeth on the inner side 211 steel needles 212 steel sheets 213 a deformable meshing unit at a fixed volume 214 a Mode A main wheel body (I) 215 Mode A support SSs 216 Mode A SSs 217 a Mode A main wheel body (II) 218 a Mode A assistant wheel body 219 Mode B SSs 220 a Mode B main wheel body 221 a nut fork 222 a speed adjustment guiding sleeve 223 a Mode B assistant wheel body

### Detailed Description of the Preferred Embodiments

In the present invention, improvements and innovations are made over the disadvantages of the prior art gearing and CVTs, and a new kind of CVT is provided to satisfy and adapt for the needs arising from the modernized industries, in particular from the automobile industry. It inherits and expands the functions of most prior art CVTs, and realizes a special "non-friction type gear meshing continuously variable shifting". The present invention is of a brand new concept of a mechanical CVT with a high power and a high efficiency (close to the gearing efficiency).

The technical solution of the invention is as follows:

Basic operating principle: the entire operating surface of the gear is constituted by superposing a large number of thin SSs (or sliding-needles), such that the free and infinitely sliding of the SSs can constitute a meshing tooth profile of any shape. This design idea is equivalent to discretizing the gear into many micro sheets, and forming any necessary tooth profiles by their organized combinations. In this manner, there is formed a variable-tooth infinitely meshing gear with SSs.

Because the SSs differ in their sliding direction and the force acted thereupon, they can freely and easily deform and adapt timely to the requirement from the current meshing tooth profile and engage therewith, so as to realize infinitely meshing. At the same time, the direction of the force acted upon the SS when transmitting power is perpendicular to the free-sliding direction, or the angle therebetween is within the equivalent friction angle (to be described later), therefore the SS possesses the self-locking property. Accordingly, the tooth profile remains unchanged when the SSs are loaded, i.e., the regular meshing form maintains itself. In this way, the continuously variable drive through a variable-tooth non-frictional deforming gear meshing is realized, where power is transmitted via the SSs meshing the corresponding tooth-and-groove disc. The gist of the variable teeth lies in the fact that the SSs constituting the tooth profile may automatically change, at any time, their radial dimensions in response to variations of the shape of the groove surface in the meshing zone during the rotation of the gear and the grooved disc. Coincidence in the tooth profile is maintained throughout. Therefore, the manufacture accuracy on the tooth profiles of the SSs and the grooved disc could be very low, thus obviating the need of tooth grinding and being capable of running-in. In addition, it is more suitable for high-speed applications.

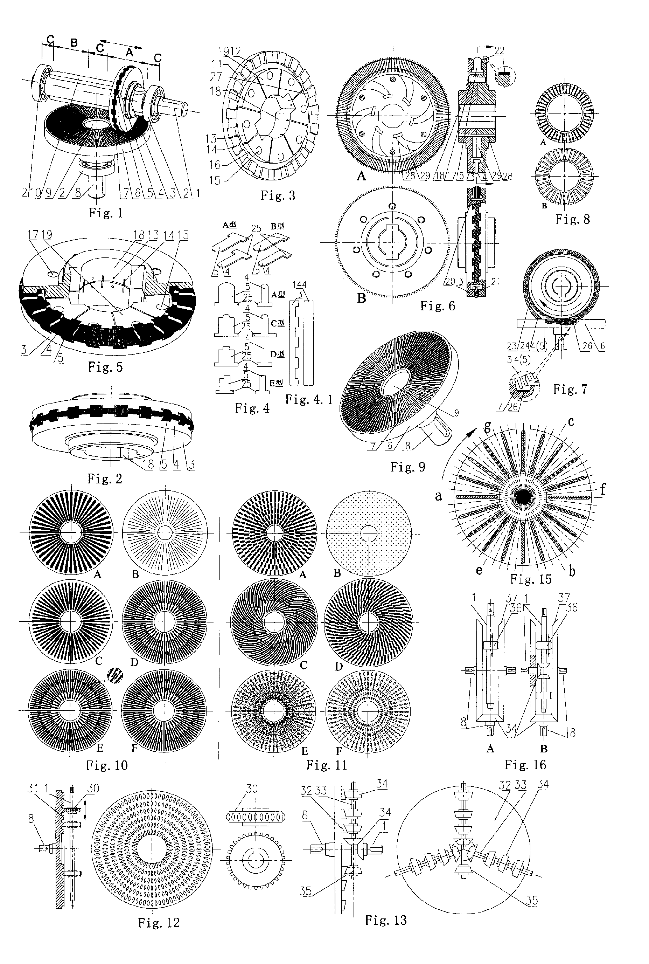

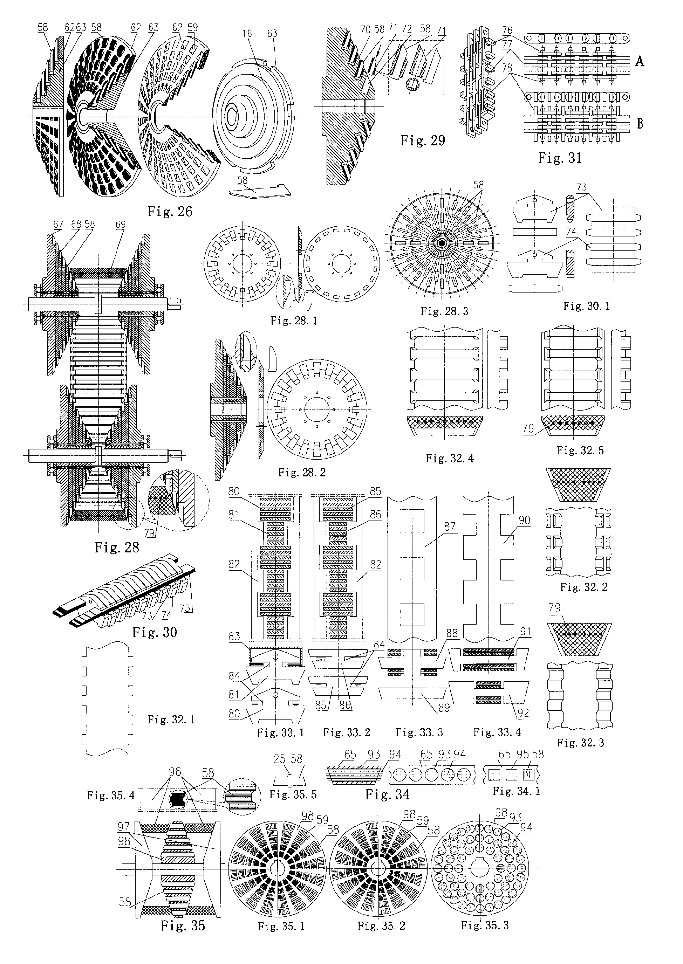

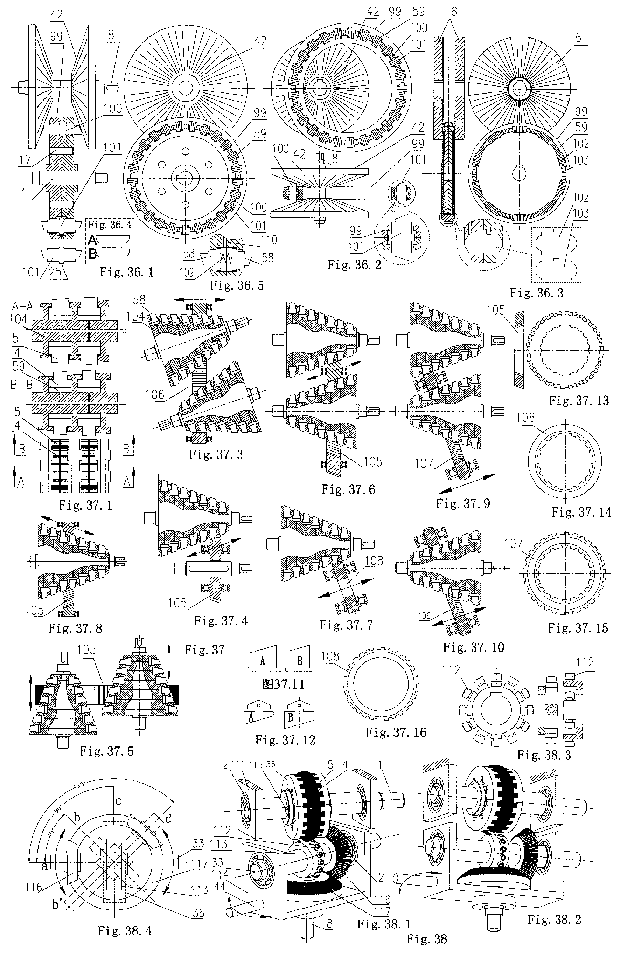

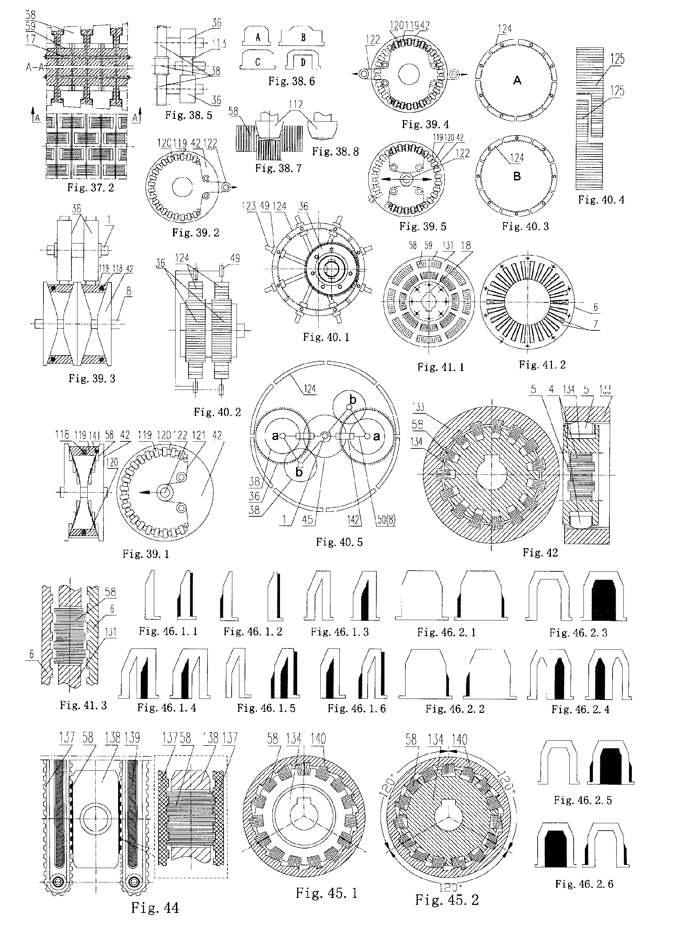

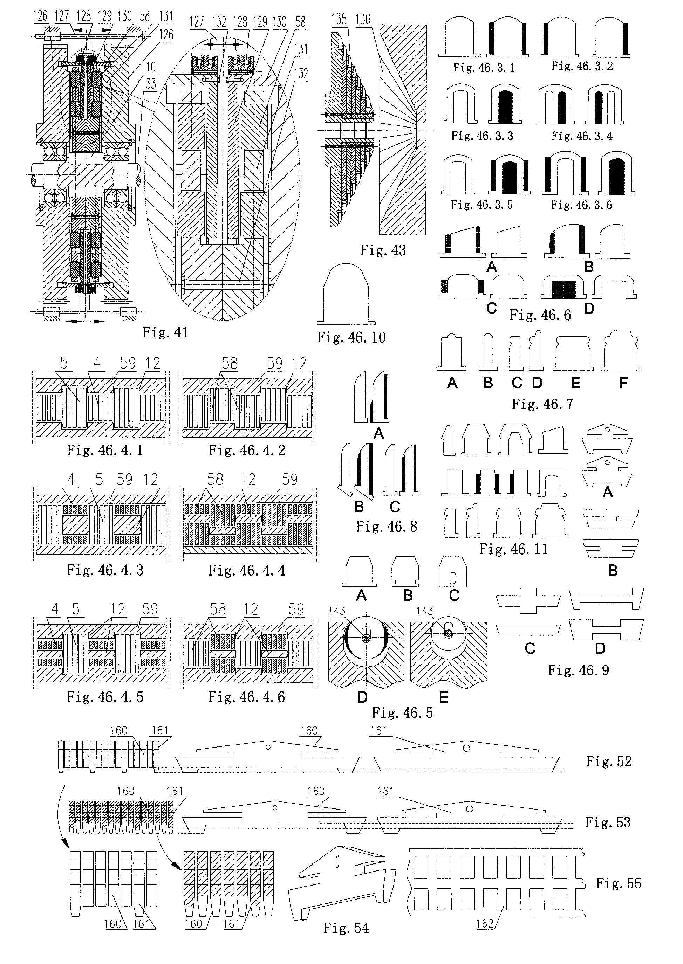

Nomenclature: (be noted that all relevant terms are defined herein for later references)
* a support SS: generally means the SS that contacts the wall of the SS holder to transmit power.
* a fill SS: generally means the SS that contacts the support SS to transmit power. (Refer to Fig. 46 and the relevant illustrations.)
* an effect-equivalent SS (i.e., the same type SS): the SS with the same shape and the same assembly direction, that is, the SSs of the same shape being arranged in the same direction. The SSs with the same shape but assembled in the opposite direction have different functions, that is, their functions are not equivalent. For example, the SSs as shown in Figs. 46.2.2, 46.3.2 are different types of SSs, though they are of the same shape in pairs. Their corresponding SS group is referred to as "a support SS group" and "a fill SS group".
* a SS group: namely the basic unit set of the SSs (the basic unit set of the sliding needles may be called a sliding-needle beam, see Fig. 34 and the following descriptions) is the grouped set of effect-equivalent SSs, that is, the set constituted by superposing a plurality of SSs with the same shape in the same direction. The SS group may be classified into the support SS group and the fill SS group.
* a ring of SS groups: the SS set assembly constituted by combining several SS groups to perform an operation cycle independently (for example, the set of all the SSs shown in Fig. 2 are referred to as one ring of SS groups). The rings of SS groups include the spaced ring of SS groups, wherein there is a spacing between the SS groups (see Fig. 26 and Fig. 45; wherein Fig. 26 shows a spaced type with multiple rings, and Fig. 45 shows a spaced type with a single ring), and generally the SS groups in the spaced ring of SS groups are of the same type; and the continuous ring of SS groups, wherein the SS groups contact one another and have no spacing therebetween, therefore being in the form of a ring with the SS groups being densely arranged (as shown in Fig. 2). In general, the continuous ring of SS groups is made up of alternately arranged SS groups of different types, involving "a support SS group" and "a fill SS group".
* a SS holder: the grooved holder like chamber in the variable-tooth gear body used to place, restrain and constrain the SS group. The restraining and constraining holders corresponding to "a support SS group" and "a fill SS group" are "a support SS holder" and "a fill SS holder", respectively.
* a ring of SS holders: it is made up of a plurality of SS holders. The ring of SS groups is arranged in the ring of SS holders. (The variable-tooth gear shown in Fig. 2 includes one ring of SS holders). The ring of SS holders involves continuous type (generally formed by alternately arranging support SS holders and fill SS holders) and spaced type (generally formed by SS holders of the same width arranged at intervals).
* an operation cycle: one rotation of the variable-tooth gear is an operation cycle.
* a SS assembly: the assembly of all the SSs on a variable-tooth gear. According to the number of rings of SS groups on the gear body, it is classified into a SS assembly of a single ring, in which the SS assembly is constituted by one ring of SS groups (including the spaced type with a single ring and the densely fully arranged type with a single ring), and a SS assembly of multiple rings, in which the SS assembly is constituted by multiple rings of SS groups (including the spaced type with multiple rings and the densely fully arranged type with multiple rings).
* a variable-tooth gear with SSFT: a gear which is made up of combinations of SSs (thin sheets) or sliding-needles (small rectangular post or thin cylinder) and which may infinitely vary the meshing tooth profiles via free sliding. It consists of gear body, at least one ring of SS groups, wherein the ring of SS groups is formed by several SS groups, and the SS group is formed by superposing a plurality of effect-equivalent SSs; SSs can return under a returning driving force such as gravity, attraction force, repellent force, elastic force, spring force, electromagnetic force, centrifugal force, inertial force, hydraulic pressure, gas pressure, flow impact force from gas, liquid, etc.; at least one ring of SS holders constituted by SS holders is provided in the gear body, and the SS groups are placed in the corresponding SS holders to constitute a complete ring of SS groups which function independently, and the SSs can freely move to a certain extent in the respective SS holders, therefore the tooth profile of any shape can be obtained by their free moving. Assistant members include coupling position pins, etc. A variable-tooth gear generally consists of at least a gear body and a ring of SS groups, wherein there is at least one ring of SS holders in one gear body for holding a ring of SS groups, therefore called "a single-ring type variable-tooth gear" (for example, the variable-tooth gear shown in Fig. 2 includes a ring of SS groups); in the same way, as to a variable-tooth gear in which there are multiple rings of SS holders in a gear body for holding a plurality of rings of SS groups, it will be referred to as "a multiple-ring type variable-tooth gear" (see Fig. 26).

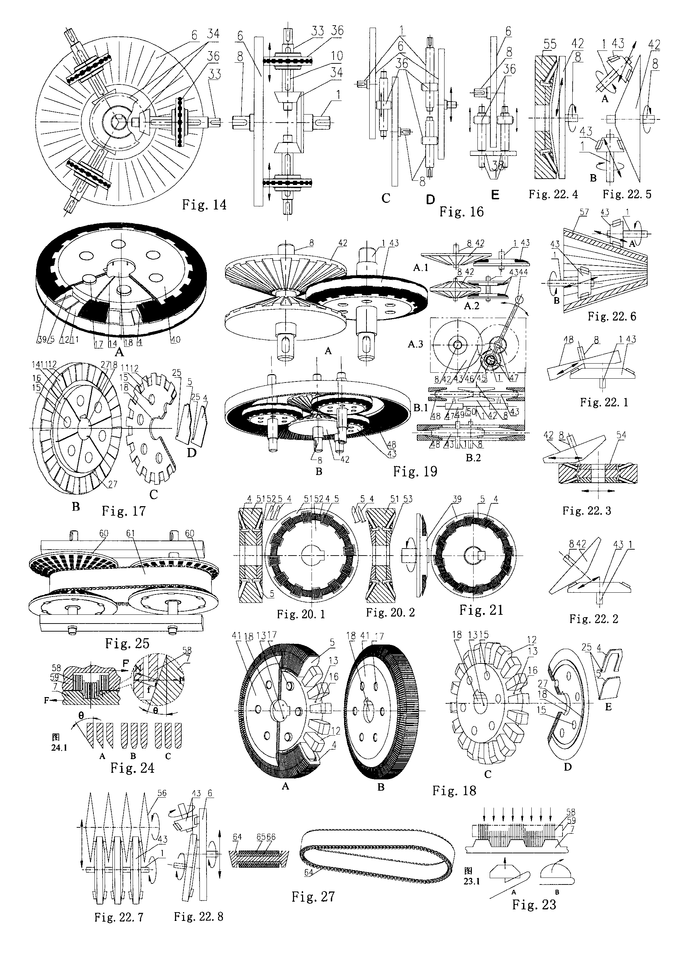

In general, variable-tooth gears may be classified into: variable-tooth cylindrical gears (see Fig. 2), variable-tooth conic gears (see Fig. 17), flat disc type variable-tooth gears (see Fig. 20.1), and inner conic disc type variable-tooth gears (see Fig. 20.2). Each type may be further subclassified into a single-ring type variable-tooth gear and a multiple-ring type variable-tooth gear.

It can be classified into two main categories, i.e., a category of "returning in the same direction" and a category of "returning in an oblique direction", according to the trajectories of the SSs. The category of returning in the same direction means that the returning trajectories of the SSs are in the same direction as the returning driving force (for example, centrifugal force); The category of returning in an oblique direction means that the returning trajectories of the SSs deviate from the direction of returning driving force (for example, centrifugal force) with an angle formed therebetween (shown in Figs. 20 and 29 is a category of returning in an oblique direction).

It can also be classified into a spur SS type and a bevel SS type, according to the arrangement orientation of the SSs (the difference therebetween somewhat similar to that between a spur gear and a bevel gear).

It can also be classified into a spaced type and a densely fully arranged type (or continuous type), according to the arrangement manner of the SS groups in the ring of SS groups.

It can also be classified into a single-ring type and a multiple-ring type, according to the number of rings of SS groups in the gear body, these two types may be further subclassified into a single-ring spaced type, a single-ring densely fully arranged type and a multiple-ring spaced type, a multiple-ring densely fully arranged type, respectively.

It can also be classified into an outside support type, an outside interaction crossing support type, a central support type, a central interaction crossing support type, an outside and central support type, and an outside and central interaction crossing support type (see Fig. 46), according to the embedding and insertion manner of the SSs into the gear body.

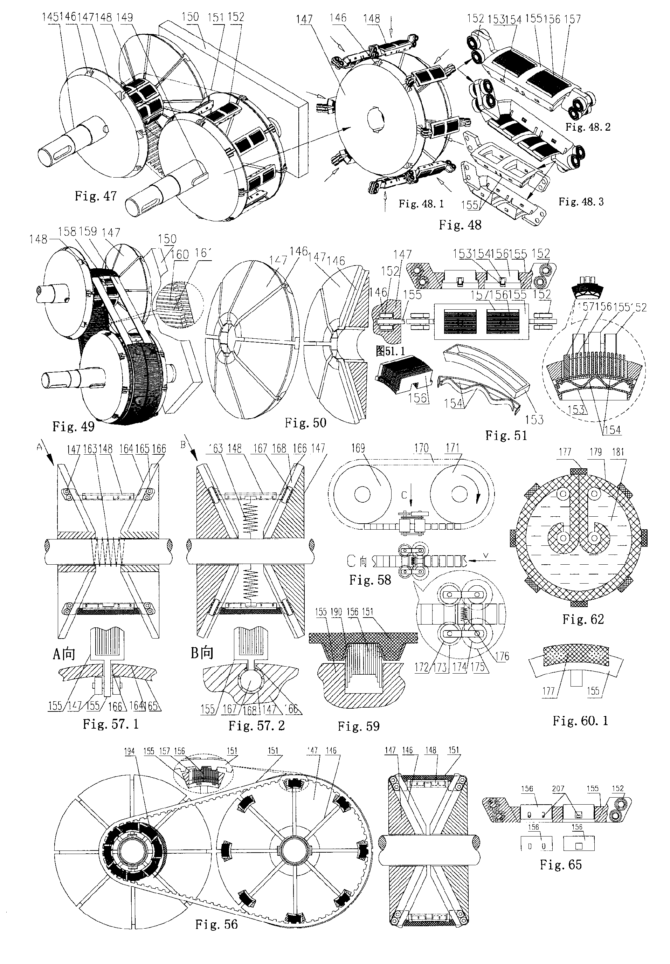

And according to the form and the manner of the returning driving force acting on the SSs, it can be classified into returning types via gravity, attraction force, repellent force, elastic force, spring force, electromagnetic force, magnetic force (including attraction force and repellent force), centrifugal force, inertial force, hydraulic pressure, gas pressure, flow impact force from gas, liquid, etc. The eight arrows as shown in Fig. 23 indicate returning driving forces of gravity, attraction force, repellent force, elastic force, spring force, electromagnetic force, centrifugal force, inertial force, hydraulic pressure, gas pressure, flow impact force from gas, liquid, etc., under which the SSs come into close contact with grooves of meshing teeth so as to implement infinitely meshing. Theoretically speaking, spring force falls into the category of elastic force. However, in practice, the mechanisms of spring force and elastic force are considerably different from each other. The returning via spring force involves urging the SSs to return by means of springs, which is of a free returning type, as the automatic elastic returning SSs shown in Fig. 23.1; while the returning via elastic force generally depends on the elastic forces from external bodies to urge, so as to perform returning. For example, the returning manner by clamping the SSs from opposite directions via convex-concavely engaging teeth and grooves of two tooth-and-groove wheels is a returning type via elastic force, and is also a passive returning type (as shown in Figs. 35 and 36, the returning of the SSs is carried out by convex-concavely engaging the grooved discs, the underlying principle being similar to that of the prior art SS formed chains. Therefore, it can be classified into a SS free returning type and a SS passive returning type, according to the returning characteristic of the SSs.
* returning: means the moving process of the SSs, during its operation, to return to the position where meshing occurs, or its motion trend to do so, under the effect of the returning driving force. It is classified into a free returning type and a passive returning type, according to the returning driving force. In general, the returning under elastic force is a passive returning; the returning under gravity, attraction force, repellent force, spring force, electromagnetic force, centrifugal force, inertial force, flow impact force from gas, liquid, etc. is a free returning type. For example, cases where the SSs of a variable-tooth cylindrical gear move outward in the radial direction of the gear body, or its motion trend to do so, under the free returning driving force (a centrifugal force), and where a gas pump is employed to lubricate as shown in Fig. 6-A, resulting in returning under both a centrifugal force and a gas impact force, are both free returning; in contrast, the case where returning under the elastic nipping force arising from convex-concavely engaging teeth and grooves of two tooth-and-groove discs is a passive returning, the underlying principle being similar to that of prior art "SS formed chains". That is, the convex teeth and the concave grooves clamp the SSs from the opposite directions to make them return under elastic force, and therefore carry out infinitely meshing transmission.
* constrain: the constraining member provided so as to prevent the SSs from being thrown out of the variable-tooth gear body due to the free returning driving force, such as, stop leg for SSs 25 and outer constraining ring 23 (the former belongs to a constraining-from-within type, and the latter belongs to a constraining-from-outside type).
* tooth-and-groove wheel: the wheel disc which can mesh with the variable-tooth gear, its working disc surface consists of teeth and grooves, and the convex portions are called tooth, the concave portions are called grooves. The tooth-and-groove wheel and the variable-tooth gear cooperating therewith are the two key components of this type of CVT. The tooth-and-groove wheel may be classified into a flat disc type and a conic disc type according to the shape of the working disc surface.
* a variable-tooth rack with SSFT: characterized in that comprising a rack body, and at least one pack of SS groups, wherein the pack of SS groups is formed by one or more SS groups, and the SS group is formed by superposing a plurality of effect-equivalent SSs; SSs can return under a returning driving force, such as, gravity, attraction force, repellent force, elastic force, spring force, electromagnetic force, centrifugal force, inertial force, hydraulic pressure, gas pressure, flow impact force from gas, liquid, etc.; at least one pack of SS holders constituted by a set of SS holders is provided in the rack body, and the SS groups are placed in the corresponding SS holders to constitute a complete pack of SS groups which function independently, and the SSs can freely move to a certain extent in the respective SS holders, therefore the tooth profile of any shape can be obtained by the free moving of SSs. It involves a rigid variable-tooth rack (for example, a velocity-locking block containing SSs, see Fig. 44) and a flexible variable-tooth rack (for example, a SS type tension conveyance belt, see Figs. 33 and 34).
* tooth-and-groove bench: the bench which can mesh with the variable-tooth rack, its working bench surface consists of teeth and grooves, and the convex portions are called teeth, the concave portions are called grooves. The tooth-and-groove bench may be classified into a flat disc type and a conic disc type according to the shape of the working bench surfaces. It may also be classified into a rigid tooth-and-groove bench and a flexible one (for example, a traction belt with teeth and grooves, see Fig. 44).
* self-locking meshing: the "self-locking meshing property" herein particularly means the meshing characteristic that the contact angle θ between the SS and the wall of the meshing groove is smaller than the equivalent friction angle. It is noted that, in case of a rotary shaft roller variable-tooth gear CVT, the contact angle refers to the angleθbetween the SS and the generatrix of the revolution surface of the meshing roller. (Detailed analyses are referred to Fig. 24 and the relevant explanations.) When the direction of the force acted upon the SS when transmitting power is perpendicular to the free-sliding direction (i.e., the contact angle between the SS and the wall of the meshing groove θ=0), or the angle θ therebetween is within the equivalent friction angle, the SS mechanism possesses the self-locking property. In this case, even if there were no force acted upon the SS, the SS would not skid during the process of transmitting power. This desirable property, combined with the synthetic effects between the SS and the wall of the SS holder, makes the performance of transmission via SS meshing very stable. In fact, with the aid of friction force and the returning driving force for the SS, together with the synthetic effects that the force acting upon the SS is oblique (for example, the force direction of the SS specialized for the bevel variable-tooth gear is different from the sliding direction, to the effect that the self-locking property of the SS is further improved and the reliability of meshing is increased), θ may be increased to surpass the equivalent friction angle, with the precondition that the SS maintains its self-locking. This allows for increasing the thickness of the SS, so as to increase the load capacity, extend its service life and lower the cost. The meshing reliability at the time thatθ equals to zero is optimal. However, if the SS is relatively thick, the property of infinitely meshing is not quite well. Actually, when the thickness of the SS is not neglected, the meshing is somehow a staged meshing. Therefore, in order to realize the actual infinitely meshing, θ may be slightly large. In this case, a reliable meshing infinitely transmission without sliding can still be realized via the self-locking property of the oblique surface. Thus, the effective use of this "self-locking property" can optimize the property of continuously variable drive, and realize infinitely transmission while suitably increasing the thickness of SSs.
* principle of progressive differential (the principle of progressive toothwise differential, also called "progressive differential effect"): its purpose is to make the meshing states of the SSs complement with each other to the most sufficient extent, thus to achieve the most uniform meshing, uniform force distribution, and uniform wearing. In this way, the largest operation potential of the SSs and the meshing members in the whole system, the largest meshing load capacity and the power capacity can be exploited. The stability and reliability of the transmission can be increased. The arrangement of all the meshing points of the SS type gear and the tooth-and-groove disc should conform to "the progressive differential principle" in so far as possible (see Fig. 15 and relevant illustrations).
* continuously variable radius: i.e., continuously varying radius, for example, as shown in Fig. 47, the drive belt superposed on the surface of the conic disc and the arbitrary axial displacement of the conic disc can be utilized to change the spacing, so as to allow the drive belt to work at any continuous radius, which implements continuously variable radius.
* infinitely meshing: i.e., arbitrary meshing, the meshing body SSs in the infinitely meshing device as shown in Fig. 47 may mesh with the convex and concave meshing teeth located on the inner side of the driving belt to implement transmission via infinitely meshing.
* operation separated and effect combined: that is, the operations are separated and the effects are combined. The CVT of the operation separated and effect combined type as shown in Fig. 47 separates the operation of continuously variable radius from the operation of infinitely meshing, but the effects are combined, to the effect that a desirable continuously variable transmission of meshing type is realized. Furthermore, this transmission has features of high accuracy, uniformity, stability and high efficiency.

The present invention has the following features and advantages:

The transmission realizes, in a real sense, the concept of "continuously variable transmission via gear meshing". It has such advantages as simple structure, low cost, and high reliability. The whole continuously variable transmission is a one-stage transmission. It is readily to carry out forward and reverse output with transmission chains equal and short, allowing for a high efficiency. The variable-tooth gear of SS type is a gear that meshes in an infinitely deforming manner. Its requirements on the accuracy of meshing teeth and grooves are very low, and it imposes no requirements on the machining accuracy of tooth pitch and tooth profiles. Therefore highly efficient, inexpensive and massive production, such as casting, can be employed, resulting in a low cost. In addition, the accuracy of machining and assembling will not significantly affect the transmission performance, and the performance will be improved even further after running-in. The SSs have the function of self-compensating for wearing. It also has long life endurance, and works quietly. It is well adapted for high speed applications.

The cost of the proposed CVT is less than 1/5 of that of the prior art metal belt CVTs for vehicles, while presenting a much better overall performance than the prior art CVTs. The proposed CVT has only two key components, resulting in a simple structure and a compact size. The cost of the whole gear box is even lower than that of the manual spur gear box without a synchronizer, the cost of which is thought to be the lowest heretofore. In general applications, it can completely replace gear shifting in terms of transmission performances. Its special CVT features make it a trend to substitute for the currently most widely used gear shifts. As compared with prior art CVTs, its features are even more significant. Due to its excellent overall features, it can replace and broaden all CVTs employed in applications of high, medium, small and minute power.

The key point that determines the load capacity of this kind of CVT is the meshing zones of the SSs and the grooved disc. This is also a weak point of the whole transmission link. Volumes of the other components should be made as small as the principle of equal power matching allows. The design is in accordance with the principle of equal load of power flow, but the load capacity thus generated is comparable to the load that can be realized by gearing (tooth profiles are fixed in gearing, thus transmission is performed via line contact in rotary meshing). The meshing area in the case of a variable-tooth gear of a SS type is larger than in the case of a gear. All SSs form an integral closed elastic ring, which is equivalent to bundling all the SSs in a closed force-receiving object. This phenomenon in combination with the interdependence with the rigid tooth-and-groove wheel achieves the effect of "rigidity-flexibility combination, variable tooth locking", which eliminates, to the largest extent, the occurrence of cantilever beam being acted upon by forces (this situation is similar to the case where elastic planar thin steel sheets are padded in rigid steel members.), therefore, theoretically, the resulting load capacity is equal to the load that can be endured by an integral steel ring in its circumferential direction, thus generating a very strong load capacity. In the case of a variable-tooth gear with SSFT, the tooth profiles may, at any time, vary according to meshing areas in a manner of "forming groove upon tooth contacting". The number of meshing points between the teeth/grooves and all the working SSs are enlarged to the largest extent. Particularly in the zone where the pressure angle is minimal and therefore surface contact occurs, the contact stresses are low. In addition, the feature of performing transmission via meshing at the presence of a centrifugal force as the returning force imparts the proposed variable-tooth gear with SSFT much more reliable in high speed applications, therefore much more suitable for requirements from high speed and large power applications.

### Series of variable-tooth cylindrical gear CVTs

Fig. 1 is the structure diagram of a variable-tooth cylindrical gear CVT.

Fig. 2 is the structure diagram of the outer shape of a variable-tooth cylindrical gear.

Fig. 3 is the structure diagram of the variable-tooth cylindrical gear body.

Fig. 4 is the structure diagram of the SS for the variable-tooth cylindrical gear.

Fig. 5 is the diagram showing the inner structure of the variable-tooth cylindrical gear.

Fig. 6 is the plan view showing the inner structure of the variable-tooth cylindrical gear.

As shown in these figures, an input shaft is coupled to a tooth-and-groove wheel. The variable-tooth gear is coupled to an output shaft via guiding splines or splines. The variable-tooth gear can freely move in the axial direction while transmitting torques, therefore infinitely vary the meshing radius with the tooth-and-groove wheel to perform continuously variable transmission (A, B and C in Fig. 1 indicate the forward zone, the reverse zone and the neutral zone, respectively).

The variable-tooth cylindrical gear is composed by a gear body and a ring of SS groups. The ring of SS groups is constituted by several SS groups, and SS groups are formed by superposing SSs of the same type in the same direction. SSs can freely return under the returning driving force of an inertial centrifugal force (gravity, attraction force, repellent force, elastic force, spring force, magnetic force, electromagnetic force, inertial force, flow impact force from gas, liquid). SSs are generally classified into two categories, that is, support SSs and fill SSs. The gear body is generally configured by superposing two halves, each half consisting of restraining wall surfaces for support SSs and fill SSs, positioning and supporting stop bosses, centrifuge-restraining surface for SS, SS retracting seat restraining surface , superposing surface of a wheel and a disc, and positioning pin hole, etc. The two halves constitute a complete gear body when superposed on each other. The SS restraining wall surfaces, the positioning and supporting stop bosses, centrifuge-restraining surface for SS, SS retracting seat restraining surface and the like, are superposed face to face so as to form a ring of SS holders. The positioning pins are inserted into positioning pin holes to assure that respective SS holders do not displace. The two halves can be further fastened via bolts. The support SS groups and the fill SS groups are alternately densely located in the corresponding SS holders. The SSs can freely move to a certain extent in the respective SS holders, therefore the tooth profile of any shape can be obtained by their free moving.

The tooth-and-groove wheel is the wheel disc that meshes with the variable-tooth gear. The working disc surface consists of teeth and grooves, and the convex portions are called teeth, the concave portions are called grooves. The tooth-and-groove wheel and the variable-tooth gear cooperating therewith are the two key components of this type of CVT. (Refer to Figs. 10 and 11 for more details about general types of the tooth and groove patterns of the tooth-and-groove wheel disc surface.)

During operation, SSs move centrifugally (or have the tendency to move centrifugally), under the driving effect of the inertial centrifugal force, toward the outer radial circumference. At the presence of stop legs for SSs or constraining rings, all SSs freely return to positions at the same radius and remain there. The SSs that contact the tooth-and-groove wheel disc surface undergo conforming deformation in response to the urging from the convex and concave pattern, and thus forming meshing tooth surfaces that match the convex and concave pattern. As the rotation of the tooth-and-groove wheel rotates the variable-tooth gear, new SSs contact the disc surface of the tooth-and-groove wheel, move in the radial direction and form grooves upon contacting teeth, therefore become meshed therewith to implement continuous transmitting power output.

In general, the design radial dimension of free centrifugal returning at the state of SSs separating from the tooth-and-groove wheel is larger than that in the case of SSs meshing with the tooth-and-groove wheel, therefore the SSs can be automatically compensated after they are worn shorter, namely, the SSs have a feature of "self compensation for wearing". Even when the design of the radial dimension of free centrifugal returning at the state of SSs separating from the tooth-and-groove wheel is equal to or smaller than that in the case of SSs meshing with the tooth-and-groove wheel, wearing to a certain extent will not affect the normal operation, therefore the gear enjoys a long endurance.

When the SS type variable-tooth gear acts as a driving gear, the SSs are in a pressed loading state before they mesh with the tooth-and-groove wheel, thus this is unfavorable for their sliding and deforming. Due to this reason, the variable-tooth gear preferably acts as a driven gear. The variable-tooth gear of returning under centrifugal force should be first started at small loads. When the rotary speed reaches the lower limit of the centrifugal rotary speed (120 to 200 rpm), it can work at an increased load. The idle speed of the engine is larger than the rotary speed required by the SSs to move centrifugally, so the variable-tooth gear can work properly under all working circumstances. If assistant returning devices (for example, to assist returning before the start via gravity, elastic force, electromagnetic force, flow impact force, etc.) are added, then it can be started at an increased load. For example, an electromagnet or a permanent magnet can be provided on the tooth-and-groove wheel disc or at a place corresponding thereto to attract the SSs to return, so it can be started at an increased load regardless of the gravity. Alternatively, a permanent magnet or an electromagnet can be provided inside the variable-tooth gear body, thus the SSs are all permanently magnetized or electrically magnetized so as to move outwards to implement returning via a magnetic force. Alternatively, returning can be performed via the magnetic induction interactions between the magnetic field and the inducing current induced by the moving of SSs in the magnetic field (or alternate electromagnet field).

A central recess 9 can be provided in the center of the tooth-and-groove wheel, thus, the variable-tooth gear can smoothly move across, when it moves in the axial direction along the output shaft, the central region of the tooth-and-groove wheel to implement a reverse transmission. The central region is a neutral zone. The distribution of the shifting zones is schematically indicated in Fig.1.

In order to prevent the fill SSs when pressed from pushing their way into the support SS group holders such that the support SSs and the fill SSs are confused in terms of their positions, a thick SS can be additionally provided at each end of the individual fill SS groups. At the same time the thick SSs serve to reinforce and enlarge the load capacity (for the same reason, two SSs at the outer sides of each of the SS groups as shown in Fig. 46.4.2 may be thick SSs). In case that the fill SSs push their way into the support SS group holders, they may be thrown out of the gear body. To eliminate this risk, the stop legs of the fill SSs may be designed to have the same length as the support SSs (as the Mode C SSs shown in Fig. 4). In order to simplify the structure, the SSs may also employ a design pattern of one-sided stop legs (as the Mode B SSs shown in Fig. 4).

To eliminate the phenomena that may occur between the SSs and the tooth-and-groove wheel, the curved contour of meshing surface between the SSs and the tooth-and-groove wheel may be modified into a straight contour (as the Mode D SSs shown in Fig. 4, and see Fig. 46.11 for other modes).

In order to lower requirements on the machining and fitting accuracy of the two halves of the variable-tooth gears, SSs of one-sided support type may also be employed (see the E Mode SSs shown in Fig.4), their corresponding variable-tooth gear body is a wheel body without a stop boss 144, which is superposed with the gear body 3 having a stop boss to serve the purpose of restraining and positioning the SSs. (see Fig. 4.1).

The design principle of the spacing between the teeth and spacing between the SS groups is such that the former is not a multiple of the latter and vice versa. As a result, the SSs may operate in accordance with the "progressive differencing principle" when meshing with the grooves, and therefore the transmission stability is improved. (This principle is also applicable to the following variable-tooth conic gear. The SSs at both sides of the same radius may also be positioned in a staggered manner. See Fig. 15 for the "progressive differencing principle").

A lubricant hole (or a lubricant slit) can be provided on the gear body in order to improve lubrication. The effect of "centrifugally pumping oil" in the lubricant passageway during rotating is utilized to lubricate the SSs and to lower their temperatures, such that the SSs are lubricated by an oil film. Inside the gear body can be provided a centrifugal pump (as shown in Fig. 6-A). At the state of super high rotary speed, the manner of "pumping oil" may become "pumping gas". The pumped gas flow is introduced into the region between the SSs and lubricates this region via the floating gas. Thus lubrication via air cushion effect is realized. Heat diffusion is as well conducted while lubricating. At the same time, the impact force from the gas flow additionally serves to assist returning. When the external gas source is employed to lubricate via floating gas, the gas flow can be introduced to return the SSs even when the variable-tooth gear is at rest, to the effect of eliminating the influence from gravity. In such way the requirement of on-load starting can be satisfied. The centrifugal pump structure can also be used to lubricate via pumping oil, but the displacement should be consequently decreased to decrease the power loss. In addition, improved lubrication may be utilized, and the traveling distance of the SSs may be shortened, so as to make it more suitable for reliable operations in high speed applications.

In order for the system to be started reliably without any other aids, a friction traction ring 22 may be provided at the outer edge of the variable-tooth gear. Frictional transmission by means of a slight pressing force may occur between two wheel surfaces so as to ensure that the traction force occurs at the time of starting. In order to lower wear and obviate the device for pressing to simplify the mechanism, the frictional traction ring may be made by elastic materials such as rubber etc (for example, a traction ring made of rubber is embedded into the surface of the variable-tooth gear so as to achieve elastic pressing). In addition, this device is favorable for reducing noise (as shown in Fig. 6), and can be used to assist in starting (for example, first the frictional traction is utilized, and then the SS wheel is adjusted into the tooth and groove zones to participate in meshing and transmission, in this way, the impact force of the SSs can be eliminated and the noise is reduced). Furthermore, an overrunning clutch can be employed to actuate starting. The overrunning rotary speed is the rotary speed of the lowest shift. That is, the overrunning clutch works at the time of starting, and once the SSs enter the operation and the rotary speed becomes larger than the rotary speed of the lowest shift, the clutch comes into the overrunning state. In fact, even at rest, many SSs are in the meshing state (when in a vertical arrangement, the SSs at the bottom will return under the effect of gravity; and when in a horizontal arrangement, the SSs were previously in the meshing state remain their meshing state). Thus, starting is not a problem to this mechanism. It is not necessary to provide an additional assistant starter, such as the friction traction ring or the like, for a typical transmission.

In the case where the lubrication condition is excellent, the SS wheel may act as a driving wheel. Thus starting is not a problem at all. At this time, it has a more robust adaptability for applications. The variable-tooth gear of SS type operates exactly at the most outer edge of the tooth-and-groove disc when it outputs large torque at a low speed. Therefore, its curvature and geometric sliding motion are small, and the number of the SSs in the meshing state is large. However, since the SSs may slide in a meshing state when loaded, the lubrication condition should be very good. The variable-tooth gear may be classified into a spur variable-tooth gear of SS type and a bevel variable-tooth gear of SS type, according to the meshing profiles of the SSs. Fig. 6-B shows the structure diagram of a bevel variable-tooth gear of SS type. Its transmission mechanism is similar to that of the transmission by a bevel gear. Readers are referred to Fig. 11-C and 11-D for the tooth patterns of the tooth-and-groove disc of a bevel variable-tooth gear of SS type. It is well adapted for the transmissions of the types shown in Figs. 30 and 40.

Fig. 8 is a structure diagram of SSs with different shapes.

In applications requiring high accuracy, the dense arrangement combinations of SSs with different shapes (as shown in Fig. 8-A) or the combinations of the SSs with the same sector section (as shown in Fig. 8-B) may be utilized to reduce the circumferential play due to the radial motions of the SSs.

Fig. 10 is a schematic view of the distribution of the tooth and groove pattern of gear wheels (I), wherein the hatched portions in the tooth-and-groove disc represent the portion of convex teeth. They may also represent the groove portions.

The type of the tooth and groove patterns as shown in Fig. 10-A is the most widely used single tooth pattern of a radically radiating shape. It is simple in the structure and easy to manufacture. However, its transmission performance varies greatly as its radial dimension changes.

The tooth and groove patterns shown in Figs. 10-B, D, E, F are improved to different extents, so that its transmission property is relatively stable. In fact, the texture of the tooth-and-groove disc can be very fine. Generally speaking, the areas of the concave grooves are relatively large, and the widths of the concave portions are larger than the convex portions, to the effect that the number of the SSs coming into meshing state becomes larger. That is to say, "the convex tooth surfaces are narrow, and the concave groove surface is wide". This assures that the number of the SSs coming into meshing state increases significantly. Since the teeth and grooves on the grooved disc are fixedly coupled to the disc body, and the projecting height is very small, the strength is sufficient even at the portion where the wall thickness is small.

Fig. 14 is a schematic view of a transmission with multiple-phase variable-tooth gears in parallel; and Fig. 15 is a view for analyzing the progressive difference arrangement of multiple-phase variable-tooth gears in parallel.

The combination designs with multiple-phase sets can be employed to further increase the load capacity. As a rule, a parallel coupling may increase power (as shown in Figs. 16-A, B, E), and a series coupling may increase transmission ratio (as shown in Figs. 16-C, D).

Fig. 14 is a schematic view of the transmission with multiple-phase variable-tooth gears in parallel. It can increase the load capacity three times. It is required that the three variable-tooth gears coincide in the radial position of the tooth-and-groove wheel. In addition, the transmission shaft 33 can also serve as a shunt power output shaft. In this kind of embodiments with multiple-phase sets, all the meshing points of the SSs in the whole system (these points being the force-receiving points of the variable-tooth gear of SS type that come into meshing to transmit power; 3 meshing points in Fig. 14 and 2 meshing points in Fig. 16-A) may be arranged in accordance with "the progressive toothwise differential principle".

As to "The progressive toothwise differential principle"(or, in short, the progressive differential principle), in general, if the variable-tooth gears are uniformly distributed in the circumference where the tooth-and-groove disc locates, they conform to the following principle (except for the situations of non-uniform distribution):
(1) when the number of the tooth-and-grooves is a multiple of the number of the meshing points, there is no tooth differential, and the transmission is a meshing transmission of synchronous, uniform and constant state type;
(2) when the number of the tooth-and-grooves is not a multiple of the number of the meshing points,
   (A): when the number of the tooth-and-grooves and the number of the meshing points do not have a common factor, the transmission is a meshing transmission of progressive toothwise differential type;
   (B): when the number of the tooth-and-grooves and the number of the meshing points have a common factor, the transmission is a meshing transmission of a grouped progressive toothwise differential type, and the number of groups equals the largest common factor.

In conclusion, in order to improve the transmission property, the distribution state of the variable-tooth gears should conform to the progressive toothwise differential type, and in order to improve further the stress distributions, the grouped progressive toothwise differential type may be employed. At the same time, in order for the transmission to be further stable, it is desirable to increase the number of the progressive toothwise differential in each group, that is, the total number of the meshing points is increased.

Note: the number of tooth-and-grooves 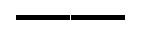 the total number of teeth or grooves, the number of the meshing points 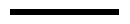 the number of force-receiving areas of the variable-tooth gear of SS type that may enter the meshing state to transmit power.

As shown in Fig. 15 is a view for analyzing the progressive difference arrangement of multiple-phase variable-tooth gears in parallel. Analyses are performed taking Fig. 15 as an example. The number of tooth-and-grooves is 20. If the meshing points are the points of a, b and c, the arrangement is of progressive toothwise differential type. In this case, the teeth and grooves sweep through the axes of the three variable-tooth gears one by one, and the effect of the meshing transmission is stable. The three variable-tooth gears operate alternately, resulting in a stable power output. If the meshing points are the points of a, b, c, e, f and g, the arrangement is of grouped progressive toothwise differential type, with a-f, b-g, and c-e constituting a group, respectively. The meshing effect in each group is substantially symmetrical, which is desirable for further improving the stress distributions of the whole system, suppressing the vibration noise and optimizing the dynamic balance.

At the same time, the design of the distances between the SS groups of the variable-tooth gears themselves should also conform to this principle. That is to say, the span of the variable-sheet group is not a multiple of the width of the groove pattern, and vice versa. In this way, the wearing of each variable-sheet due to force is made uniform.

Fig. 16 is a schematic view exemplifying the arrangement of multiple-phase variable-tooth gears.

Fig. 16-A demonstrates improvements over Fig. 1. Meshing with the teeth-and-groove disc can occur at both sides of the variable-tooth gear of the SS type to output power in coalition. As a result, the ability of transmitting power is doubled, thus achieving the effect of combining two phases. At the same time, it is also easy to realize reverse output.

Fig. 16-B shows improvements over Fig. 14 by doubling the ability of transmitting power, resulting in the ability as 6 times as that shown in Fig. 1.

In Fig. 16-E, there are tooth and groove patterns on both sides of the tooth-and-groove disc. The system is of a single disc, two-sided transmission type, and is similar to what is shown in Figs. 16-A, B in that all of them are of multiple-phase in parallel type, and the power is increased.

Figs. 16-C, D show the type of multiple-phase in series. They are used to increase the transmission ratio.

### The series of variable-tooth conic gear CVT

Fig. 17 is a structure diagram of a variable-tooth conic gear and its components (I);

As shown in the figure, two sets of ring of SS groups are symmetrically arranged on both sides of a variable-tooth conic gear body 39, with the ring of SS groups being composed by the SSs specialized for the variable-tooth conic gear. Each of the two sides of the variable-tooth conic gear body and one assistant wheel body (I) in combination form a ring of SS holders, in which a ring of SS groups is disposed. The operation principle of its SSs is similar to that of a variable-tooth cylindrical gear. However, the state of forces acted upon it is such that the direction of the centrifugal returning force of the SSs is different from the direction of meshing forces. This is advantageous to improve the self-locking feature and reliability.

Note that this variable-tooth conic gear can dispense with one of its two symmetric halves to form a single-ring bevel conic gear of the variable-tooth type, as the variable-tooth conic gear shown in Fig. 19-A.1.

Fig. 18 is a structure diagram of a variable-tooth conic gear and its components (II);

Different from Fig. 17, in the structures shown in Fig. 18, the SSs on both sides of the variable-tooth conic gear are designed in a piece so as to simplify the structures. However, when the SSs are wide, this will aggravate the mass of the SSs. More significantly, the SSs on both sides will move synchronically, such that the meshing property is affected. So it can only be applied in specific situations. This structure can be modified to a variable-tooth cylindrical gear only if the central support SSs of the SSs specialized for a variable-tooth cylindrical gear are substituted for (see Fig. 46.3.3). It can be seen that the only difference therebetween lies in the differences of force-receiving portions and the SSs.

Fig. 19 is a structure diagram of variable-tooth conic gear CVT.

As shown in this figure, this CVT comprises conic disc tooth-and-groove wheels 42, a variable-tooth conic gear 43, a shifting lever 44, a sun gear 45, a planet gear 46 and the like. An output shaft is fixedly coupled to the conic disc tooth-and-groove wheels to introduce power flow. The two conic disc tooth-and-groove wheels are symmetrically disposed to sandwich a double-ring variable-tooth conic gears therebetween (double rings of SS groups are symmetrically arranged on both sides of the wheel body). The two conic disc tooth-and-groove wheels mesh with the double rings of SSs of the variable-tooth conic gear, respectively, so as to implement meshing transmission to output power. The variable-tooth conic gear and the planet gear 46 are concentrically fixedly coupled, and are coupled to a planet bracket via a rotary pair. The rotary axis of the planet bracket is concentric with the sun gear and the output shaft. The planet gear meshes with the sun gear. The sun gear is fixedly coupled to the output shaft. When the transmission ratio remains unchanged, the planet bracket is stationary. If it is intended to adjust the speed, the shifting lever is manipulated to change the position of the planet bracket. Thus the radial positions of the planet gear and the rotation shaft of the variable-tooth conic gear vary with respect to the conic disc tooth-and-groove wheels (at the same time, the distance between the two conic disc tooth-and-groove wheels is changed accordingly). In this way, the transmission ratio is changed. (The schematic structure diagram of the transmission mechanism can be seen in Fig. 19-A.3: a planet shifting mechanism.)

Wherein, any one of the conic disc tooth-and-groove wheels 42 and the variable-tooth conic gear 43 may serve as "a shifting and displacing wheel", that is, to change the ratio of the relative meshing radius of both so as to realize shifting.

If "a variable-tooth flat disc gear of the type of returning in an oblique direction" as shown in Fig. 20 is substituted for the variable-tooth conic gear in this figure, and the two conic disc tooth-and-groove wheels are also replaced by flat disc tooth-and-groove wheels, then the distance between the two flat disc tooth-and-groove wheels will not change during shifting. This further simplifies the assistant mechanism, and improves reliability. In addition, a manner of inner meshing may also be employed so as to improve the meshing property (the arrangement is similar to that in Fig. 36.2).

Note that the pressing force between the tooth-and-groove wheels and the variable-tooth gear may be very small or vanish, since the transmission manner is via meshing SSs (for example, there may be spaces between the tooth-and-groove wheels and the variable-tooth gear, so they do not contact with each other, and the meshing transmission is realized completely by returning SSs).

For the purpose of simplifying the structures, the structure of a single conic disc tooth-and-groove wheel and a single ring variable-tooth conic gear as shown in Fig. 19-A.1 can be employed. However, the load capacity and the force-receiving effect may be somehow deteriorated. Furthermore, the arrangement of two variable-tooth conic gears sandwiching the double-sided conic disc tooth-and-groove wheels in the opposite directions may also be employed to perform shifting, as shown in Fig. 19-A.2.

Fig. 19-B.1 is a structure diagram of a planet conic disc variable-tooth gear CVT.

Developed on the basis of the structure of the variable-tooth gear CVT as shown in Fig. 19-A, a planet conic disc variable-tooth gear CVT can be obtained, wherein the conic disc tooth-and-groove wheel 42 serves as a sun gear, with a plurality of variable-tooth conic gears arranged on its circumference as planet gears. The outer sides of the plurality of variable-tooth conic gears mesh with a large tooth-and-groove wheel of the inner meshing type 48, so as to constitute a transmission manner via a planet conic disc. In this way, the power capacity is increased. The brief structure of its mechanism can be seen in Fig. 19-B.1. Furthermore, a single stage transmission manner via an inner meshing gear may be employed to increase the transmission efficiency, as shown in Fig. 19-B.2. In particular, the variable-tooth conic gear 43 meshes with the large tooth-and-groove wheel of the inner meshing type 48. In this meshing manner, the curvatures of both match with each other, and the transmission effect is good.

Fig. 20 is a schematic view of a variable-tooth gear of the type of returning in an oblique direction.

Fig. 20.1 shows an variable-tooth flat disc gear of the type of returning in an oblique direction; and Fig. 20.2 shows an variable-tooth inner conic disc gear of the type of returning in an oblique direction.

The variable-tooth gear can be classified into two main categories, i.e., "returning in a same direction" and "returning in an oblique direction", according to the trajectories of the SSs. Foregoing embodiments are all directed to the "returning in a same direction" type, that is, the returning motion of SSs is in the same direction as the returning forces (such as, centrifugal forces). Fig. 20 shows the schematic view of a variable-tooth gear of the type of returning in an oblique direction, wherein Fig. 20.1 shows an variable-tooth flat disc gear of the type of returning in an oblique direction; Fig. 20.2 shows an variable-tooth inner conic disc gear of the type of returning in an oblique direction. The SSs of the type of returning in an oblique direction have their trajectories crossing with the direction of returning forces (such as, centrifugal forces) at an angle, as shown in figures. Such a structure is advantageous to optimize the structure design of transmissions and simplify the mechanism layout of transmissions. As shown in Fig. 22.3, it is necessary only to displace the variable-tooth gear when shifting.

Fig. 21 is a schematic view of a variable-tooth conic gear with oblique SSs. Its transmission mechanism is similar to the transmission by bevel gear.

Note that the direction indicted by the arrow is the motion direction of the variable-tooth gear with respect to the tooth-and-groove wheel.

Fig. 23 is the schematic view of returning, meshing and transmitting of the SSs. The eight arrows represent the returning driving force, for example, gravity, attraction force, repellent force, elastic force, spring force, electromagnetic force, centrifugal force, inertial force, hydraulic pressure, gas pressure, flow impact force from gas, liquid, etc. The SSs come into close contact with meshing teeth and grooves to implement meshing under the returning driving force.

Fig. 23.1 shows SSs that return automatically under the effect of elastic forces, wherein the black thick lines represent spring wire and the arrow represents the returning direction. Mode A indicates a type that returns in a translation manner, and Mode B indicates a type that returns in a rotary manner. The spring wires for the neighboring SSs may be arranged at spatially staggered positions so as to eliminate interference. The feature of elastic returning lies in the fact that it is free from the constraint of gravity and motion states, and that it can freely return at any time.

Note that, when the SSs are depending on such returning driving forces as gravity, attraction force, repellent force, electromagnetic force, flow impact force from gas, liquid, etc. to return, the driving force generation devices may be stationary and free from rotation. In this manner, the design can be simplified and the reliability can be improved. As the structure shown in Fig. 1, an electromagnet may be arranged under the tooth-and-groove disc (note that the magnetic path should not be closed by the tooth-and-groove disc, to the effect that the magnetic field can interact with the SSs sufficiently). At this time the electromagnet itself can be stationary and does not rotate with the tooth-and-groove disc. The SSs can be attracted to return by magnetic induction during rotating.

Fig. 24 is the view for analyzing the self-locking meshing property of the SSs. As shown in the figure, when the contact angleθbetween the SS and the wall of the meshing tooth (or groove) is less than the equivalent friction angle, the SS has the property of self-locking meshing. As this time, whatever the force between the tooth (or groove) and the SS is, the SS will not slide along the wall of the meshing tooth (or groove), therefore no skidding occurs. Thus, the reliable transmission can be implemented only if there exists the self-locking property. Fig. 24.1 is the cross section of the SSs. SSs are typically made of steel sheets of the same thickness. The section shapes of the meshing zones of the SSs with the tooth (or groove) wall present three modes, i.e., Mode A, B and C. Mode A is a one-sided slant type, suitable for transmitting in one direction. Mode B is a two-sided type, suitable for transmitting in two directions. Mode C is a rounded type, for general uses. For Mode C, the angle of its contact section matches the oblique angle of the wall of tooth (or groove) so as to lower the stress concentration and optimize the stress distribution.

Fig. 25 is a structure diagram of a belt type CVT with a multiple-ring variable-tooth conic gear.

Fig. 26 is a structure diagram of components of a multiple-ring variable-tooth conic gear.

Fig. 27 is a structure diagram of the driving belt specialized for CVTs.

Fig. 25 shows a structure diagram of a belt type CVT with a multiple-ring variable-tooth conic gear. It comprises two pairs of multiple-ring variable-tooth conic gears (the rotational shafts thereof are parallel) with a driving belt sandwiched therebetween. Its functioning principle of continuously variable shifting is similar to that of current metal belt type CVT, with the difference being that the engagement of its driving belt with the conic disc (the multiple-ring variable-tooth conic gear) is meshing, such that the property of transmitting via current metal belt is completely changed and reliable transmission of large power can be realized without substantial applications of pressing forces. The SS assembly is a SS assembly of a spacing multiple ring type, with all SSs being of the same type. The densely staggered arrangement of support SS groups and fill SS groups is obviated, and the ring of SS groups is composed by arranging the same type of SS groups at intervals. The whole SS assembly of spacing multiple-ring type is configured by multiple rings of SS groups of different radii. The components structure of its multiple-ring variable-tooth conic gear is shown in Fig. 26, and the multiple-ring variable-tooth conic gear is constructed by a multiple-ring variable-tooth gear 62, a wheel basic body 63 and SSs specialized for a variable-tooth gear. The arrangement of its SSs can be as seen in the figure, alternatively, the SSs can be alternately staggered (as shown in Fig. 28.3).

Fig. 27 is a structure diagram of the driving belt specialized for CVTs. The driving belt is composed by a belt base 65, an enforced layer 66, and meshing support blocks 64. Its structure combines the features of a belt and a chain, resulting in advantages from both, i.e., having smoothness from a belt and synchronic meshing property from a chain. The transmission via meshing of convex teeth and concave grooves are realized by arranging the meshing support blocks 64 at intervals, thus presenting the property of large load capacity, etc. (Note that due to the property of infinitely meshing, the accurate requirement otherwise imposed on the intervals of meshing support blocks is obviated. Regular or irregular intervals are all acceptable, therefore the manufacture cost is reduced). Other types of transmissions will be described in the following. Note, SS 58 is the term representative of all SSs (see Fig. 46 for specific structures).

Fig. 28 is a structure diagram of a multiple-ring variable-tooth conic gear CVT of combined gear body type.

The multiple-ring variable-tooth conic gear CVT of combined gear body type comprises two pairs of multiple-ring variable-tooth conic gears of layered combination type, with a driving belt sandwiched therebetween. Its difference from the type shown in Fig. 25 lies in the fact that the multiple-ring variable-tooth conic gears employ the structure of parted combination type. The manufacture process can be optimized in this way. The multiple-ring variable-tooth conic gear of layered combination type is composed by combining a plurality of layered wheel bodies and wheel base bodies (II). Fig. 28.1 shows the wheel body specialized for SSs with two stop legs. Fig. 28.2 shows the wheel body specialized for SSs with one stop leg. In practice, the type shown in Fig. 28.2 is generally used.

Since the pressing force applied by the conic disc of this type of transmission (a multiple-ring variable-tooth conic gear) on the driving belt, the Mode B driving belt can be employed. Refer to Fig. 32 for related belts.

When the distances between the meshing convex teeth and concave grooves are not the multiple of the distances of the SS groups, the "progressive differential effect" is generated. The design principle should conform to "the progressive differential principle" so as to assure the meshing effect, and eliminate pulsation in the outputs and weak intervals of power flow.

Note that all types of driving belts that have meshing convex teeth and concave grooves are interchangeable. All chains and belts with meshing convex teeth and concave grooves on sides, including prior art roll chains, can be employed in the transmissions.

In Fig. 28.3, the radial arrangement of SSs takes the alternately staggered form. As a result, it is assured that more SSs can come into meshing regardless of the position of the driving belt. When the spacing of the neighboring rings of SS groups is less than the operation meshing span of the sidewalls of the driving belts, the non-alternate manner can be employed (as shown in Fig. 26).

The multiple-ring variable-tooth conic gear may also be designed according to the principle of staggering a wide SS group and a narrow SS group, so as to strengthen the meshing effect. However, it is not necessary for a belt type transmission, since the envelop angle is large such that there is many SSs in meshing and therefore a spacing arrangement suffices. When the dense manner is employed to arrange the SSs throughout the whole disc, a rigid tooth-and-groove wheel/grooved ring can be used to replace the flexible belt drive, such that the transmission chain is shortened (it is a one-stage transmission), the structure is simplified, the manufacture cost is reduced and the reliability is improved, thus making it more suitable for high speed applications (Refer to Fig. 37 which is a structure diagram of a shifting mechanism of a small taper variable-tooth conic gear series).

Fig. 29 is a structure diagram of a multiple-ring variable-tooth conic gear of single-piece type.

The multiple-ring variable-tooth conic gear is of a single-piece structure. Installation holes 72 for embedding the SS holders are trepanned at the positions of the conic working surfaces corresponding to the arrangement locations of SS groups. The SSs are, in groups, fitted into each separate free SS holder 71. To complete the installation, the free SS holders 71 are then fitted into the installation holes 72 for embedding the SS holders, either by means of interference fitting, thermal fitting or weld fitting, or by means of thread fitting. In the case of thread fitting, the cylindrical screw coupling surfaces of the SS holders 71 and the installation holes 72 are threaded surface. When the casting method is utilized to form the installation holes 72, the holes can be configured to be square, and when the machining method is employed, the holes can be configured to be circular.

The returning trajectories of the SSs can be classified into categories of "returning in a same direction" and "returning in an oblique direction". Shown in this figure is the category of "returning in an oblique direction".

When clearance fit is taken, the SS groups can freely rotate, so as to adapt, per se, to rotation angles, thus the meshing effect is improved. However, stopping measures should be taken to the SS holders. This solution can be employed in all types of SSs.

Fig. 30 is a structure diagram of a metal belt of a meshing type.

As compared to metal belts for prior art metal belt type CVTs, the metal belt of the meshing type has the characteristic that the metal blocks are of a wide type and a narrow type. The wide metal blocks and the narrow metal blocks alternately combine to form a metal belt with meshing convex teeth and concave grooves. Depending on the actual conditions, a plurality of wide metal blocks may constitute a group of wide metal blocks, and a plurality of narrow metal blocks may constitute a group of narrow metal blocks. The groups of wide metal blocks and the groups of narrow metal blocks alternately combine to a metal belt. In this way the width of the meshing teeth and grooves is increased and the meshing parts of the SSs become larger. Therefore the load capacity is improved.

In addition, the narrow metal blocks can take the form of "an arc-like section". This can improve the overall flexibility of the belt. Both sides of the wide metal blocks that come into the meshing zones are formed with a slant surface, such that the property of continuously variable shifting can be improved on the basis of utilizing the self-locking meshing property.

Fig. 31 is a structure diagram of a pin-plate chain of a meshing type.

The pin-plate chain of the meshing type is formed by additionally providing meshing teeth on the basis of prior art pin-plate chains. As shown in the figure, meshing blocks 78 are provided on chain pins 76 or chain plates 77. The distances between the meshing blocks are determined by the required density of meshing blocks. Fig. 31 shows Mode A and Mode B. In Mode A the meshing blocks are only provided on chain pins 76. In Mode B, the meshing blocks are provided on both the chain pins 76 and chain plates 77. Note that, it can be refitted from all kinds of prior art chains. It is only necessary to design the working side surfaces to be convex and concave so as to mesh with the SSs. For example, the gaps between the rollers of a roll chain may come into meshing with the SSs to implement meshing transmission.

Fig. 35 is a structure diagram of a belt type CVT of returning via elastic nipping force type.

In order to improve the property of the mechanism, the embodiment shown in this figure takes the following arrangement. That is, the SS holders are formed by configuring through channels on the double-sided conic disc. And a multiple-ring SS conic wheel of returning via elastic force type is formed by placing the SSs (or sliding needles) into the holders. These holders are arranged by disposing, according to the principle of convex and concave portions opposing each other, two nipping tooth-and-groove belts with convex teeth and concave grooves arranged on the two working side surfaces thereof, as shown in Fig. 35.4. The driving belts' convex teeth and concave grooves are opposed to each other. In this way, the SSs are urged to slide transversely, and therefore implement returning via elastic forces. As a result, the conic wheel and the driving belts mesh with each other to transmit. Its overall layout of the conic wheel and the driving belts is similar to that of prior art belt type CVTs (see also Fig. 25 which is a structure diagram of a belt type CVT with multiple-ring variable-tooth conic gear).

In this scheme, the SSs are installed on the wheel body and the SSs on the belts are obviated, such that the adaptability for high speed applications is increased, and the performance becomes more reliable. There are many manners to arrange SS holders on the double-sided conic discs. See Fig. 35.1, Fig. 35.2 and Fig. 35.3 for specific typical layouts. Fig. 35.1 shows a typical layout. In Fig. 35.2, the arrangement of the SSs in the radial direction takes an "alternately staggered" form. This assures that there are more SSs coming into meshing wherever the driving belts are located. When the gap between the neighboring rings of SS groups is smaller than the operation meshing span of the sidewalls of the driving belts, the non-alternate manner can be employed. Fig. 35.3 shows double side conic disc of a sliding needle type. The sliding needles are placed in the sliding needle holders. For the case of sliding needles, the geometric sliding is small and the performance of the infinitely meshing is good. In addition, the sliding needle holder may also be of rectangular or sector (Fig. 35.1, Fig. 35.2).

Fig. 35.5 is a plan view for the SSs. The stop legs for SSs can be disposed in the middle of the SSs. There may be one or two stop legs.

Fig. 36 is a structure diagram of a wheel type CVT of returning via elastic nipping force.

Shown in the figure is a wheel type CVT of returning via elastic nipping force, in which the conic disc and the tooth-and-groove wheel oppositely clip the SSs such that the SSs are returned by elastic forces. This CVT comprises a pair of conic disc and tooth-and-groove wheels and a single-ring SS wheel of returning via elastic force type sandwiched by the opposing convex teeth and concave grooves of the conic disc tooth-and-groove wheels. The single-ring SS wheel of returning via elastic force type comprises a SS wheel body for translations, fill SSs of returning via elastic force type and support SSs of returning via elastic force type. In Fig 36, Fig. 36.1 is directed to an outer meshing type, and Fig. 36.2 is directed to an inner meshing type. In the inner meshing type, the meshing curvature and orientation match, thus the transmission effect is good and the arrangement is more compact. Fig. 36.3 is directed to a transmission in which the flat disc type tooth-and-groove wheel oppositely clips SS CVT of returning via elastic force type. This CVT comprises a pair of flat disc tooth-and-groove wheels and a single-ring SS wheel of returning via elastic force type, with the SS wheel sandwiched between the opposing convex teeth and concave grooves. In this transmission, the arrangement is compact and the shifting mechanism is simpler (see Fig. 19-A.3 for the shifting mechanism). The dedicated SSs, which mesh with the conic disc tooth-and-groove wheel, of the single ring SS wheel of returning via elastic force type are of Mode A (for example, Mode A fill SS of returning via elastic force type 100, Mode A support SS of returning via elastic force type 101). In order to improve shifting and transmitting performances, the meshing surfaces in both sides of the SSs may be made into arc (as shown in Fig. 36.4, where A represents the fill SSs and B represents the support SSs). The dedicated SSs, which mesh with the flat disc tooth-and-groove wheel, of the single ring SS wheel of returning via elastic force type are of Mode B (for example, support SS of returning via elastic force type 102, fill SS of returning via elastic force type 103). In addition, the returning of the SSs in this SS wheel can also take the free returning manner. As shown in Fig. 36.5, by dividing the SS of returning via the elastic force type into two halves and interposing therebetween a returning spring wire 109, the returning type via elastic forces can be realized. Alternatively, by injecting gas flow or liquid flow into the gas flow hole 110, the returning type via flow impact forces can be realized. Alternatively, by disposing an electromagnetic traction device on the conic disc tooth-and-groove wheel or at equivalent positions, the returning type via electromagnetic forces can be realized in such a way that SSs on the SS wheel are electromagnetically attracted or repelled by electromagnetic traction forces. Note, when the "free returning" type is employed, the matching teeth and grooves of the conic disc tooth-and-groove wheel do not need to be opposite with the convex portions facing the concave portions. Furthermore, if they are arranged in a staggered manner, the progressive differential principle can be utilized to improve the smoothness of transmission.

Fig. 37 is a view showing the shifting mechanism of a small taper variable-tooth conic gear series.

Fig. 37.1 shows a continuous type, in which the SS groups contact with each other, without gaps therebetween. The rings of SS groups are constituted by alternately arranging the SS groups of different types at intervals. The spaced type may also be taken (refer to foregoing descriptions), wherein there are gaps between the SS groups. Inside the rings of SS groups are the SS groups of the same type. In order for the transmission to be smooth, the "staggered relaying" form can be employed to arrange the SSs. It is assured that more SSs can come into meshing regardless of the position of the driving belt. When the spacing of the neighboring rings of SS groups is less than the operation meshing span of the sidewalls of the driving belts, the non-alternate manner can be employed.

Figs. 37.13, 37.14, 37.15, 37.16 are structure diagrams of a rigid driving tooth-and-groove meshing ring, wherein Fig. 37.13 shows a conic toothed ring with inner and outer meshing surfaces (it represents three types, that is, a conic toothed ring with inner and outer meshing surfaces, a conic toothed ring with an inner meshing surface, and a conic toothed ring with an outer meshing surface). Fig. 37.14 shows a cylindrical toothed ring with an inner meshing surface. Fig. 37.15 shows a cylindrical toothed ring with inner and outer meshing surfaces. Fig. 37.16 shows a cylindrical toothed ring with an outer meshing surface.

In Fig. 37.6, the input variable-tooth conic gear and the output variable-tooth conic gear are arranged conversely. Continuously variable shifting is realized by coupling the two variable-tooth conic gears via a conic toothed ring with meshing teeth and grooves on both the inner and outer surfaces. It is of an continuously variable shifting type by means of an intermediate component.

Generally speaking, when rigid toothed ring is used for transmission, the contact region is limited. In order to enlarge the contact and meshing surface, it is desirable for the SSs of the variable-tooth gear to employ the "continuous type" arrangement (as shown in Fig. 37.1). When a flexible belt or chain is employed for transmission, the envelop angle is large and there are many SSs that contact the belt, therefore the SSs of the variable-tooth conic gear may employ the "spaced type" arrangement.

Fig. 37.11 shows the SSs for this type of variable-tooth gears, wherein A represents "support SSs" and B represents "fill SSs".

Fig. 37.12 shows a plan view of the metal blocks of the flexible metal belt for the transmission of this type of variable-tooth conic gear with small taper (as the structure for Fig. 37.5), wherein A represents "a concave metal block" and B represents "a convex metal block". See Fig. 30 for the overall structure. The fitting structures of the two metal blocks are similar, with the only difference being the meshing surfaces. The metal belt in Fig. 30 is of the type that meshes at the side surface, and the metal belt in this figure is of the type that meshes at the bottom surface.

This type of variable-tooth conic gear with small taper may also employ "the structure of single piece multiple-ring variable-tooth conic gear" (see Fig. 29). Installation holes for embedding the SS holders are trepanned at the positions of its working conic surfaces corresponding to the arrangement locations of SS groups. The SS groups are, in groups, fitted into each separate free SS holder. To complete the installation, the free SS holders are then fitted into installation holes for embedding the SS holders. The steel ring is a rigid member. An additional assistant positioning system can be utilized for positioning and shifting (see Fig. 19-A.3 for shifting mechanism). Note that the arrow direction is the direction of the relative motion between the variable-tooth gear and the tooth-and-groove wheel during shifting.

Fig. 38 is a structure diagram of a variable-tooth rotary shaft roller gear CVT.

The variable-tooth rotary shaft roller gear CVT comprises a variable-tooth cylindrical gear, a rotary shaft roller wheel, a fixing bracket, a revolution bracket, a planet conic gear, a sun conic gear and the related components. The structures of the variable-tooth cylindrical gear are the same as the foregoing variable-tooth cylindrical gear (as show in Fig. 2). However, it is wider than the foregoing gear so as to enlarge its meshing dimension with the rollers. The variable-tooth cylindrical gear is coupled to the output shaft, and is fitted on the fixing bracket. The rotary shaft roller wheel and the planet conic gear 116 are coupled to the output shaft 33, and are fitted on the rotatable bracket 44. The planet conic gear 116 meshes with the sun conic gear 117. The sun conic gear is coupled to the input shaft. As the shifting lever 44 is turned, the whole revolution bracket will rotate at the axis of the input shaft. At this time, the planet conic gear rotates about the sun conic gear, but the meshing state therebetween can be always maintained so as to transmit the torque of the input shaft to the rotary shaft roller wheel. The rotations of the revolution bracket change the angle between the rotation axes of the rotary shaft roller wheel and the variable-tooth cylindrical gear, so that the transmission ratio undergoes changes. Because the angle of the two axes can change infinitely, the mechanism can implement continuously variable shifting. Fig. 38.4 is a view for analyzing the shifting performance of this transmission. When the planet conic gear is located at point a, the rotation axis of the variable-tooth cylindrical gear is parallel to the rotation axis of the rotary shaft roller gear, so the output is carried out at the highest rotation speed. As the planet conic gear moves toward point b, the angle between the two axes becomes larger, and the output rotation speed decreases. When it reaches point c, the two rotation axes become perpendicular to each other, therefore no power is output, which is equivalent to the neutral position. When the rotation shaft of the roller gear is rotated further toward point d, the reversed torque will be output, which is equivalent to the reverse position. When the planet conic gear moves from the point a to the point b', the output performance is completely as the same as the foregoing, except that the wearing point of the SSs is changed, so the usage in both directions will be advantageous to extending the components' service lives.

Fig. 38.1 and Fig. 38.2 show a rotary shaft roller variable-tooth gear CVT at two states of different transmission ratios. In Fig. 38.1, there is formed an angle between the rotation axis of the variable-tooth cylindrical gear and the rotation axis of the rotary shaft roller wheel. The transmission ratio is relatively large and the output is implemented at a reduced speed. In Fig. 38.2, the rotation axis of the variable-tooth cylindrical gear is parallel to the rotation axis of the rotary shaft roller wheel. The transmission ratio is relatively small and the output is implemented at the highest speed.

To increase the efficient transmission ratio, the CVT of a rotary shaft type may employ a rotary shaft roller wheel of the type in which the density of the rollers can be changed. In this roller wheel, the density/number of the rollers can be changed according to the changes of the transmission ratio. All rollers come into operation at high speeds, and the number of rollers that operate at low speeds may be one half of the total number. As shown in Fig. 38.3, the roller wheel with the density of rollers variable is configured by interposing two halves with sparse rollers. When it is required that the roller wheel has denser rollers, the two half roller wheels can be interposed so as to double the roller density. The density will reduce to one half if the two halves are separated.

For the purpose of increasing power, multiple-phase mechanisms can be arranged in parallel. As shown in Fig. 38.5, two variable-tooth cylindrical gears are employed at an upper location and a lower position to mesh with the rotary shaft roller wheel, so as to double power.

In a similar way, an arrangement may be employed so that two rotary shaft roller wheels are provided respectively at an upper location and a lower position of the variable-tooth cylindrical gear to mesh therewith. In addition, a multiple-phase layout can be employed, that is, a plurality of rotary shaft roller wheels is provided along the circumferential direction of the variable-tooth cylindrical gear to mesh therewith, such that the power capacity is increased multifold.

Fig. 38.6 shows the SSs specialized for this variable-tooth cylindrical gear. Its construction is the same as the foregoing variable-tooth cylindrical gear, except that its width is wider so as to increase the meshing contact dimension with the rollers.

To improve the performance of continuously variable shifting, the rollers of the rotary shaft roller wheel may take a conic shape (see Fig. 38.7, it is called "a roller wheel of conic surfaces"). That is, the angleθbetween the sliding-tooth and the generatrix of the rotating surface of the meshing roller is less than the equivalent friction angle. At this time the SS presents the property of self-locking (refer to the foregoing). The working surface of the conic roller wheel may also be an arc (as shown in Fig. 38.8).

In addition, the rotary shaft roller wheel can also be replaced by a gear, a bevel gear, a worm wheel or a worm to mesh with the variable-tooth cylindrical gear. In this way, the angles between the rotation shafts are changed so as to implement continuously variable shifting. The contact surface can be increased. At this time, there exits sliding friction, so lubrication property should be very good. Oil lubrication via a centrifugal pump or lubrication via a gas cushion may be employed.

In some specific applications, the variable-tooth gear may also be replaced by a variable-tooth conic gear.

Fig. 39 is a structure diagram of a variable-tooth CVT with a radius-varying metal block belt.

This variable-tooth CVT comprises a metal block belt wheel, the radius of which belt is continuously variable, and a variable-tooth cylindrical gear. Continuously variable shifting is realized by changing the radius spanned by the metal blocks of the metal block belt wheel and making them mesh with the variable-tooth gear. The metal block belt wheel, the radius of which belt is continuously variable, is composed by two opposing conic discs and a metal block belt interposing therebetween. The metal block belt is a flexible convex-concave tooth block belt (or, called a chain of tooth blocks) which is composed by alternately superposing some convex tooth blocks 119 and concave tooth blocks 120 coupled by a tooth block coupling string 118 running therethrough. The radius of the metal block belt on the conic disc can be changed as the distance of the two opposing conic discs changes, so as to implement continuously variable radius. In order to improve the unity of the metal block belt wheel, the conic surface of the conic discs is formed with convex-concave grooves (refer to foregoing, a tooth-and-groove conic disc) so as to mesh with the flexible metal block belt to form a stable entirety. In this case, it is required that the sidewall of this metal block belt is a SS belt structure (see foregoing Figs. 33 and 34 or the prior art SS formed chain). Since the sliding frequency of such SSs is low (it is stationary when the transmission is a constant), elastic force and spring force, etc. can be employed to return the SSs and make them mesh. In addition, the conic disc can also be replaced by a multiple-ring variable-tooth conic gear (see foregoing Figs. 26, 28 and 29). Now the metal block belt is similar to foregoing Fig. 30, the meshing surface is formed by alternately superposing the convex and concave sidewalls so as to mesh with the SSs of the variable-tooth conic gear. In order to facilitate shifting via sliding in the radial direction, idler wheels 141 may be provided on the sidewalls of the metal blocks to reduce friction. The metal block belt may also be replaced by the rubber belt with grooves on its both sides.

At normal times, the whole metal block belt contacts closely with the conic disc under a stretching device to form an integrated metal block belt wheel. When its radius should be changed for shifting, the distance between the opposing conic discs is changed, and with the help of the stretching device, the metal block belt changes its curvature following the contact with the conic disc, so as to form a new working radius. The stretching string becomes longer when the radius of the metal block belt increases, and it retracts when the radius of the metal block belt decreases. In this way the overall stability of the metal block belt wheel is assured.

The metal block belt is an open ring, therefore a complete close toothed ring can only be formed by integrally jointing at least two sets of metal block belts. As shown in the figures, a transmission assembly capable of working continuously can be formed by arranging two metal block belt wheels at substantially 180 degree, with each wheel meshing with one variable-tooth cylindrical gear. As shown in Fig. 39.3, a continuous output of power flow is realized by the alternate complement meshing of two variable-tooth cylindrical gears and two metal block belt wheels.

Fig. 39.1 and Fig. 39.5 show an inner stretching type, that is, the stretching device is located inside of the wheel body. Fig. 39.2 and Fig. 39.4 show an outside stretching type, that is, the stretching device is located outside of the wheel body. Now, in order to avoid the interference between the stretching device and the variable-tooth gear, its stretching string and stretching device are arranged sideward (as shown in Fig. 39.3). Since the intervals of the convex tooth blocks and the concave tooth blocks are equal, the gear with a fixed number of teeth can be substituted for the variable-tooth gear to mesh with the metal block belt so as to implement continuously variable shifting.

Fig. 40 is a structure diagram of a variable-tooth gear CVT with radius-varying tooth segments.

This CVT comprises a toothed ring assembly capable of changing radius infinitely, and a variable-tooth cylindrical gear, etc. Continuously variable shifting is realized by changing the radius spanned by the toothed ring and making it mesh with the variable-tooth gear. The toothed ring capable of changing radius infinitely is formed by combining several tooth segments, each of which is coupled to the radial sliding rail via a translation pair. The working radius of the toothed ring is changed by synchronically changing the radial positions of the tooth segments on the radial sliding rail. To assure the continuity of the working tooth surfaces of the toothed ring, at least two sets of toothed rings (as indicated by A, B of Fig. 40.3) are alternately arranged in a staggered manner to form a toothed ring assembly, each set meshing with a variable-tooth cylindrical gear, respectively (or meshing with different rings of SS groups of a double-ring variable-tooth cylindrical gear. A double-ring variable-tooth cylindrical gear is a variable-tooth cylindrical gear with two rings of SS groups arranged on the same cylindrical surface.), so as to form a CVT assembly capable of independently performing a work cycle (as shown in Fig. 40.2). A continuous output power flow is thus realized by the alternate complement meshing of two variable-tooth cylindrical gears and two toothed rings.

To reduce the number of components and to increase the synchronism of shifting, the two sets of toothed rings can be replaced by a single-toothed ring formed by the step tooth segments 125 which are alternately interposed (as shown in Fig. 40.4).

The meshing of the variable-tooth gear and the toothed ring capable of infinitely changing radius may take an inner meshing manner or an outer meshing manner. The inner meshing structure is compact and the curvatures match. The outer meshing structure is simple.

Fig. 40.5 is a structure diagram of a driving transmission of an inner meshing planet type, in which variable-tooth gears mesh, from inside, with a large toothed ring composed by a plurality of tooth segments. The variable-tooth gears and gears are coaxially fixedly coupled. Gears a and gears b mesh with each other. And gears b in turn mesh with a sun gear. The rotation shafts of gears a, gears b and the sun gear 45 are coupled in a triangular shape via a planet bracket 50. The distances of the shafts of the gears a and gears b are fixed, and the distances of the shafts of the gears b and the sun gear are fixed. The gears a and the sun gear 45 are coupled by coupling body 142 in such a way that the distance between their shafts can be infinitely adjusted. During speed adjustment, the radius of the toothed ring assembly is changed and the distance between the shafts of gears a and the sun gear 45 is synchronically changed so as to implement shifting. Generally, the sun gear and the planet bracket serve as input and output transmission terminals to simplify the shifting mechanism and improve stability. If the planet bracket is taken as the input shaft, and the sun gear serves as the output shaft, the SS variable-tooth gear still operates as a driven gear, only that the shaft of the variable-tooth gear serves as a driving member and the toothed ring is fixed. So this structure conforms to the working property of a variable-tooth gear. A symmetric arrangement of two sets of mechanisms with the planet gear as a driving member may be employed to meet the dynamic balance (as shown in Fig. 40.5).

The usage of variable-tooth gears of a SS type has the following advantages. They are well adapted for the misfit phenomenon of tooth profiles between tooth segments. The pulses resulting from the tooth segments can be suppressed or even be reduced to zero because of the floating effect of the SSs. In addition, the floating compensating effect will impose no requirement on the machining accuracy. Therefore a non-involution tooth profile can be employed.

The meshing of SSs of such transmission mechanisms of the variable-tooth gear type is characterized by a radius-equal, forward smooth meshing. Therefore, the variable-tooth gear can employ "the transmission by SSs with bevel teeth" so as to improve the stability and load capacity (see Fig. 6-B).

In normal applications, a single-ring variable-tooth cylindrical gear having wide SSs (their widths are sufficient to mesh with the two sets of toothed rings simultaneously) may also be employed to replace the set of two variable-tooth cylindrical gears or the double-ring variable-tooth cylindrical gear. Furthermore, the number of the tooth segments can be appropriately increased in order to improve the output stability.

Note, as indicated by its nomenclature, the tooth segment is of a segment shape, i.e., a part of the whole gear. In this transmission, the whole gear is divided into several tooth segments. And the radial dimensions of each tooth segments are changed by the synchronous motion in the radial direction. In this way the circumferential dimensions enveloped by all the tooth segments of the whole gear (that is, all tooth segments of the same gear) are changed so as to infinitely change the radius.

### A SS clutch

Fig. 41 is a structure diagram of a SS clutch of an axial coupling type.

Generally, a SS clutch of an axial coupling type is composed by teeth and grooves of two tooth-and-groove disc surfaces oppositely, that is, in a way that the convex portions face the concave portions, clipping a SS wobble-plate. It is of the type of returning via elastic force. See Fig. 41.1 for the SS wobble-plate (which is in fact a multiple-ring SS wheel of the returning via elastic force type) and see Fig. 41.2 for tooth-and-groove disc. See Fig. 41.3 for the arrangement manner in which teeth and grooves of two tooth-and-groove disc surfaces oppositely, that is, in a way that the convex portions face the concave portions and clip a wobble-plate.

An application embodiment is shown in Fig. 41, which is a structure diagram of a shifting transmission with a constant mesh SS type gear. It is composed by a constant mesh gear with a tooth-and-groove disc (a flat disc tooth-and-groove wheel 6) on a sidewall, a shifting push lever, a thrust bearing, oppositely clipping grooved disc for returning via elastic force (a flat disc tooth-and-groove wheel 6), positioning and coupling pins, a SS wobble-plate and bolts, etc.

The transmission shaft is coupled to the wobble-plate via a guiding spline. The SS wobble-plate comprises two halves coupled by a bolt into a piece. Each half wobble-plate is provided with a ring of SS groups which functions independently. And the two rings of SS groups are clipped by a pair of tooth-and-groove discs with opposing teeth and grooves (i.e., the flat disc tooth-and-groove wheel 6), respectively. The pair of opposite clipping tooth-and-groove discs refer to a mobile tooth-and-groove disc 129, and the sidewall tooth-and-groove disc surface of the constant mesh gear 127 (i.e., the flat disc tooth-and-groove wheel 6), both being coupled by the positioning and coupling pin 130 to assure synchronous rotations. However, they can move axially with respect to each other. The engagement between the two constant mesh gears 127 and the transmission shaft is via bearing joint. The shifting push lever 128 is coupled to the two mobile tooth-and-groove discs 129 via the thrusting bearing, respectively. As shown in the figure, the shifting push lever 128 is pushed to the right, so as to move the mobile tooth-and-groove disc on the right side to the right. The mobile tooth-and-groove disc on the right and the tooth-and-groove disc on the sidewall of the constant mesh gear on the right side clip the ring of SS groups on the SS wobble-plate. In this way the returning via elastic force is implemented. Therefore the constant mesh gear on the right side is integrated with the transmission shaft via the SS wobble-plate to transmit torques. At the same time, the constant mesh gear on the left side and the transmission shaft can rotate freely with respect to each other. On the contrary, when the shifting push lever is pushed to the left side, then the constant mesh gear on the left side is integrated with the transmission shaft via the SS wobble-plate to transmit torques, and the constant mesh gear on the right side is separated from the transmission shaft. The returning manner of such SSs can employ "an electromagnetic driving manner", thereby resulting in a stronger controllability. This technique can be employed in a shifting transmission with a constant mesh gear for vehicles to replace existing synchronous shifting devices. The SSs used with the SS wobble-plate shown in Fig. 41.1 may be the SSs of a segment shape in section (as shown in Fig. 8-B) or sliding-needles (as shown in Fig. 35.3) so as to improve transmission accuracy.

Fig. 42 shows a SS clutch of a radial coupling type.

The SS clutch of a radial coupling type comprises a coupling sleeve 133 with teeth and grooves on the inner loop, a SS grooved wheel 134, etc. The upper portion of such SS is in the form of an arc (as shown in the figure), allowing for a natural transition when being inserted. After being inserted, the coupling sleeve and the SS grooved wheel can perform infinitely meshing via the centrifugal forces. In order to increase the load capacity, the design can be employed that the fill SS groups and the support SS groups are disposed alternately and densely (as shown in the left view). This technique can as well be employed in a shifting transmission with a constant mesh gear for vehicles in place of existing synchronous shifting devices.

Fig. 43 shows a SS clutch of a conic surface coupling type.

The SS clutch of a conic surface coupling type is composed by a SS conic disc 135 (i.e., a multiple-ring or single-ring variable-tooth conic gear, see Figs. 17, 26, 28, and 29. Shown in this figure is of a multiple-ring type) and a coupling sleeve 136 for a tooth-and-groove conic disc. After the SS conic disc is coupled to the coupling sleeve with a tooth-and-groove conic disc, the SSs return under the effect of centrifugal forces and mesh with the tooth-and-groove conic disc so as to implement the engagement of the clutch.

Fig. 44 shows the infinitely meshing device of blocks and a belt.

The infinitely meshing device of block and belt is an improvement over the prior art technique "mechanical CV with high transmission ratio" (CN patent Nos. 03140569.X and 03263450.1). In the prior art patent, the transmission between the traction belt and the velocity-locking block is carried out via friction (see Fig. 39 in CN patent No. 03140569.X which is the assembly view of the CVT). The newly improved technique employs SSs' returning to implement meshing transmission. As shown in Fig. 44, on two traction belts 137 which are symmetrically assembled, the meshing teeth and grooves are opposing to each other with the convex portions facing the concave portions, so as to clip a velocity-locking block 138 with SSs therein. The non-frictional meshing transmission is implemented through the returning process of the SSs by the meshing teeth and grooves on the two traction belts (see the partially enlarged drawing on the right side). Now the pressing forces applied by the pressing device upon the traction belts and the velocity-locking block can be reduced to a large extent.

Fig. 45 shows an overrunning clutch of a SS type.

The overrunning clutch of a SS type is composed by SSs, a SS grooved wheel 134, and a planet wheel outer loop 140, etc. In operation, the planet wheel outer loop 140 rotates in a reciprocating manner. The SSs return under the effect of centrifugal force and so mesh with the planet wheel outer loop, so as to transmit the torque to the SS grooved wheel 134 and rotate it. As shown in the figures, since the inner wall of the planet wheel is formed with teeth and grooves in one single direction, the planet can entrain the SSs and further drive the SSs to output power only when it rotates counterclockwise. And when it rotates clockwise, sliding may occur and the clutch is in an overrunning state. In order to suppress the wearing in the overrunning state and improve the responsibility, oil lubrication via a centrifugal pump can be employed.

A structural arrangement in which the SSs and the blocking grooves take a radiating form is employed in Fig. 45.1. Such an arrangement presents an advantage that the contact is uniform. No matter what position the planet wheel outer loop rotates to, the SSs are always parallel to the surfaces of the grooves, and the contact is a surface contact. The cross sections of the SSs may be of a segment shape. Since this structure is not employed for continuously variable shifting, the curvatures keep constant. The segment shapes of the SSs can take constant optimal values, and the force receiving surface is a standard surface contact, which is better than the meshing effect of a CVT.

In high power applications, the type in which the SSs are densely arranged throughout the ring may be employed and the rigidity and the strength of the SSs may be improved, so as to meet the requirements. Certainly, in low power applications, the number and the mass of the SSs may be reduced to decrease the resistance in the overrunning state and to improve responsibility. The returning performance and the reciprocation frequency characteristic can be improved by employing good lubrication, by increasing the surface smoothness of the SSs and by decreasing the traveling distance of the SSs. The smaller, shorter and lighter the SSs are, the more suitable they are to high speed applications. In such a mechanism, the SSs are constrained by the planet wheel outer loop, therefore the SSs do not need stop legs.

The "progressive differential principle" (refer to the foregoing) can be considered when the distances and the number of the one-direction teeth and grooves of the planet wheel and the SS tooth-and-groove wheel are designed as a whole. In this figure, the grouped progressive toothwise differential principle is employed. That is, the meshing of the ring of SS groups is equally divided into three parts. The SSs in each angular range of 120° form a group. The meshing states of SSs spaced by 120° from each other are the same, so that uniform force distribution is ensured.

The load capacity can be improved by increasing the width and the thickness of the SSs of the clutch. The only force acting upon the SSs is the normal pressing force, therefore the endurance of SSs is long. Even though the performance of continuously variable clutching will be deteriorated after the thickness is increased, this influence only results in an increased sliding angle. Therefore this design may be employed in special applications. Furthermore, "the self-locking property" may be utilized to design the tooth-and-groove disc to improve the performance of infinitely meshing. Efficient use of this self-locking property may optimize the performance of continuously variable transmission.

Fig. 46 is a plan view of various SSs.

A series shown in Fig. 46.1 is the SSs specialized for a variable-tooth conic gear that is of "the type in which one side works independently" (see Fig. 17), wherein Figs. 46.1.1, 46.1.2, 46.1.3, 46.1.4, 46.1.5 and 46.1.6, in this order, are directed to an outside support type, an outside interaction crossing support type, a central support type, a central interaction crossing support type, an outside and central double support type, and an outside and central interaction crossing support type.

A series shown in Fig. 46.2 is the SSs specialized for a variable-tooth conic gear that is of "the type in which both sides work integrally" (see Fig. 18), wherein Figs. 46.2.1, 46.2.2, 46.2.3, 46.2.4, 46.2.5 and 46.2.6, in this order, are directed to an outside support type, an outside interaction crossing support type, a central support type, a central interaction crossing support type, an outside and central double support type, and an outside and central interaction crossing support type.

A series shown in Fig. 46.3 is "the SSs" specialized for a variable-tooth cylindrical gear (see Fig. 2), wherein Figs. 46.3.1, 46.3.2, 46.3.3, 46.3.4, 46.3.5 and 46.3.6, in this order, are directed to an outside support type, an outside interaction crossing support type, a central support type, a central interaction crossing support type, an outside and central double support type, and an outside and central interaction crossing support type. Clearly, this type of SSs is similar to the series in Fig. 46.2, with the only difference being that the working portions of the series shown in Fig. 46.3 are the tops of the SSs, while the working portions of the series shown in Fig. 46.2 are the two sides of the SSs. Therefore, if only the series shown in Fig. 46.2 is designed to be an arc shape, then they are interchangeable (see Fig. 46.10).

In all these figures, the SSs with hatched lines are the SSs of the support type that play a role in supporting, and the hatched portions indicate the force-receiving portions of the support SSs that contact with the walls of the support SS holders to transmit power. The SSs without hatched lines are the SSs of the fill type.

The force-receiving and working principle of the SSs: the support SSs come into contact with the walls of the SS holder of the variable-tooth gear to transmit power, and the fill SSs come into contact with the support SSs to receive forces and transmit power.

The series in Fig. 46.4 shows the coupling manner of these SSs with the restraining surfaces of their respective SS holders, wherein the series of SS groups shown in Fig. 46.*.2, 46.*.4, and 46.*.6 are the support SS group and the fill SS group, respectively. The series of SSs shown in Figs. 46.2.2, 46.2.4, 46.3.2 and 46.3.4 are of the same shape, but they are installed in opposite directions. Therefore, they are the SSs of the same type (refer to the foregoing "effect-equivalent SSs, SSs of the same type"), and are the support SS group and the fill SS group, respectively.

For the type of dense arrangement throughout the ring, the restraining surface of each SS holder takes a symmetrical arrangement of a radiating shape from a center (see Fig. 3). For the type which is not a dense arrangement throughout the ring, the wall surface in the same SS holders are arranged in parallel, while the SS holders themselves take the symmetric arrangement of a radiating shape from a center (see Fig. 26).

As shown in figures, the function of the small stop legs at the lower portion of the SSs is to constrain so as to prevent the SSs from being thrown out of the wheel body (there may be one or two constraining stop legs). In addition, other constraining manner may be employed, as shown in Fig. 46.5. In this figure, A is a normal manner in which the stop legs for a SS project outward; B shows the concave stop legs for a SS; C, D and E show a manner in which a constraining ring, string or rod is inserted through a hole which is punched in a SS to carry out constraining. The SSs shown by D and E are circular (D is a support SS, with the hatched lines indicating the force-receiving portion of the support SS that comes into contact with the wall of the SS holder to transmit power, and E is a fill SS). The SS holder may be used for constraining (as shown in figures), or the manner of punching a long and circular hole in the center of the SSs and inserting a constraining ring 143 through the hole may be utilized for constraining. Such SSs are more convenient for shifting. See Figs. 7 and 45 for the SSs of an outer constraining type.

In Fig. 46.6, A and B are generally used for a variable-tooth conic gear of a small taper (see Fig. 37), and C and D are generally used for the variable-tooth gear of the CVT of a rotary shaft roller variable-tooth gear type, wherein the SSs with hatched lines are the support type SSs which play a role of supporting and the SSs without hatched lines are the fill SSs.

In order to facilitate shifting, the working surface (the force-receiving surface interacting with the tooth-and-groove disc) of the SSs may be of an arc shape (as shown in Fig. 46.8, such SSs can be used with the variable-tooth gears of an oblique returning type shown in Figs. 28 and 29). To improve transmission accuracy and suppress geometrical sliding, the effective working surface can be further decreased so as to form "a local force-receiving zone in an arc shape" (as shown in Fig.46.7).

Fig. 46.9 shows a series of SSs specialized for SS tension driving belts (see the foregoing Fig. 33).

In addition, to eliminate the sliding and skidding phenomenon that may occur between the SSs and the tooth-and-groove wheel, the arc-shaped profile of the meshing and working surface between the SSs and the tooth-and-groove wheel can be modified to a linear profile (see Fig. 46.11).

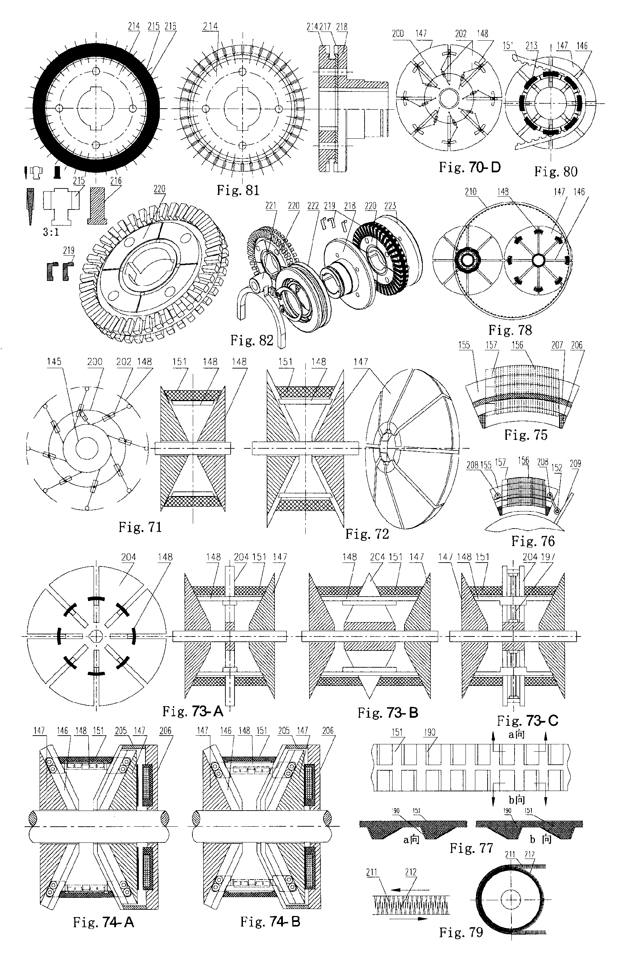

The support SSs can be replaced by the sliding-blocks (the SSs with large thickness). If the strength is sufficient, then the width of the support SS holders can be decreased. As shown in Fig. 2, the support SSs are replaced by a single sliding-block (the SS with large thickness). See Fig. 81 for specific structures.

Fig. 47 is a structure diagram of a CVT of an operation separated and effect combined type (I).

Fig. 48 is an exploded view of key components of an operation separated and effect combined type conic disc.

Fig. 49 is a structure diagram of a CVT of an operation separated and effect combined type (II).

Fig. 50 is a sectioned structure diagram of a conic disc.

Fig. 51 is an exploded view of an infinitely meshing device unit.

As shown in Fig. 47, a CVT of an operation separated and effect combined type is composed of two pairs of conic discs (the rotation shafts of these conic discs are parallel) with a driving belt sandwiched therebetween. The key difference of its continuously variable shifting principle from that of the prior art metal belt CVT is the fact that the operations of infinitely changing radius and infinitely meshing are separated. By superposing the driving belt and the conic disc surface and using the axial displacements of the conic disc, the distance of the driving belt and the conic disc center is changed such that the driving belt may operate at positions of different radii. As a result, radius can be infinitely changed, and uniformity and smoothness of transmission is assured. A number of infinitely meshing device units 148 that can perform infinitely changing radius in phase with the driving belt are disposed coaxially in the opposing inner space between the two conic discs. The infinitely meshing device unit comprises a unit carrier and an infinitely meshing body. The meshing body meshed with the convex and concave meshing teeth on the inner side of the driving belt so as to implement transmission via infinitely meshing to assure sufficient transmission power and efficiency. That is, it is realized that the member to confine the radius and lock the speed ratio (the member to stabilize the radius and determine the speed ratio, for instance, the primary function effect of the transmission via frictional contact between the driving belt and the conic disc is to stabilize the radius and determine the speed ratio) and the member to transmit power (the meshing unit member, for instance, the primary function effect of meshing of SSs with the inner teeth of the driving belt in the meshing device unit is to transmit power) are disposed separately. The operations of infinitely changing radius and infinitely meshing are separately, while the effects are combined to reach the ideal continuously variable shifting of a meshing type which is accurate, uniform, smooth and highly efficient.

Many manners may be employed to design the infinitely meshing device unit 148, such as a SS variable-tooth meshing manner, a manner via magnetorheological fluid/electrorheological fluid, an infinitely meshing manner via a worm/worm rack, and an infinitely meshing manner via sliding-blocks, etc. These manners will be described in detail later.

Figs. 47, 48, 49, 50 and 51 show a transmission of a SS variable-teeth meshing type and its components. The infinitely meshing device unit 148 comprises a meshing unit carrier 155 (or a beam for a SS holder. This is a special term used herein) and a SS group constitutive of several SSs (including sliding-blocks). Now the SS group is the meshing body to infinitely mesh with the driving belt 151 for transmitting power. Two idler wheel (this is the case shown in this figure), or one idler wheel 152, or drum-like idler wheel(s) can be provided on the beam for a SS holder. Under the SS groups, there are provided stop seats 153 for SS holders and returning springs 154 (the returning spring can be classified into a flat spring and a corrugated spring. A flat spring makes the distribution of the force acting upon the SSs be uniform, and a corrugated spring provides a larger returning elastic force. A returning spring ring similar to such a ring can also be added to the foregoing SS variable-tooth gear), referring to the enlarged drawing viewed from left in Fig. 51. There may be provided a rolling bearing or a sliding bearing between rollers and the rotation shaft, or even the sliding motion is implemented directly by lubricating contacts without providing rollers. On the conic disc 147 are provided several radial rails 146 which match the orientation of the generatrix of the conic disc. These rails cooperate with the idler wheels of the respective meshing unit carrier 155 so as to form a translation pair coupling. During high speed operations, each meshing device unit undergoes radial centrifugal motion under the centrifugal force, therefore a centrifugal pressing effect is generated upon the conic disc 147 due to the constraining reaction force component of the radial rails 146, such that the conic disc is pressed and centrifugal pressing is generated. This pressing force is transmitted to the driving belt 151, and a centrifugal stretching effect is generated such that the driving belt operates at a stable radial position and implements, together with the meshing body, i.e., the SS groups of the meshing device unit, infinitely meshing. In this way, it is assured that such a mechanism can work stably and reliably. Refer to Fig. 56 for its meshing and transmitting principle. The direction of the hollow arrow in Fig. 48.1 indicates the assembly direction of each infinitely meshing device unit. In order to improve the load capacity, a sliding-block (a thicker SS) may be add to a SS group, as shown in the enlarged drawing view to the left in Fig. 51. Generally speaking, if the direction of the force acting upon the SSs is to the left, one sliding-block should be installed at the left side, and vice versa. And if the SSs are acted by forces in two directions under rotation, then one sliding-block may be installed at each side.

The CVT shown in Fig. 49 employs a metal pressing belt. Its main difference from the prior art metal belt is the teeth on its inner side. Its particular construction is such that the metal belt is composed of metal rings 159, metal blocks of a fill type 160, and metal blocks of a meshing type 161. The metal blocks of a fill type and the metal blocks of a meshing type are alternately superposed to form a metal belt with teeth on its inner side, referring to Figs. 52, 53 and 54. (Note that for convenient illustrations in the following Fig.58, a metal block 158 is a general designation for a metal block of a fill type 160 and a metal block of a meshing type 161.) The force-receiving portion of the metal block is an arc surface, and the direction of the pressing force passes through the center of this arc. Roll-over will not occur. The roll-over angle is determined by the bisector angle to the curvature of the conic disc surface.

Fig. 55 is a schematic view of a synchronous metal belt of a hole-meshing type. The whole driving belt is constructed by closely superposing multiple layers of metal rings with holes therein. All holes correspond one by one so as to form rectangular holes for SSs to insert therethrough. This driving belt is equivalent to the metal ring belt with teeth on the inner side. In operation, the SSs mesh with the rectangular holes so as to implement transmission.

In Fig. 56, the SSs seat on the guiding arc plate 194. Actions may be executed to assist the SSs in seating so as to suppress the impacts of the SSs on the tooth surfaces during meshing. Lubrication, a rolling contact manner, airflow floating (micro holes for airflows may be provided on the guiding arc plate), fluid oil-film, and the like may be employed to decrease wearing and drag. In this way, the noise and the impact of SSs on the surfaces of teeth and grooves during SSs' high speed meshing can be greatly decreased, and their life endurance is extended.

Fig. 57 is a schematic view of other modes of transmissions of an operation separated and effect combined type. As compared with the foregoing transmissions of the operation separated and effect combined type, the difference of this type of transmissions lies in the fact that the radial rail for constraining the infinitely meshing device unit 148 is different. In Fig. 57.1, the whole interior of the conic disc is excavated such that the outer wall surface 164 of the conic disc and the inner wall surface 165 are conic surfaces similar in their orientations. Then several sliding grooves 166 are notched on the conic surface along its generatrix. See the drawing viewed from A-direction for the assembly relationship of the meshing device unit and the conic disc. In Fig. 57.2, the radial rail is a cylindrical guiding groove 168. Corresponding cooperation between the meshing device unit and the cylindrical guiding groove employs a cylindrical rolling translation pair 167. See the drawing viewed from B-direction for the assembly relationship. The function of a stretching spring 163 is to assist in stretching, and it is only provided in the driven shifting disc. At the rest state, the stretching spring assist in constraining the conic disc, and can maximize the starting torque of the driven disc during the next starting.

Fig. 58 is a view for illustrating the principle of eliminating a gap between metal blocks on the slack side of the pressure belt. As shown in this figure, when the driving conic disc 169 and the driven conic disc 171 rotate clockwise, the lower portion is the slack side of the pressure transmission belt. There is a minute gap between the metal blocks, which will cause the metal blocks to vibrate after entering the driving conic disc 169 to transmit power. This phenomenon is very severe in particular in the prior art metal belt CVT in which transmission is implemented only by friction and the pressing force is large, and is the important reason for wearing metal blocks. At the same time it also results in decrease of the transmission efficiency. As shown in this figure, this problem is solved by adding a device for eliminating a gap between metal blocks on the slack side. This gap-eliminating device comprises an urging wheel 172, a pinion 173, a driving wheel 174, a large gear 175, and a clamping mechanism 176, and the like. The urging wheel and the driving wheel are both pressed firmly onto both sides of the metal belt (a pressure belt) 170. The urging wheel is fixedly coupled to the pinion, the driving wheel is fixedly coupled to the large gear, and the pinion and the large gear maintain meshing for transmission. Clearly, the driving wheel rotates due to the frictional traction of the metal belt. And after the speed is increased by means of the large gear and the pinion, the urging wheel is driven to rotate. Since the rotary speed of the urging wheel is larger than that of the driving wheel, and the circumferential speed of the driving wheel is equal to the translation speed of the slack side of the metal belt, the circumferential speed of the urging wheel is larger than the translation speed of the slack side of the metal belt. Therefore the metal blocks are driven to move at high speed, such that the metal blocks ahead are pressed one by one so as to eliminate the gaps therebetween. Furthermore, a motor may be employed to directly drive the urging wheel 172 such that its circumferential speed becomes larger than the translation speed of the metal blocks in contact therewith. Alternatively, the manner of directly impacting via a gas flow or fluid flow of high speed may also be employed to urge the metal blocks to accelerate so as to eliminate gaps. Such a device may be employed in the patent technique and in the prior art technique, and somehow lower the requirements on the machining accuracy of the metal blocks.

Fig. 59 is a diagram for analyzing the self-locking and wedging mechanism of the SSs. The mechanism in this figure can be analyzed in combination with Fig. 24 (and refer to the terminology of self-locking meshing). When the contact angle between the SSs and the surfaces of the meshing tooth is less than the equivalent friction angle, the SSs present the property of self-locking meshing. Such self-locking slants can increase the infinitely meshing property, and at the same time serve to wedge via centrifugal force and to make the load sufficiently uniform. To increase load capacity and to extend the endurance, a wearable adhesive layer 190 can be provided on the surfaces of the meshing teeth of the driving belt (a wearable metal paste block with high hardness or a coating of wearable materials can be adhered, or the belt base can directly undergo hardening treatment). Such surfaces of the meshing teeth have a property combining rigidity and flexibility. Its surface hardness is large and it is elastic. It can cushion compacts and suppress noises, thus its endurance becomes longer.

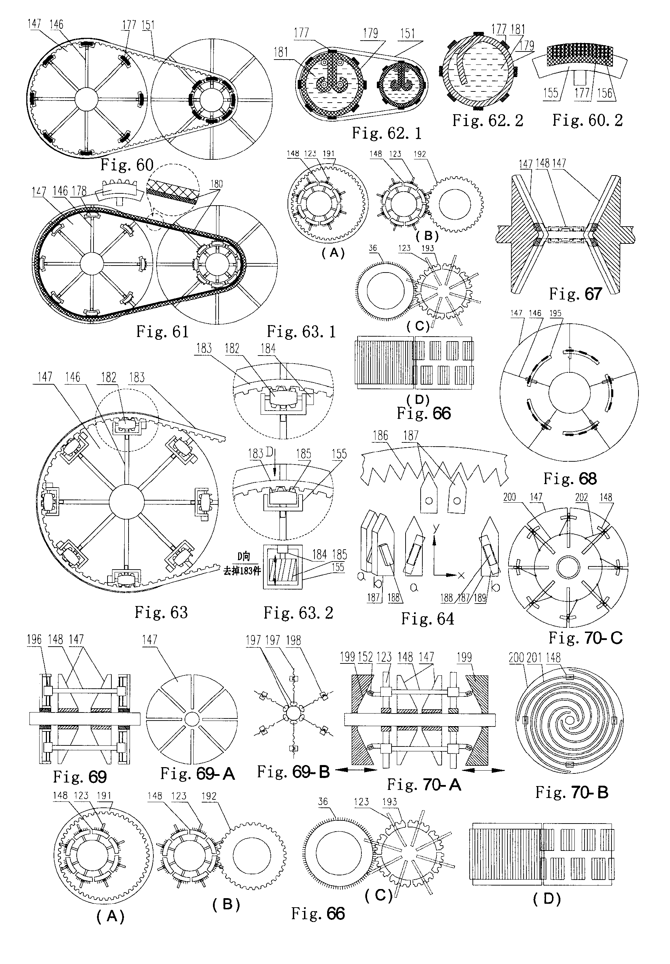

Fig. 60 is a diagram of the principle of a magnetorheological/electrorheological fluid transmission (I).

Fig. 61 is a diagram of the principle of a magnetorheological/electrorheological fluid transmission (II).

Fig. 62 is a diagram of the principle of a magnetorheological/electrorheological fluid transmission (III).

The infinitely meshing device units of this type of transmissions employ a manner via magnetorheological/electrorheological fluid to implement its functionalities. The magnetorheological/electrorheological fluids are new smart materials, which have broad prospective applications in mechanical fields. See related documents for details.

Now take the "magnetorheological fluid" as an example to conduct analyses. At the instance before meshing, there is no magnetic field, and the "magnetorheological fluid" takes a liquid form, so it can sufficiently deform in accordance with the current meshing tooth profiles. When a magnetic field is applied after meshing, the magnetorheological fluid will immediately assume a solid state and become a solid tooth profile with which it meshes. The magnetic field is removed after the meshing is released, so the magnetorheological fluid assumes a liquid state. Since the changing time of the magnetorheological property is on the order of milliseconds, the rheological frequency is about 100Hz, which suffices for the applications of 6000 rpm. In Fig. 60.2, the similar mixture and combination of materials formed by "the magnetorheological fluid" and "the electrorheological fluid" and the SS groups will present advantages in each other and display much better effects. That is, the SSs, when under the effect of forces, mix with the magnetorheological fluid, and the magnetorheological fluid assumes a solid state so as to enhance the load capacity of the SSs. At the dynamic instance when the SSs come into meshing, the magnetorheological fluid that mixes with the SSs assumes a liquid state, so that the SSs can smoothly slide and deform. Once the SSs assume a complete meshing state and stop sliding, the magnetorheological fluid mixing therewith assumes a solid state and integrates firmly with the SSs so as to form a fixed tooth profiles (which are similar to a reinforced concrete structure, and have a very strong load capacity) to transmit power. The CVT shown in Fig. 61 is composed of a driving belt/chain 180 containing magnetorheological/electrorheological fluids on the inner side, meshing bodies 178 with fixed tooth profiles, and a conic disc, etc. Magnetorheological/electrorheological fluids are provided on the inner side of the driving belt base. In other words, the meshing bodies of the infinitely meshing device unit are of fixed tooth profiles, and the profiles of the magnetorheological fluids or electrorheological fluids on the inner side of the belt base change according to the deforming of the tooth profiles of the meshing bodies 178 so as to implement infinitely meshing.

The CVT in Fig. 62 comprise a body 181 capable of infinitely varying radius via magnetorheological/electrorheological fluids, bodies 177 capable of infinitely meshing via magnetorheological/electrorheological fluids, and a soft cavity 179 for magnetorheological/electrorheo logical fluids, etc. Its operations of infinitely radius-varying and infinitely meshing are all conducted by magnetorheological/electrorheological fluids. The process of the infinitely radius-varying is implemented by infinitely changing the volume of soft cavity 179 for magnetorheological/electrorheological fluids and by "liquefaction deforming" of the magnetorheological/electrorheological fluids. Once the process of radius varying completes, the magnetorheological/electrorheological fluids then solidify and the radius is fixed. The cylinder capable of infinitely radius-varying can be constructed by this process. The process of infinitely meshing is conducted by some bodies capable of infinitely meshing via electrorheological fluids 177 on the outer circumference.

The "magnetorheological fluids" can be packed into a soft bag to mesh with the fixed teeth. In order to facilitate meshing, the fixed teeth for meshing can be manufactured into an arc shape. Furthermore, the magnetorheological fluids may also directly adhere to the surface of the smooth belt, and then mesh with the friction surface conic disc of high roughness, so as to implement the similar meso meshing transmission via meshing plus friction (i.e., a meso meshing transmission). In this way the structure is further simplified. By manufacturing the conic disc to have a friction surface and adhering the material of "magnetorheological fluid" to the side surface of the driving belt, the friction meshing traction transmission of a minute type can be realized.

In addition, this application that combines the technique of the magnetorheological/electrorheological fluids with the CVT can be incorporated into the foregoing related technique of the belt-type CVT (see Fig. 25 and related figures). Scheme A: the driving belt is the driving belt with teeth disposed on both sides, as shown in Figs. 27, 30, 31 and 32, and the magnetorheological/electrorheological fluids are arranged on the conic surface of the conic disc. Scheme B: the magnetorheological/electrorheological fluids are provided on the side surfaces of the driving belt, and the corresponding conic surface of the conic disc is disposed with convex teeth and concave grooves, similar to the conic disc tooth-and-groove wheel 42 as shown in Fig. 19. At the dynamic instances of coming into meshing and releasing from meshing, the magnetorheological/electrorheological fluids "liquefy", while in other regions they are in a "solidified" solid state.

Fig. 63 is a diagram of the principle of an infinitely meshing transmission with a worm/worm rack.

The infinitely meshing device unit of this type of transmissions employs the manner of infinitely meshing via a worm/worm rack to implement operations. See the prior art technique "high speed and large power clutch controlled via variable tooth meshing" (CN patent No. 03156755.X) for "the infinitely displacing principle of tooth profiles of a worm (the principle of infinitely constant mesh)" and "the control principle of continuously constant mesh and infinitely locking". In Fig. 61, shown in Fig. 63.1 is a type in which a worm and a worm rack mesh, wherein the worm rack indicates a driving belt/chain 183 in a worm rack toothed shape. Under the driving of a controller 184 (i.e., a controllable driving source, see CN patent No. 0315675.X), the worm 182 infinitely meshes with the driving belt/chain in a worm rack toothed shape 183 to transmit power. Shown in Fig. 63.2 is a type in which two worm racks mesh. The two worms mean a driving belt/chain in a worm rack toothed shape 183 and a worm rack 185. The tooth profile of the worm rack 185 may be regarded as the expanded tooth profile obtained by dissecting the worm along its axis. In this way rotation is transformed into translation. This is also the characteristic difference between the worm 182 shown in Fig. 63.1 and the worm rack 185 shown in Fig. 63.2. Under the driving of the controller 184, the worm 182 rotates and the worm rack 185 translates, but the purpose is the same, that is, to follow the tooth profiles of the driving belt/chain in a worm rack toothed shape 183 so as to implement infinitely meshing.

Fig. 64 is a diagram for analyzing the principle of an infinitely meshing transmission with sliding-blocks.

The infinitely meshing device unit of this type of transmissions employs the manner of infinitely meshing via sliding-blocks to implement operations. Different from the foregoing, the tooth profiles on the inner side of the driving belt 186 of this type of transmissions are triangular teeth which mesh through sliding. These teeth are capable of infinitely meshing via sliding and may automatically find the meshing points through mechanical sliding so as to mesh with tapered tooth blocks 187 via sliding. This device is of a rigid structure composed of meshing conic teeth capable of infinitely displaced meshing. The underlying concept is to change the elements coming into meshing from SSs to the tapered tooth blocks 187. The tooth blocks 187 move in the trails 189. In x direction, they may return via centrifugal forces, and in y direction, they are self-locked. In operations, the tapered tooth blocks may freely return in x direction until they reach the optimal meshing end of the triangular-tooth driving belt/chain 186 capable of meshing via sliding so as to mesh sufficiently with the surfaces of the triangular teeth. At this time, they are self-locked in y direction such that no motion in this direction occurs. In this way, power may be transmitted through this meshing state. By juxtaposing and operating two types of tapered tooth blocks, denoted by a and b, which are orientated along complementary rails, it is realized that the infinitely meshing device unit may infinitely mesh with the triangular-tooth driving belt/chain 186 capable of meshing via sliding at any point in the regions that the tooth blocks can slide, that is, the infinitely meshing process of the rigid teeth via sliding is realized.

Fig. 65 shows another solution of constraining the SSs, which is an improvement over Fig. 51. Similar to the structure shown in Fig. 46.5, the manufacture process of the meshing unit carrier 155 can be simplified.

Fig. 66 is a structure diagram of a CVT with a variable-tooth gear capable of radius varying, which is an extension from the structure shown in Fig. 40. The variable-tooth gear capable of radius varying is composed of a number of infinitely meshing device units 148. The infinitely meshing device units 148 can synchronously move in the radial direction along their respective radial sliding trail 123, respectively. Fig. 66-A is a schematic view showing the meshing state of the infinitely meshing device units 148 and an internal gear ring 191. Fig. 66-B is a schematic view showing the meshing state of the infinitely meshing device units 148 and an external meshing gear 192. Fig. 66-C is a schematic view showing the meshing state of a variable-tooth cylindrical gear and the external meshing tooth segments 193. A multiple-phase juxtaposing arrangement, as shown in Fig. 66-D, may be employed to increase power and optimize the transmission performance.

Fig. 67 is a schematic view of a conic disc without a physic spindle in the inner side. As shown in the figure, at the absence of the interference of transmission shaft between the two conic discs, the infinitely meshing device unit can move to a region of a smaller radius so as to achieve a larger transmission ratio.

Fig. 68 is a schematic view of a flexible structure carrier of meshing units. The carrier of meshing units assumes a flexible structure (a pliable structure). In operations, the carrier of meshing units can be pressed firmly onto the inner teeth of the belt so as to sufficiently mesh therewith. Its curvature may completely coincide with that of the inner side of the belt, such that the meshing performance with the inner side of the belt is improved and the meshing amount is increased. As a result, the load capacity is increased.

Fig. 69 is a schematic of a transmission of a type without a centrifugal pressing effect. The radial motion of the meshing device unit of this type of transmission is controlled by a radial synchronization controller 196. In operations, the centrifugal force poses no centrifugal pressing effect onto the conic disc 147. It suffices to notch radial through grooves on the conic disc 147 (see Fig. 69-A). Its radial synchronization controller 196 may take a screw nut structure as shown in Fig. 69-B. The nut 198 is coupled to the meshing device units 148. The synchronous motions of respective meshing device units 148 in the radial direction may be achieved by synchronously controlling the rotation angles of respective screws. Its radial synchronization controller may take the type shown in Fig. 70.

Fig. 70 shows examples of the radial synchronization controller. In Fig. 70-A, each infinitely meshing device unit 148 comes into contact with the conic surface of a recessed conic disc 199 via idler wheels 152, and the synchronous motions of respective meshing device units 148 in the radial direction may be achieved by controlling the distance of the two recessed conic discs 199 on both sides. In Fig. 70-B, the trajectory of each infinitely meshing device unit 148 is subject to the constraint of a respective corresponding spiral rail 201 with a variable radius on a radius-varying rotary disc 200, via which the synchronous motions of respective meshing device units 148 in the radial direction may be realized. In Figs. 70-C and 70-D, the respective infinitely meshing device units 148 are coupled to the radius-varying rotary disc 200 via a linkage mechanism, with the difference that the structure in Fig. 70-D employs a two-rod linkage mechanism to increase the adjustment traveling distance. The synchronous motions of respective meshing device units 148 in the radial direction may be realized by rotating the radius-varying rotary disc 200. The rotation angle of the radius-varying rotary disc 200 can be monitored in real-time by a hydraulic/or mechanic manner automatically.

Alternatively, the solution of constraining via the trajectories of idler wheels as shown in Fig. 47 may still be employed, while only any one of the meshing device units 148 is necessary to be constrained by the rail of an idler wheel (that is, there may be provided only one set of idler wheel and guiding rail groove of conic disc), and the coupling constraints among all meshing device units are connected and constrained by a synchronous radial motion mechanism. In this way it is realized that the radius are varied synchronously and equally. In addition, any other methods may be employed, as long as the meshing device units follow the internal teeth of the belt to move in the radial direction synchronously so as to assure reliable meshing. Therefore the infinitely meshing device units 148 can be inserted into the conic body to transmit torque without providing any assistant constraining devices (as shown in Fig. 72, the T-shaped groove shown in Fig. 50 is changed to a rectangular groove to cooperate with the infinitely meshing device units). So the radius is freely varying in the radial direction, and the driving belt 151 directly imposes a slave radial dimension constraint on the respective meshing device units 148. As a result, the structure can be simplified and the meshing with the teeth on the inner side of the belt is firmer. However, at this time, it is required that the belt base have a good strength and be in a high stretching state, otherwise the polygon effect will occur. Furthermore, in the non-enveloping zone of the belt base, the radial dimensions of the SSs cannot be constrained by the belt base. Therefore, all the infinitely meshing device units on the same conic disc should be coupled to each other by a synchronous radial motion mechanism such that all infinitely meshing device units move in the radial direction synchronously. For example, the synchronous constraint in the radial direction may be implemented by coupling the linkage mechanism to the radius-varying rotary disc 200. At this time, it is not necessary to control the radius-varying rotary disc 200 from outside; alternatively, a similar structure shown in Fig. 69-B may be employed, but the screw nut mechanism is not self-locking in either directions. By the joint of the conic gear mechanism 203, all screw nuts move synchronously so as to implement the synchronous radial constraints.

Fig. 71 shows another embodiment of the radial synchronization controller. In this type of devices, it is possible that the infinitely meshing device units 48 are not constrained by means of the radial rails 146 on the conic disc 147. In this case, it is not necessary to notch radial rail grooves on the conic disc 147, so the machining process is simple and the strength is high. However, the structure shown in Fig. 72 may also be employed for the purpose of improving the performance of transmitting torques and radial guiding.

Fig. 72 is a structure diagram of a conic disc with rectangular grooves. In the conic disc 147, the T-shaped groove shown in Fig. 50 is changed to a rectangular groove to cooperate with the infinitely meshing device units, only for transmitting torques and providing radial guiding.

Fig. 73 is a structure diagram of a transmission of the type containing a central guiding and restraining disc. In this scheme, a central guiding and restraining disc 204 is disposed between the two conic discs 147, such that good performance of transmitting torques and radial guiding are achieved and it is not necessary to notch radial rail grooves on the conic disc 147 so as to assure a good transmission performance. The central guiding and restraining disc 204 shown in Fig. 73-A is of a flat disc type; the central guiding and restraining disc 204 shown in Fig. 73-B is of a double-sided conic disc type; and Fig. 73-C illustrates an example in which a radial synchronization controller is provided in the center of the central guiding and restraining disc 204. As shown in the figure, the controller is a screw nut synchronization controller. The nuts are coupled to the infinitely meshing device units 148. The synchronous radial motion control on the infinitely meshing device units is implemented by synchronously rotating the screws.

Fig. 74 is a structure diagram of a separating device via electromagnetic tractions. For the purpose of improving the speed-adjustment performance, the infinitely meshing device units 148 may be separated from the inner meshing teeth of the driving belt 151 at the instance of speed adjustment. Shown in this figure is a separating SS device via electromagnetic tractions, wherein the conic disc in the right side employs a combination structure composed of split parts, comprising an inner conic disc 147 and an outer conic disc casing 205 with some axial spacing therebetween and can move under the effect of an electromagnetic sucking disc 206. Normally the electromagnetic sucking disc 206 does not operate, and the inner conic disc 147 and the conic disc of the outer conic disc casing 205 are superposed, so that the infinitely meshing device units 148 at this time mesh with the inner meshing teeth of the driving belt 151 (as shown in Fig. 74-A). When the electromagnetic sucking disc is energized to work, the inner conic disc 147 is separated from the conic disc of the outer conic disc casing 205, so that the infinitely meshing device units 148 at this time disengages from the inner meshing teeth of the driving belt 151 (as shown in Fig. 74-B). Furthermore, a hydraulic, pneumatic manner may be substituted for the electromagnetic sucking disc to provide traction forces.

For the case in which the meshing bodies of the infinitely meshing device units are SS variable-tooth meshing devices, the radial displacements of the SSs can be controlled independently so as to decrease the required traction strength. For example, the separation of the infinitely meshing device units from the inner meshing teeth of the driving belt may be realized only by controlling the seating of the SSs. As illustrated in Fig. 75 which shows an electromagnetic traction controller for seating SSs, the electromagnetic sucking disc 206 controls the stop bars 207 against returning and seating of the SSs, and the SSs are seated through electromagnetic forces, after which a convenient speed adjustment can be implemented.

Fig. 76 shows a mechanic traction controller for seating SSs. When it is necessary to separate the SSs from the inner meshing teeth of the driving belt, the seating control disc 209 is rotated, and a cam 208 is entrained by an idler wheel 152 mechanism to rotate, and further urges the stop bars against returning and seating of the SSs 207 to move, so as to seat the SSs to achieve the separation of the SSs from the inner meshing teeth of the driving belt.

Fig. 77 is a diagram showing the structure of a separated type with single-direction meshing teeth. As shown in the figure, the inner meshing teeth of the driving belt 151 is divided into two halves, with one half being mainly used for meshing with the SSs of the input conic disc, and the other half being mainly used for meshing with the SSs of the output conic disc, so that the tooth surfaces in each half can be designed to be single-direction tooth surfaces (as shown in figures). Accordingly, at this time the corresponding SSs should be divided into two sets (as denoted by a and b in Fig. 47, the driving disc may be provided with SSs in the SS holders only at the location a, and the driven disc may be provided with SSs in the SS holders only at the location b), thus the SSs may, at the time of adjusting the speed, freely displace with respect to the single-direction meshing tooth surfaces at one side of the single-direction slidable tooth surfaces, so as to realize staggered displacements of the circumferential dimensions at the time of radius varying and to improve the readiness and the convenience of speed adjustment.

Fig. 78 is a CVT with a meshing type steel ring. A steel ring 210 with meshing teeth on the inner side substitutes for the flexible driving belt to implement power transmission. Its structure is similar to the prior art CVT of a steel ring type, with the difference that the power transmission is mainly implemented by the meshing between the inner meshing teeth of the steel ring and the infinitely meshing device unit. Multiple phases may also be provided to work in parallel so as to increase power and optimize the output performance.

Fig. 79 shows a CVT of a type in which steel needles and steel sheets mesh, which is characterized by the fact that the infinitely meshing is implemented by interposing the steel needles 211 and steel sheets 212 into each other. As shown in the right figure, the steel needles 211 are disposed throughout the inner side of the belt, and the steel sheets 212 are provided throughout the outer side of the wheel. The infinitely meshing is implemented by interposing the steel needles 211 and steel sheets 212 into each other, such that the structure is simple and the cost is low, therefore it can be applied in normal applications.

Fig. 80 shows an infinitely meshing transmission with fluid deformable at a fixed volume. Its infinitely meshing device unit is a deformable meshing unit 213 that is closely filled with fluid and has a fixed volume. The infinitely meshing is implemented by meshing with the inner teeth of the driving belt 151 through the deformable property of the fluid at a constant volume. Such fluid may be magnetorheological fluid.

Fig. 81 is a structure diagram of a Mode A transmission which has been put into practice. This transmission is composed of a Mode A main wheel body (I), a Mode A main wheel body (II), a Mode A assistant wheel body, Mode A support SSs, and Mode A SSs, etc. Refer to the foregoing for its operation principle.

Fig. 82 is a structure diagram of a Mode B transmission that has been put into practice. This transmission is composed of a Mode B main wheel body, a Mode B assistant wheel body, Mode B SSs, a nut fork, and a speed adjustment guiding sleeve, etc. Refer to the foregoing for its operation principle.

The SSs and the sliding-needles can return under the effect of gravity, attraction force, repellent force, elastic force, spring force, electromagnetic force, centrifugal force, inertial force, hydraulic pressure, gas pressure, flow impact force from gas, and liquid, etc. For example, in the manner of returning under electromagnetic force, the electromagnet itself may be stationary, and magnetic induction is utilized to constrain and return the moving SSs. This manner of returning under electromagnetic force has such advantages as good controllability (it is convenient to realize automatic meshing and disengaging via control) and high reliability (free of the influence from gravity).

A series of transmissions can be derived from equipping the transmission herein with other stepped transmission , so that a broader shifting range and a larger load power can be achieved.

"The principle of infinitely deforming variable-tooth via SSs" can be utilized to direct the designs of speed shifting. The techniques disclosed in such descriptions as its theoretical models, embodiment models, schematic views, structure diagrams, specific embodiments, etc. can be used to concretely design various types of transmissions. The embodiment mechanisms illustrated in the present patent are all typical examples. Not all embodiment mechanisms have been particularized in this description. This technique of the SS variable-tooth gear can be applied to all prior art CVTs to transform their friction driving into meshing driving. All other types of CVTs may employ this principle of a deforming variable-tooth via SS to implement infinitely meshing transmission. All the technique solutions that utilize the technical domain of any models, mechanisms, components disclosed herein, cross re-combinations thereof, inter-collocations thereof, combination mechanic schemes thereof, and the embodiments thereof in various application fields shall fall within the scope of the invention. All conducts that employ this speed shifting principle to the designs of speed shifting and for applications without permission of the applicant are infringements of the invention.

The concept of "a variable-tooth gear" proposed herein is a term specific for the present patent. It bears no pertinent purview relationship with the prior art "speed reducer via variable-tooth transmission".

The accompanying drawings only aim at briefly illustrating the conceptive constructions and the principle structures of the patent, and intend to display the disclosure clearly and expressly and to describe the important structures with the least figures. Therefore expressions are given in a manner that brief illustrations and detailed descriptions are combined in an organized manner, in other words, the schematic figures and the detailed figures are drawn in combination. At the same time, views from other directions, cross sectional views or enlarged views are not given with regard to the similar structures, for the purpose of reducing the number of figures. Furthermore, standard members, general members, and component without specific significances or without specific functionalities, for example, an input shaft and an output shaft, etc., are denoted by the same terms and reference numerals throughout the description so as to be succinct and clear. Cross references should be made upon reading the drawings.

## Claims

1. An infinitely meshing variable-tooth gear with slidable-sheet formed teeth (SSFT), **characterized in that**, it consists of a gear body and a plurality of slidable-sheets (SSs) provided in the gear body; wherein the SSs can freely slide so as to form a tooth profile of any shape.

2. The infinitely meshing variable-tooth gear with SSFT according to claim 1, **characterized in that**, at least one SS holder is provided in the gear body of the variable-tooth, and the SS holder is a support SS holder or a fill SS holder; and according to its arrangement manner, the SS holder is classified into a spaced type or a continuous type, where the spaced type is constituted by the SSs being arranged at intervals, and the continuous type consists of alternately arranged support SS holders and fill SS holders;
said SSs are arranged in the SS holders; a SS assembly is at least formed by a ring of SS groups that are classified into the spaced type and the continuous type; the ring of SS groups consists of a plurality of SS groups each being formed by a plurality of effect-equivalent SSs attached together; rings of SS groups comprise a spaced type ring of SS groups, wherein each SS group consists of SSs of the same type, and a continuous type ring of SS groups, which is formed by combining alternately arranged SSs of different types, including "the support SS groups" and "the fill SS groups"; the SSs comprise support SSs and fill SSs, respectively placed in support SS holders and fill SS holders disposed alternately, thereby constituting a complete ring of SS groups having independent function, and the same variable-tooth gear having a plurality of rings of SS groups is referred to as a multiple-ring variable-tooth gear; the SSs can freely move within a certain range in the respective SS holders, and the tooth profile of any shape can be formed by the free movement of the SSs;
the sliding trajectory of the SSs can be classified into a type of returning in a same direction and a type of returning in an oblique direction; can be classified into a spur SS type and a bevel SS type, according to the arrangement orientation of the SSs; can be classified into an outside support type, an outside interaction crossing support type, a central support type, a central interaction crossing support type, an outside and central double support type, and an outside and central interaction crossing support type, according to the embedding and inserting manner of the SSs into the gear body and the manner of the gear body with respect to position, support and stop of the SSs; can be classified into returning types via gravity, attraction force, repellent force, elastic force, spring force, electromagnetic force, centrifugal force, inertial force, hydraulic pressure, gas pressure, flow impact force from gas and liquid, etc., according to the types and forms of the returning driving forces acting on the SSs; and can be classified into free returning SSs and passive returning SSs;
the constraining device for the SSs is stop legs (25) for the SSs or is an outer constraining ring (23), wherein there can be one or two stop legs for the SS; the stop leg for a SS is of a convex type or a concave type, alternatively, a constraining ring, string or rod can be inserted through a hole which is punched in a SS to carry out constraining;
the variable-tooth gear can be classified into a spaced type variable-tooth gear and a continuous type variable-tooth gear according to the arrangement of SS groups in a ring of SS groups; can be classified into a single-ring variable-tooth gear and a multiple-ring variable-tooth gear according to the number of the rings of SS groups contained in one single gear; can be classified into a variable-tooth gear of a returning in a same direction type and a returning in an oblique direction type according to the sliding trajectories of the SSs; can be classified into a spur SS variable-tooth gear and a bevel SS variable-tooth gear according to the properties of the profiles of the SS meshing teeth; and can be classified into a combination type, a layered combination type and a single-piece type according to the structure of the gear body;
said infinitely meshing variable-tooth gear with SSFT is a variable-tooth cylindrical gear configured by superposing two halves, each half consisting of restraining wall surfaces for support SSs and fill SSs, positioning and supporting stop bosses, centrifuge-restraining wall surfaces for SSs, SS retracting seat restraining surfaces, and a superposing surface of a wheel and a disc, etc. the two halves constituting a complete gear body when superposed to each other, and the SS restraining wall surfaces, the positioning and supporting stop bosses, the centrifuge-restraining wall surfaces for SSs, and the SS retracting seat restraining surfaces being superposed so as to form a ring of SS holders;
alternatively, said infinitely meshing variable-tooth gear with SSFT is a variable-tooth conic gear configured by a variable-tooth conic gear body (39) and an assistant wheel body (I), two rings of SS groups being symmetrically arranged on both sides of the variable-tooth conic gear body (39), with the ring of SS groups being composed of the SSs specialized for the variable-tooth conic gear, each of the two sides of the variable-tooth conic gear and one assistant wheel body (I) in combination forming a ring of SS holders, in which a ring of SS groups is disposed; or, the variable-tooth conic gear is composed of a variable-tooth conic gear body of a vane wheel shape and an assistant wheel body (II), the SSs employing SSs of the type in which both sides integrally operate; or, the variable-tooth conic gear can be dispensed with one of its two symmetric halves to form a variable-tooth conic gear of a single-ring bevel type;
alternatively, said infinitely meshing variable-tooth gear with SSFT is a multiple-ring variable-tooth conic gear comprising a multiple-ring variable-tooth gear (62), a wheel basic body (63) and a SS assembly; the SS assembly is a SS assembly of a multiple-ring spaced type, with all SSs being the single and same type of SSs specialized for the variable-tooth conic gear, the SSs of the same type being arranged at intervals to form a ring of SS groups, a plurality of rings of SS groups of different radii constituting the whole SS assembly of a multiple-ring spaced type; wherein the SSs can be regularly arranged or arranged in a staggered manner;
alternatively, the multiple-ring variable-tooth conic gear is of a structure of a layered combination type, being composed by combining a plurality of layered wheel bodies and a wheel base body (II); the layered wheel bodies can be classified into the wheel body specialized for the SSs with two stop legs and the wheel body specialized for the SSs with one stop leg;
alternatively, the multiple-ring variable-tooth conic gear is of a one-piece structure, installation holes (72) for embedding the SS holders are trepanned at the positions of its working surfaces corresponding to the arrangement locations of the SS groups, the SS groups are fitted in groups into each separate free SS holder (71), the free SS holders (71) are fitted into the installation holes (72) for embedding the SS holders, either by means of interference fitting, thermal fitting or weld fitting; or by means of thread fitting, the screw coupling surfaces of the SS holders (71) and the installation holes (72) are threaded surface; the installation holes (72) can be quadrate holes or circular holes; or by means of clearance fitting, the returning trajectories of the SSs can be a type of "returning in a same direction" or a type of "returning in an oblique direction";
alternatively, the multiple-ring variable-tooth conic gear can employ a principle of arranging the wide and narrow SSs in a staggered manner so as to densely arrange the SSs throughout the disc;
the variable-tooth conic gear of a small taper can be classified into a parted type structure and a one-piece type structure, comprising a continuous type, wherein the SS groups are superposed without gap therebetween and the rings of SS groups are composed by alternatively arranging the same type of SS groups at intervals; and a spaced type, wherein there are gaps between the SS groups and the rings of SS groups contain SS groups of the same type; "a staggered relaying" manner or a non-staggered manner can be employed to arrange the SSs; or the variable-tooth conic gear of a small taper takes a structure of "one-piece multiple-ring variable-tooth gear", installation holes for embedding the SS holders are trepanned at the positions of its working surfaces corresponding to the arrangement locations of SS groups, the SS groups are fitted in groups into each separate free SS holder, and the free SS holders are fitted into the installation holes for embedding the SS holders;
a variable-tooth flat disc gear of the type of returning in an oblique direction is composed by a variable-tooth gear body of the type of returning in an oblique direction, and an assistant flat disc wheel body of the type of returning in an oblique direction; the returning trajectories of the SSs are arranged to form an angle with the direction of the returning forces;
a variable-tooth inner conic disc gear of the type of returning in an oblique direction is composed by a variable-tooth gear body of the type of returning in an oblique direction and an assistant inner conic wheel body of the type of returning in an oblique direction; the returning trajectories of the SSs are arranged to form an angle with the direction of the returning forces;
a single-ring SS wheel of the type returning via elastic force: through channels are made on the flat disc to form a single-ring SS holder ring into which SSs are disposed;
a multiple-ring SS wheel of the type returning via elastic force: through channels are made on the flat disc to form multiple-ring SS holder rings into which SSs are disposed;
a multiple-ring SS conic wheel of the type returning via elastic force: through channels are made on the double-sided conic disc to form multiple-ring SS holder rings into which SSs or sliding-needles are disposed;
the arrangement of the SS holders can be a normal type and a staggered relaying type;
alternatively: sliding-needles are disposed in the SS holders (may also referred to as sliding-needle holders) which can be rectangular, circular or sector in shape;
the constraining wall surfaces and the positioning and supporting stop bosses of all the variable-tooth gears and the SS wheel bodies are of an outside support type, an outside interaction crossing support type, a central support type, a central interaction crossing support type, an outside and central double support type, or an outside and central interaction crossing support type.

3. The infinitely meshing variable-tooth gear with SSFT according to claims 1 or 2, **characterized in that**, a SS variable-tooth gear can mesh with a disc having convex teeth and concave grooves for meshing and a tooth-and-groove bench to implement infinitely meshing transmission and realize continuously variable shifting and continuously clutching, so as to manufacture a CVT and a SS clutch;
its key components include an infinitely meshing variable-tooth gear with SSs, a tooth-and-groove wheel and a tooth-and-groove meshing ring,
a CVT with a variable-tooth cylindrical gear: the input shaft is coupled to the tooth-and-groove wheel, the variable-tooth gear is coupled to an output shaft via guiding splines or splines, the variable-tooth gear can freely move in the axial direction while transmitting torques, thereby continuously varying the meshing radius with the tooth-and-groove wheel to perform continuously variable transmission; an electromagnet or a permanent magnet can be provided on the tooth-and-groove wheel disc or at a place corresponding thereto so as to induce magnetic forces onto the SSs to make them return, or a permanent magnet or an electromagnet can be provided inside the variable-tooth gear, all SSs are permanently magnetized or electro-magnetized so as to be moved outwards via repellent forces to implement returning; alternatively, returning can be performed via the magnetic induction interactions between the magnetic field and the inducing current induced by the movement of SSs in the magnetic field (or alternate electromagnet field); alternatively, the generation device which generates the returning driving forces for SSs can be stationary and does not participate in motion, the electromagnet itself can be stationary and does not follow the tooth-and-groove disc to move, the SSs can be attracted to return by magnetic induction; (as for returning via electromagnetic forces) the design radial dimension of free centrifugal returning at the state of SSs separating from the gear wheel can be larger than, equal to, or smaller than the returning radial dimension when meshing with the tooth-and-groove wheel; a central recess (9) can be provided at the center of the tooth-and-groove wheel; the distance between the grooves of the tooth-and-groove wheel can be or can not be a multiple of the distance between the SS groups; a lubricant hole (or a lubricant slit) can be provided on the wheel body, the inside of the wheel body can also be designed as a structure of a centrifugal pump, a friction traction ring (22) can be provided at the outer edge of the variable-tooth gear, the friction traction ring can be made of elastic materials such as rubber; an non-closed outer constraining ring for SSs (23) can be disposed on the outer circumference of the variable-tooth gear, an arc-shaped transition guiding zone (24) can be designed in the direction that faces the SSs' rotations into the constraining ring so as to improve the operation reliability, now the SSs can be dispensed with the stop legs, the SSs can also be replaced by sliding-needles; alternatively, a stress-suppressing pad layer (26) can be attached to the bottom of the concave grooves of the tooth-and-groove disc, which pad is generally made of elastic and soft filling materials, such as spray coating rubber materials, etc.;
a multiple-shift speed transmission with a variable-tooth cylindrical gear, **characterized in that** , the tooth-and-groove disc is of the type specialized for stepped transmission, after the pattern of teeth and grooves are optimized for each segment and for each step, the distribution of the tooth profiles of the tooth-and-groove disc is made regular, shuttle-shaped teeth can be staggered or uniformly arranged in the radial direction; or a shuttle-shaped gear (30) can replace the SS variable-tooth gear to implement meshing transmission via fixed meshing teeth with a shuttle-shaped toothed disc (31);
a constant mesh multiple-speed transmission comprises a concentric toothed disc with multiple cones (32), transmission shaft (33), conic gear (34), a reverse-shifting gear (35), the concentric toothed disc with multiple cones (32) is configured by concentrically arranging a plurality of conic gears of different radii, the conic gear at each radius has its respective conic gear which keeps constant mesh therewith, a synchronous meshing shifting manner containing a synchronizer locking ring and a coupling sleeve, or an electronically or hydraulically controlled clutch, or the shifting device of the SS clutch in this patent is employed by the conic gear and its respective transmission shaft to implement stepped or automatic speed shifting;
alternatively, in a combination design of multiple-phase sets a parallel coupling can be employed to increase power, or a series coupling can be employed to increase transmission ratio; the multiple-phase variable-tooth gear arranged in the manner of parallel coupling can be distributed according to the progressive differential principle; the two sides of the SS variable-tooth gear can mesh with the tooth-and-groove disc so as to output power in shunt; or a type with a single tooth-and-groove disc and transmitting at both sides of the variable-tooth gear can be employed;
a CVT with variable-tooth conic gear: its key components include conic disc tooth-and-groove wheels (42) and a variable-tooth conic gear (43) and the like; other components include a shifting lever (44), a sun gear (45), a planet gear (46), an output shaft is fixedly coupled to the conic disc tooth-and-groove wheel to introduce power flow, two conic disc tooth-and-groove wheels are symmetrically disposed to sandwich a double-ring variable-tooth conic gear therebetween, the two conic disc tooth-and-groove wheels mesh with the double rings of the SSs of the variable-tooth conic gear, respectively, so as to implement meshing transmission to output power; the variable-tooth conic gear and the planet gear 46 are concentrically fixedly coupled, and are coupled to a planet bracket via a rotary pair, the rotary axis of the planet bracket is concentric with the sun gear and the output shaft, the planet gear meshes with the sun gear, and the sun gear is fixedly coupled to the output shaft;
alternatively: the conic tooth-and-groove wheels serve as "a shifting and displacing wheel" fixedly coupled to the planet gear;
alternatively: the shifting assistant mechanism can be of other types;
alternatively: the variable-tooth conic gear is replaced with a variable-tooth flat disc gear of the oblique returning type, the conic disc tooth-and-groove wheels are replaced with flat disc tooth-and-groove wheels; the meshing type therebetween can be of an inner meshing type or an outer meshing type;
the pressing force between the tooth-ant-groove wheels and the variable-tooth gear can be very small or even nil; or the tooth-and-groove wheels and the variable-tooth gear do not contact with each other, with spacing therebetween, and the meshing transmission is completely implemented by returning SSs;
alternatively: a structure of a single conic disc tooth-and-groove wheel and a single-ring variable-tooth conic gear, or an arrangement of "two variable-tooth conic gears sandwiching the double-sided conic disc tooth-and-groove wheels in the opposite directions" can be employed to perform transmission;
a planet conic disc variable-tooth gear CVT: the conic disc tooth-and-groove wheel (42) serves as a sun gear, with a plurality of variable-tooth conic gears arranged on its circumference as planet gears, the outer sides thereof mesh with a large tooth-and-groove wheel of an inner meshing type (48), so as to constitute a transmission structure of a planet conic disc type; in addition, an inner meshing single-stage transmission can also be employed, with the variable-tooth conic gear (43) meshing with the large tooth-and-groove wheel of the inner meshing type (48);
the shifting and transmission structure of the variable-tooth gear can be: a variable-tooth conic gear meshing with a tooth-and-groove wheel of an inner meshing type to implement transmission; a variable-tooth conic gear meshing with a tooth-and-groove wheel of an outer meshing type to implement transmission; an oblique returning variable-tooth gear of a flat disc type meshing with a tooth-and-groove wheel of an outer meshing type to implement transmission; an oblique returning variable-tooth gear of an inner conic disc type meshing with a tooth-and-groove wheel of an outer meshing type to implement transmission; a tooth-and-groove wheel of a flat disc type meshing with a variable-tooth conic gear; a variable-tooth conic gear with a small taper meshing with a tooth-and-groove wheel of an outer meshing type to implement transmission, wherein: B in the meshing manner of the variable-tooth conic gear with the tooth-and-groove wheel, the meshing curvature and orientation match; a conic disc tooth-and-groove wheel with a small taper meshing with a variable-tooth conic gear; wherein the conic disc tooth-and-groove wheel with a small taper is a hollow tooth-and-groove wheel having meshing teeth and grooves on the inner and outer conic surfaces, and can mesh in the inner side with the variable-tooth conic gear or mesh in the outer side with the variable-tooth conic gear;
a multiple-disc type transmission: by alternatively superposing a plurality of variable-tooth conic gears with large tapers and the tooth-and-groove wheels of large tapers, their meshing points can be designed in accordance with the progressive differential principle;
alternatively: the generation device which generates the returning driving forces for SSs can be stationary and does not participate in motion, for example: the electromagnet itself can be stationary and does not follow the tooth-and-groove disc to move, and the SSs can be attracted to return by magnetic induction;
a belt type CVT with a multiple-ring variable-tooth conic gear: being composed of two pairs of multiple-ring variable-tooth conic gears, the rotational shafts of which are parallel, with sandwiching a driving belt, the distance between the convex and concave meshing grooves of the driving belt and the distance between the SS groups can be designed in accordance with "the progressive differential principle";
a belt CVT of returning via elastic nipping force type: the SS holders are formed by making through channels on the double-sided conic disc, a multiple-ring SS conic wheel of returning via an elastic force type is formed by placing the SSs or sliding needles into the holders, these holders are arranged by disposing, according to the principle of the convex and concave portions opposing each other, two belts with opposing teeth and grooves arranged on the two working side surfaces thereof, in the way that the driving belts' convex teeth and concave grooves are opposed to each other, the SSs are urged to slide transversely, and therefore implement returning via elastic forces, so as to implement the meshing transmission of the conic wheel and the belt; the overall layout of the conic wheel and the driving belts: the two driving belts are stretched by the two set of SS conic wheel assemblies, the rotation shaft of which are parallel, to implement power transmission, each set of SS conic wheel assembly comprises a double-sided conic disc, two support conic discs, and the driving belt consists of two clipping tooth-and-groove belts with convex teeth and concave grooves arranged on the working side surfaces thereof;
a wheel CVT of returning via elastic nipping force type: consists of a pair of conic disc tooth-and-groove wheels and a single-ring SS wheel of returning via elastic force type sandwiched by the opposing convex teeth and concave grooves of the conic disc tooth-and-groove wheels, the single-ring SS wheel of returning via elastic force type comprises a SS wheel body for translations, fill SSs of returning via elastic force type and support SSs of returning via elastic force type; and it can be classified into an inner meshing type and an outer meshing type;
a transmission in which the flat disc type tooth-and-groove wheel oppositely clips SSs of returning via elastic force type: comprises a pair of flat disc tooth-and-groove wheels and a single-ring SS wheel of returning via elastic force type, with the single-ring SS wheel being sandwiched by the opposing convex teeth and concave grooves;
transmissions of a small taper variable-tooth conic gear series: the input variable-tooth conic gear and the output variable-tooth conic gear are arranged conversely, the two variable-tooth conic gears are coupled by an inner meshing cylindrical tooth-and-groove ring with meshing teeth and grooves on the inner surface to implement continuously variable shifting; or, the two variable-tooth conic gears are coupled by a conic tooth-and-groove ring with meshing teeth and grooves on both the inner and outer surfaces to implement continuously variable shifting; or: the two variable-tooth conic gears are coupled by an inner meshing cylindrical tooth-and-groove ring with meshing teeth and grooves on both the inner and the outer surfaces to implement continuously variable shifting;
alternatively: the input variable-tooth conic gear and the output variable-tooth conic gear are arranged in the same direction, the type of an intermediate member can implement transmission via a rigid conic toothed ring of inner meshing type, and can also implement transmission via a flexible belt, for example, via meshing of the driving belt with meshing teeth and grooves on the inner surface thereof with the two variable-tooth conic gears to implement transmission;
alternatively: a one-stage direct transmission type can be employed, which is a type without any intermediate member; transmission is performed via directly meshing of the variable-tooth conic gear having a small taper with the rigid tooth-and-groove ring;
a variable-tooth rotary shaft roller gear CVT comprises: key components: a variable-tooth cylindrical gear , a rotary shaft roller wheel; and assistant components: a fixing bracket, a revolution bracket, a planet conic gear, a sun conic gear and the related components; the variable-tooth cylindrical gear is coupled to the output shaft, and is fitted on the fixing bracket; the rotary shaft roller wheel and the planet conic wheel (116) are coupled to the output shaft (33), and are fitted on the rotatable bracket, the planet conic wheel (116) meshes with the sun conic gear (117), the sun conic gear is coupled to the input shaft; as the shifting lever (44) is turned, the whole revolution bracket will rotate around the axis of the input shaft, at which time the planet conic gear rotates around the sun conic gear, but the meshing state therebetween can be always maintained so as to transmit the torque of the input shaft to the rotary shaft roller wheel, due to the rotations of the revolution bracket, the angle between the rotation axes of the rotary shaft roller wheel and the variable-tooth cylindrical gear is changed, so that the transmission ratio varies;
alternatively: a rotary shaft roller wheel of the type in which the density of the rollers can be changed can be employed, the density/number of the rollers can be changed according to changes of the transmission ratio, all rollers come into operation at high speeds, and the number of rollers that operate at low speeds is reduced to half of the total number; the roller wheel with variable density is configured by interposing two halves with sparse rollers, when it is required that the roller wheel has denser rollers, the two half roller wheels can be interposed so as to double the roller density, and the density will be reduced to one half if the two halves are separated;
alternatively: multiple-phase mechanisms can be arranged in parallel, wherein two variable-tooth cylindrical gears are employed at an upper position and a lower position to mesh with the rotary shaft roller wheel, so as to double power; an arrangement can also be employed where two rotary shaft roller wheels are provided respectively at an upper position and a lower position of the variable-tooth cylindrical gear to mesh therewith;
alternatively: a multiple-phase layout can be employed, wherein a plurality of rotary shaft roller wheels is provided along the circumferential direction of the variable-tooth cylindrical gear to mesh therewith; or: a plurality of variable-tooth cylindrical gears is provided along the circumferential direction of the rotary shaft roller wheel to mesh therewith;
the rollers of the rotary shaft roller wheel can take a conic shape, and the performance of continuously variable transmission is basically improved by using of the self-locking property; its working surface can also be made to be an arc shape; alternatively: the rotary shaft roller wheel can be replaced with a gear, a bevel gear, a worm wheel or a worm to mesh with the SSs of the variable-tooth cylindrical gear, the variable-tooth cylindrical gear can also be replaced with a variable-tooth conic gear;
alternatively: a transmission in which the rotation shaft of the rotary shaft roller wheel is fixed and the rotation shaft of the variable-tooth cylindrical gear can rotate is employed;
a variable-tooth CVT with a radius-varying metal block belt: comprises a metal block belt wheel, the radius of which belt is continuously variable, and a variable-tooth cylindrical gear; continuously variable shifting is realized by changing the radius spanned by the metal blocks of the metal block belt wheel and making them mesh with the variable-tooth gear; the metal block belt wheel, the radius of which belt is continuously variable, is composed by two opposing conic discs sandwiching a metal block belt therebetween, the metal block belt is a flexible convex-concave tooth block belt (also referred to as a chain of tooth blocks) consisting of alternately superposing several convex tooth blocks (119) and concave tooth blocks (120) coupled by a tooth block coupling string (118) running therethrough, the radius of the metal block belt on the conic disc can be changed as the distance of the two opposing conic discs changes, so as to implement continuously variable radius; alternatively: in order to improve the unity of the metal block belt wheel, the conic surface of the conic discs can be provided with convex-concave grooves so as to mesh with the flexible metal block belt to form a stable unity, at which time the side wall of this metal block belt is of a SS belt structure; or elastic force and spring force, etc. can be employed to return the SSs and make them mesh; in addition, the conic disc can also be replaced with a multiple-ring variable-tooth conic gear, the meshing surface is formed by alternately superposing the convex and concave tooth blocks of the metal block belt so as to mesh with the SSs of the variable-tooth conic gear, or in order to facilitate shifting via sliding in the radial direction, idler wheels (141) can be provided on the side walls of the metal blocks; alternatively: the metal block belt can also be replaced by a rubber belt with grooves on the outer side and on both the side walls; a transmission assembly being capable of working continuously can be formed by symmetrically arranging two metal block belt wheels, with each wheel meshing with one variable-tooth cylindrical gear, and a continuous output of power flow is realized by alternate complement meshing of two variable-tooth cylindrical gears and two metal block belt wheels; a metal block belt wheel with continuously varying radius can be of an inner stretching type, in which the stretching device is located inside of the wheel body, or of an outside stretching type, in which the stretching device is located outside of the wheel body, and the stretching string and stretching device thereof can be arranged sideward; alternatively: a gear with a fixed number of teeth can be substituted for the variable-tooth gear to mesh with the metal block belt so as to implement continuously variable shifting;
a variable-tooth gear CVT with radius-varying tooth segments: comprises a toothed ring assembly capable of changing radius continuously, and a variable-tooth cylindrical gear, etc, where continuously variable shifting is realized by changing the radius spanned by the toothed ring and making it mesh with the variable-tooth gear; the toothed ring capable of changing radius continuously is formed by combining several tooth segments, each of which is coupled to the radial sliding rail via a translation pair, to assure the continuity of the working tooth surfaces of the toothed ring, at least two sets of toothed rings are alternately arranged in a staggered manner to form a toothed ring assembly, each set meshing with a variable-tooth cylindrical gear, respectively, or meshing with different rings of SS groups of a double-ring variable-tooth cylindrical gear, so as to form a CVT assembly capable of independently performing a work cycle, a continuous output of power flow is thus realized by alternate complement meshing of two variable-tooth cylindrical gears and two toothed rings; alternatively: the combination of the two sets of toothed rings can be replaced with a single-toothed ring formed by the step tooth segments (125) being alternately interposed; the meshing manner of the variable-tooth gear and the radius-varying toothed ring can take an inner meshing type and an outer meshing type;
a transmission mechanism of an inner meshing planet type: variable-tooth gears mesh with a large toothed ring composed of a plurality of tooth segments from inside, the variable-tooth gears and gears (a) are coaxially fixedly coupled, the gears a and gears b mesh with each other, gears (b) in turn mesh with a sun gear, the rotation shafts of gears (a), gears (b) and the sun gear (45) are coupled in a triangular shape via a planet bracket (50), the distances of the shafts of the gears (a) and gears (b) are fixed, the distances of the shafts of the gears (b) and the sun gear (45) is fixed, and the gears (a) and the sun gear (45) are coupled by a coupling body (142) in such a way that the distance between their shafts can be continuously adjusted; during speed adjusting, the radius of the toothed ring assembly is changed and the distance between the shafts of gears (a) and the sun gear (45) is synchronically changed so as to implement shifting; generally, "the sun gear and the planet bracket" serve as input and output transmission terminals; alternatively: the tooth segments can employ non-involution tooth profiles; the variable-tooth gear can employ "transmission by SSs with bevel teeth"; alternatively: a single-ring variable-tooth cylindrical gear having wider SSs can also be employed to replace the set of two variable-tooth cylindrical gears or the double-ring variable-tooth cylindrical gear;
a SS clutch of an axial coupling type : generally comprises teeth and grooves of two tooth-and-groove disc surfaces oppositely clipping a SS wobble-plate;
a shifting transmission with a constant mesh SS type gear: comprises a constant mesh gear with a tooth-and-groove disc on a side wall, a shifting lever, a thrust bearing, oppositely clipping grooved disc for returning via elastic force, positioning and coupling pins, a SS wobble-plate and bolts; the transmission shaft is coupled to the wobble-plate via a guiding spline, the SS wobble-plate is divided into two halves to be coupled by a bolt into a whole, each half wobble-plate is provided with a ring of SS groups which functions independently, the two rings of SS groups are clipped by a pair of tooth-and-groove discs with opposing teeth and grooves, respectively, the pair of opposite clipping tooth-and-groove discs refer to a mobile tooth-and-groove disc (129), and the sidewall tooth-and-groove disc surface of the constant mesh gear (127), both being coupled by the positioning and coupling pin (130) to assure synchronous rotations, but they can move axially with respect to each other; the engagement between the two constant mesh gears (127) and the transmission shaft is via a bearing joint, the shifting push lever (128) is coupled to the two mobile tooth-and-groove discs (129) via the thrusting bearing, respectively; alternatively: the returning manner of such SSs can employ "an electromagnetic driving manner"; or: the SSs used in the SS wobble-plate can be the SSs of a segment shape in section or sliding-needles; or the design of alternative and dense arrangement of the fill SS groups and the support SSs;
a SS clutch of a radial coupling type: comprises a coupling sleeve (133) with teeth and grooves on the inner loop, and a SS grooved wheel (134), the upper portion of such a SS is in the form of an arc, allowing for a natural transition when being inserted; after being inserted, the coupling sleeve and the SS grooved wheel can perform infinitely meshing; the design can also be employed thus that the fill SS groups and the support SS groups are disposed alternately and densely;
a SS clutch of a conic surface coupling type: comprises a SS conic disc (135) and a coupling sleeve (136) for a tooth-and-groove conic disc; after the SS conic disc is coupled to the coupling sleeve for a tooth-and-groove conic disc, the SSs return under the effect of centrifugal forces and mesh with the tooth-and-groove conic disc so as to implement the engagement of the clutch;
an overrunning clutch of a SS type: comprises SSs, a SS grooved wheel (134), and a planet wheel outer loop (140); in operation, the planet wheel outer loop (140) rotates in a reciprocating manner, the SSs return under the effect of centrifugal force and so mesh with the single-direction teeth and grooves of the planet wheel outer loop, so as to transmit the torque to the SS grooved wheel (134) and rotate it, in addition, the oil lubrication via a centrifugal pump can be employed;
alternatively: the SSs and the blocking grooves can take a radiating form, the cross sections of the SSs can be of a segment shape; the type in which the SSs are densely arranged throughout the ring can be employed; or a spaced type can be employed; in such a mechanism, the SSs are constrained by the planet wheel outer loop, therefore the SSs do not need stop legs; alternatively: the "progressive differential principle" can be considered when the distances and the number of the single-direction teeth and grooves of the planet wheel and the SS tooth-and-groove wheel are designed as a whole; the load capacity can be improved by increasing the width and the thickness of the SSs of the clutch; "the self-locking property" can be utilized to design the teeth and grooves of the planet wheel outer loop to improve the performance of infinitely meshing and the like ;
alternatively: a Mode A transmission comprises a Mode A main wheel body (I), a Mode A main wheel body (II), a Mode A assistant wheel body, Mode A support SSs, and Mode A SSs and the like;
alternatively: a Mode B transmission comprises a Mode B main wheel body, a Mode B assistant wheel body, Mode B SSs, a nut fork, and a speed adjustment guiding sleeve;
a CVT of a type in which steel needles and steel sheets mesh, the infinitely meshing is implemented by interposing the steel needles (211) and steel sheets (212) into each other; the steel needles (211) are disposed throughout the inner side of the belt, and the transversely arranged steel sheets are disposed throughout the outer side of the wheel, the infinitely meshing is implemented by interposing the steel needles and steel sheets into each other;
an infinitely meshing transmission with fluid deformable at a fixed volume, its infinitely meshing device unit is a deformable meshing unit (213) which is closely filled with fluid and has a fixed volume, the infinitely meshing is implemented by meshing with the inner teeth of the driving belt (151) through the deformable property of the fluid at a constant volume, or such fluid is "a magnetorheological fluid";
a CVT of an operation separated and effect combined type, **characterized in that**: two pairs of conic discs sandwich therebetween a driving belt with convex and concave meshing teeth on the inner side; a number of infinitely meshing device units that can perform infinitely changing radius in synchronization with the driving belt are coaxially disposed in the opposing inner space between the two conic discs, the infinitely meshing device unit comprises a unit carrier and a meshing body; the meshing body meshs with the convex and concave meshing teeth on the inner side of the driving belt so as to implement transmission via infinitely meshing; the meshing body of the infinitely meshing device unit can be a SS variable-tooth meshing device, a magnetorheological fluid/electrorheological fluid meshing device, an infinitely meshing device via a worm/worm rack, an infinitely meshing device via skidding blocks; and its driving belt can be a flexible driving belt with teeth on the inner side, and can also be a flexible driving chain with teeth on the inner side.

4. The infinitely meshing variable-tooth gear with SSFT according to claim 3, **characterized in that**,
a transmission of a SS variable-teeth meshing type: its infinitely meshing device unit comprises the meshing unit carrier (155) and a SS group consisting of several SSs (including sliding-blocks); the SS group infinitely meshes with the driving belt (151) to transmit power; an idler wheel (152) embodied as a double-wheel, a single wheel or a drum-like wheel can be provided on the beam for a SS holder, the idler wheel(s) cooperates with the radial rail (146), there are provided stop seats (153) for SS holders and returning springs (154) under the SS groups, the returning spring being classified into a flat spring and a corrugated spring, there can be provided a rolling bearing or a sliding bearing between the idler wheel and the rotation shaft, or even the sliding motion is implemented directly by lubricating contacts without providing the idler wheel; on the conic disc (147) are provided several radial rails (146) which match the orientation of the generatrix of the conic disc, these rails cooperate with the idler wheels on the respective meshing unit carrier (155) so as to form a translation pair coupling; the driving belt operates at a stable radial position and implements, together with the meshing body, i.e., the SS groups of the meshing device unit, infinitely meshing; a sliding-block can be add to a SS group , if the direction of the force acting upon the SSs is to the left, the sliding-block should be installed at the left side, and vice versa, if the SSs are acted by forces in two directions under rotation, then one sliding-block should be installed at either side thereof; alternatively, the CVT employs a metal pressing belt having teeth at the inner side thereof, this metal pressing belt comprises metal rings (159), metal blocks of a fill type (160), and metal blocks of a meshing type (161), the metal blocks of a fill type and the metal blocks of a meshing type are alternately superposed to form a metal belt with teeth on its inner side; alternatively: the driving belt can be a synchronous metal belt of a hole-meshing type, the whole driving belt is constructed by closely superposing multiple layers of metal rings with holes therein, all holes corresponding one by one so as to form rectangular holes for SSs to insert therethrough, in operation, the SSs mesh with the rectangular holes so as to implement transmission; alternatively, the radial constraining rail of the infinitely meshing device unit 148 is as follows; the whole interior of the conic disc is excavated such that the outer wall surface (164) and the inner wall surface (165) of the conic disc become conic surfaces similar in orientations, several sliding grooves (166) are notched on the conic surface along its generatrix; alternatively: the radial rail is a cylindrical guiding groove (168), corresponding cooperation between the meshing device unit and the cylindrical guiding groove employs a cylindrical rolling translation pair (167); it is also possible to provide a stretching spring (163); alternatively: the contact angle between the SSs and the surfaces of the meshing tooth is less than the equivalent friction angle, a wearable adhesive layer (190) can be provided on the surfaces of the meshing teeth of the driving belt, a wearable metal paste block with high hardness or a coating of wearable material can be adhered, or the belt base can directly undergo hardening treatment;
a device to eliminate the gaps between the metal blocks on the slack side of the metal belt comprises: an urging wheel (172), a small gear (173), a driving wheel (174), a large gear (175), and a clamping mechanism (176); the urging wheel and the driving wheel are both pressed firmly onto both sides of the metal belt (a pressure belt) (170), the urging wheel is fixedly coupled to the small gear, the driving wheel is fixedly coupled to the large gear, and the small gear and the large gear maintain meshing transmission; alternatively: a motor can be employed to directly drive the urging wheel (172); alternatively: the manner of directly impacting via a gas flow or fluid flow of high speed can also be employed to urge the metal blocks to accelerate so as to eliminate gaps therebetween;
a magnetorheological/electrorheological fluid CVT: its infinitely meshing device unit is "a magnetorheological/electrorheological fluid" meshing device, the meshing body is a magnetorheological/electrorheological fluid infinitely meshing body 177, at the instance before meshing, there is no magnetic field, "magnetorheological fluid" takes a liquid form, so it can sufficiently deform in accordance with the current meshing tooth profiles, when a magnetic field is applied after meshing, the magnetorheological fluid will immediately assume a solid state and become a solid tooth profile with which it meshes, and the magnetic field is removed after the meshing is released, so the magnetorheological fluid assumes the liquid state again; alternatively: "the magnetorheological fluid" and "the electrorheological fluid" mix and combine with the SS groups, the SSs, when under the effect of forces, mix with the magnetorheological fluid, at the dynamic instance when the SSs come into meshing, the magnetorheological fluid which mixes with the SSs assumes a liquid state, so the SSs can smoothly slide and deform, and once the SSs assume a complete meshing state and stop sliding, the magnetorheological fluid mixing therewith assumes a solid state and integrates firmly with the SSs so as to form a fixed tooth profiles;
alternatively: a magnetorheological/electrorheological fluid CVT comprises a driving belt/chain (180) containing magnetorheological/electrorheological fluids on the inner side thereof, meshing bodies (178) with fixed tooth profiles, and a conic disc, magnetorheological/electrorheological fluids are provided on the inner side of the driving belt base, in other words, the meshing bodies of the infinitely meshing device unit are of fixed tooth profiles, and the tooth profiles of the magnetorheological fluids or electrorheological fluids on the inner side of the belt base change according to the deformation of the tooth profiles of the meshing bodies (178) so as to implement infinitely meshing;
alternatively: a magnetorheological/electrorheological fluid CVT comprises: a member capable of infinitely varying radius via magnetorheological/electrorheological fluids (181), bodies (177) capable of infinitely meshing via electrorheological fluids, and a soft cavity for magnetorheological/electrorheological fluids (179); the processes of the infinitely radius-varying and infinitely meshing are implemented by magnetorheological/electrorheological fluids, the process of the infinitely radius-varying is implemented by infinitely changing the volume of soft cavity (179) for magnetorheological/electrorheological fluids and by "liquefied deforming" of the magnetorheological/electrorheological fluids, once the process of the radius-varying completes, the magnetorheological/electrorheological fluids then solidify and the radius is fixed, so as to construct the cylinder capable of infinitely radius-varying; the process of infinitely meshing is conducted by several bodies capable of infinitely meshing via electrorheological fluids (177) on the outer circumference and the driving belt (151);
alternatively: the "magnetorheological fluids" can be packed into a soft bag to mesh with the fixed teeth, and the fixed teeth for meshing can be manufactured into an arc shape;
alternatively: the magnetorheological fluids can also directly adhere to the surface of the smooth belt, and mesh with the friction surface conic disc with large roughness to implement transmission; alternatively: the driving belt is a driving belt with teeth on both sides, and magnetorheological/electrorheological fluids are provided on the conic surface of the conic disc; alternatively: the magnetorheological/electrorheological fluids are provided on the side surfaces of the driving belt, and the corresponding conic surface of the conic disc is provided with convex teeth and concave grooves, at the dynamic instances of coming into meshing and releasing from meshing, the magnetorheological/electrorheological fluids "liquefy", while in other regions they are in a "solidified" solid state;
a rack CVT with a worm/worm rack: its infinitely meshing device unit employs a meshing device operating in "a manner of infinitely meshing via a worm/worm rack", and can be of a "worm and worm rack meshing" type, a driving belt/chain in a worm rack toothed shape (183), the worm (182) infinitely meshes with the driving belt/chain in a worm rack toothed shape (183) under the driving of a controller (184) to transmit power; or it can be of a type in which two worms racks mesh, the worm rack (185) translates and infinitely meshes with the driving belt/chain in a worm rack toothed shape (183) under the driving of the controller (184);
an infinitely meshing transmission with sliding-blocks: its infinitely meshing device unit is a "sliding-block infinitely meshing" device, the tooth profiles on the inner side of the sliding meshing triangular toothed belt, a chain (186) whose triangular teeth at the inner side meshes through sliding, capable of meshing via sliding with the tapered tooth blocks (187) by automatically finding the meshing points through mechanical sliding, the tapered tooth blocks (187) moves in the trails (189), in x direction, they can return via centrifugal forces; in y direction, they are self-locked, in operation, the tapered tooth blocks can freely return in x direction until they reach the optimal meshing end of the triangular-tooth driving belt capable of meshing via sliding (186) so as to mesh sufficiently with the surfaces of the triangular teeth; they are self-locked in y direction, by juxtaposing and operating two types of tapered tooth blocks, denoted by (a) and (b), which are orientated along complementary rails, it is realized thus that the infinitely meshing device unit can infinitely mesh with the triangular-tooth driving belt capable of meshing via sliding (186) at any point in the regions that the tooth blocks can slide;
a CVT with a variable-tooth gear capable of radius varying, the variable-tooth gear capable of radius varying is composed of a plurality of infinitely meshing device units (148), the infinitely meshing device units can synchronously move in the radial direction along their respective radial sliding trail (123), respectively;
alternatively: the infinitely meshing device units (148) mesh with an internal gear ring (191), or: the infinitely meshing device units (148) mesh with an external gear ring (192); or: a variable-tooth cylindrical gear meshes with external meshing tooth segments (193);
a conic disc without a physic spindle in the inner side, with no transmission shaft between the two conic discs, the infinitely meshing device unit can move into a region of a smaller radius;
alternatively: the carrier for the infinitely meshing device unit is a flexible carrier for the infinitely meshing device unit, the carrier for the meshing unit employs a flexible, a pliable structure, the carrier of the meshing unit is attached to the teeth on the inner side of the belt so as to sufficiently mesh therewith, and its curvature can completely coincide with that of the inner side of the belt;
a transmission of a type without a centrifugal pressing effect, the radial motion of the meshing device unit is controlled by a radial synchronization controller (196), in operation, the centrifugal force poses no centrifugal pressing effect onto the conic disc (147), and it suffices to notch radial through grooves on the conic disc (147),
its radial synchronization controller (196) can employ a screw nut structure, the nut (198) is coupled to the meshing device units (148), and the synchronous motions of respective meshing device units (148) in the radial direction are achieved by synchronously controlling the rotation angles of respective screws;
alternatively: in the radial synchronization controller, each infinitely meshing device unit (148) comes into contact with the inner conic surface of a recessed conic disc (199) via idler wheels (152), and the synchronous motions of respective meshing device units (148) in the radial direction are achieved by controlling the distance of the recessed conic discs (199) on both sides;
alternatively: the motion trajectories of the infinitely meshing device units (148) are subject to the constraint of a respective corresponding spiral rail with variable radius (201) on a radius-varying rotary disc (200), and the radius-varying rotary disc (200) implements the synchronous motions of respective meshing device units (148) in the radial direction;
alternatively: the infinitely meshing device units (148) are coupled to the radius-varying rotary disc (200) via a linkage mechanism, or a two-rod linkage mechanism is employed; the synchronous motions of respective meshing device units 148 in the radial direction are realized by rotating the radius-varying rotary disc (200);
alternatively: the rotation angle of the radius-varying rotary disc (200) is automatically monitored in real-time by a hydraulic or mechanic manner;
alternatively: any one of the infinitely meshing device units is constrained by a trajectory of the idler wheel, the coupling constraints among all meshing device units are conducted by a synchronous radial motion mechanism so as to realize radius varying synchronously and equally;
alternatively: the infinitely meshing device units (148) can be directly inserted into the conic body to transmit torque without being providing with any assistant constraining devices, the T-shaped groove of the trajectory of the idler wheel is changed to a rectangular groove to cooperate with the infinitely meshing device units, the radius is varied freely in the radial direction, the driving belt (151) directly imposes a slave radial dimension constraint on the respective meshing device units (148), and all the infinitely meshing device units on the same conic disc should be coupled to each other by a synchronous radial motion mechanism such that all infinitely meshing device units move in the radial direction synchronously,
alternatively: the synchronous constraint in the radial direction can be implemented by coupling the linkage mechanism to the radius-varying rotary disc (200), or: the screw and nut structure which is not self-locking in either direction is employed, and all screw nuts move synchronously through the joint of the conic gear mechanism (203) so as to implement the synchronous radial constraints;
alternatively: the infinitely meshing device unit implements synchronous radius-varying through the control of the radius-varying rotary disc (200) and the linkage mechanism (202); it is not necessary to notch radial rail grooves on the conic disc (147), or rectangular grooves are provided on the conic disc (147) to cooperate with the infinitely meshing device unit,
a transmission of the type containing a central guiding and constraining disc, a central guiding and constraining disc (204) is disposed between the two conic discs (147) so as to transmit torques and guide in the radial direction, the central guiding and constraining disc (204) is of a flat disc type or a double-sided conic disc type, or: a radial synchronization controller is provided in the center of the central guiding and constraining disc (204);
alternatively: a separating device via electromagnetic traction is provided, and the conic disc combined by split parts is employed, comprising an inner conic disc (147) and an outer conic disc casing (205) with a predetermined axial spacing therebetween, and an electromagnetic sucking disc (206) is provided in the inner conic disc (147) and/or an outer conic disc casing (205), or: the electromagnetic sucking disc is replaced with a hydraulic or pneumatic device;
an electromagnetic traction controller for seating SSs, wherein stop bars against returning and seating of SSs (207) is controlled by the electromagnetic forces of the electromagnetic sucking disc (206);
alternatively: a mechanic traction controller for seating SSs, a seating control disc (209) is rotated, and a cam (208) is entrained by the idler wheel (152) mechanism to rotate, and the stop bars against returning and seating of SSs (207) are hence urged to move, so as to seat the SSs to achieve the separation of the SSs from the inner meshing teeth of the driving belt;
a driving belt with single-direction meshing teeth, the inner meshing teeth are divided into two halves, each half region is designed to be a single-direction tooth surface;
a CVT with a meshing type steel ring, comprises a steel ring with meshing teeth on the inner side (210) and the corresponding conic disc.

5. The infinitely meshing variable-tooth gear with SSFT according to claim 3, **characterized in that**: the tooth-and-groove wheel is classified into a flat disc type and a conic disc type, its working disc surface comprises convex teeth and concave grooves; its groove pattern is: a single tooth pattern in the form of radiating in radial direction, an arrangement equivalent in the interval density of teeth and grooves, a type of being knurled throughout a disc, a type with a uniform array of protuberances throughout the disc surface, a type with a uniform array of dimples throughout the disc surface, a specialized type for the bevel SS variable-tooth gear, a tooth-and-groove disc type for stepped transmission, a type where the tooth-and-groove pattern is optimized for each segment and for each step, a type where the shuttle-shaped teeth are alternately arranged in the radial direction, or a type where the shuttle-shaped teeth are uniformly arranged in the radial direction;
said meshing ring with teeth and grooves is: a conic type or a cylindrical type; wherein, the conic tooth ring can be classified into: a conic tooth ring meshing at the inner and outer sides, a conic tooth ring meshing at the inner side, and a conic tooth ring meshing at the outer side; the cylindrical tooth ring can be classified into: a cylindrical tooth ring meshing at the inner side, a cylindrical tooth ring meshing at the inner and outer sides, and a cylindrical tooth ring meshing at the outer side.

6. The infinitely meshing variable-tooth gear with SSFT according to claims 1, 2 or 3, **characterized in that**: said SSs are SSs specialized for the variable-tooth cylindrical gear, SSs specialized for the variable-tooth conic gear that are of "the type in which one side works independently", SSs specialized for the variable-tooth conic gear that are of "the type in which both sides work integrally", SSs specialized for the SS variable-tooth conic gear with of a small taper, SSs specialized for the variable-tooth gear of the rotary shaft roller gear CVTs, SSs specialized for the variable-tooth gear of returning in an oblique direction type, SSs specialized for the SS tension driving belt, or SSs of the returning via elastic force type, all of them include support SSs, fill SSs, the support SSs contact the wall of the wheel body holder to receive forces, and the fill SSs contact the support SSs to receive forces, being classified into an outside support type, an outside interaction crossing support type, a central support type, a central interaction crossing support type, an outside and central double support type, and an outside and central interaction crossing support type; the SSs can also be circular SSs; the working surfaces of the SSs can be of an arc shape, and the working surfaces can be further decreased so as to form "a local force-receiving zone in an arc shape", the arc-shaped profile of the working surfaces can be modified to a linear profile; a thick SS can be added to each end of the SS group, the stop legs of the fill SSs can be as long as those of the support SSs, and they can have one or two stop legs;
cross sections of the SSs can be cross sections of the same thickness or be of a segment shape, or be cross sections of different shapes; the shapes of the cross sections of the contact regions between the SSs and the teeth and grooves can be: a single slant, double slants, circular surfaces, the contact section angle θ thereof can coincide with the slanting angle of the wall surfaces of the teeth and grooves;
the constraining device for the SSs can be stop legs for SSs (25) and an outer constraining ring (23), wherein there can be one or two stop legs for a SS; the stop leg for a SS can be of a convex type or a concave type, alternatively, a constraining ring, string or rod can be inserted through a hole which is punched in the SS to carry out constraining;
there can be one or two stop legs for a SS; the stop leg for a SS can be of a convex type or a concave type, alternatively, a constraining ring, string or rod can be inserted through a hole which is punched in the SS to carry out constraining, or the constraining is implemented by the outer constraining ring (23),
the SSs of returning via elastic force type include: Mode A fill SSs of returning via elastic force type, Mode A support SSs of returning via elastic force type, Mode B support SSs of returning via elastic force type, Mode B fill SSs of returning via elastic force type; the meshing surfaces on both sides of the SSs can be made into an arc shape or a rectangular shape; or: the returning of the SSs of the SS wheel can take a free returning manner, the SSs of returning via elastic force type are divided into two halves, and a returning spring wire (109) is interposed therebetween, so as to implement returning via spring forces; or injecting gas flow or liquid flow through a gas flow hole (110) to realize the returning type via flow impact forces; or: an electromagnetic traction device is disposed on the conic disc tooth-and-groove wheel or at positions of equivalent effect, the returning type via electromagnetic forces can be realized in such a way that SSs on the SS wheel are electromagnetically attracted or repelled by electromagnetic traction forces; the stop legs for the SSs can be provided at the middle of the SSs, and the SSs can have one or two stop legs;
alternatively: the SSs of returning via spring force type can be provided with returning spring wires arranged at the end thereof, the returning trajectories of the SSs can be a type of returning in translation, or a type of returning in rotation; or: a flat spring, or a corrugated spring can be disposed on the bottom of the SSs;
alternatively: the SSs of a type of supporting on one side can also be employed, its corresponding variable-tooth gear body is a gear body (144) without a stop boss, which is superposed with a gear body having a stop boss to constrain and position the SSs;
alternatively: the SSs can be disposed as a needle shape or a block shape; and the cross section of the needle shape can be circular or rectangular.

7. The infinitely meshing variable-tooth gear with SSFT according to claims 1, 2 or 3, **characterized in that**: the force direction when transmitting power is perpendicular to the free-sliding direction, or the angle therebetween is within the equivalent friction angle, the SS possesses self-locking property; the principle of "self-locking meshing property" is employed to design the SSs in meshing;
the arrangement principle of the meshing points of said SSs and the tooth-and-groove wheel employs "the progressive toothwise differential principle".

8. An infinitely meshing variable-tooth rack with SSFT, **characterized in that**: the infinitely meshing variable-tooth rack with SSFT comprises a variable-tooth rack body and a plurality of sliding-teeth built in the rack body; wherein, the SSs can move in the variable-tooth rack body due to returning forces, and the SSs protrude out of the opposing contour surfaces on the variable-tooth rack body so as to form tooth profiles of any shape.

9. The infinitely meshing variable-tooth rack with SSFT according to claim 8, **characterized in that**: said variable-tooth rack body is a rigid variable-tooth rack body or a flexible variable-tooth rack body, said variable-tooth rack body is: a velocity-locking block with SSs disposed therein, or a velocity-locking block with sliding-needles disposed therein; and said flexible variable-tooth rack is: a SS tension driving belt;
wherein, a velocity-locking block (138) having SSs mounted therein can be clipped by two symmetrically arranged traction belts (137) whose meshing convex teeth and concave grooves oppose, whereby non-frictional meshing transmission is achieved by means of the meshing teeth and grooves of the two traction belts with regard to the returning process via elastic force of the sliding-sleets;
wherein, the SS tension driving belt is composed of two sets of split metal rings with convex and concave grooves clipping from the opposite directions a series of support metal sheets and fill metal sheets arranged at intervals, each set of the metal rings is configured by superposing several metal rings with convex and concave grooves, the recessed shoulders of the support metal sheets and the fill metal sheets are different and engaged with the convex and concave grooves of the split metal ring (82), a predetermined play is provided between the recessed shoulders of the metal sheets and the meshing grooves of the metal rings; the shapes of the metal SSs are classified into Mode A and Mode B, including metal SSs (80, 81, 85, 86); to prevent the distance between every two sets of the metal rings from changing, they are fixedly coupled to each other by a coupling body (83) for the metal belts;
alternatively: the SS tension driving belt comprises a metal ring (87) with a positioning groove in the middle, Mode C support metal sheets (88) and Mode C fill metal sheets (89), there are several metal rings (87) with a positioning groove in the middle superposed in the upper and lower portions of the metal sheets so as to constrain the SSs, a predetermined play is provided between the support SSs and the positioning grooves of the metal rings so as to allow for the metal sheets to slide transversely when the SS belt meshes with the tooth-and-groove wheel;
alternatively: the SS tension driving belt comprises metal rings (90) with convex-concave grooves on both sides, Mode D fill metal sheets (91), Mode D support metal sheets (92), the several metal rings (90) are superposed in the upper and lower portions of the metal sheets so as to constrain the SSs, a predetermined play is also provided between the SSs and the convex-concave grooves of the metal rings so as to allow for the metal sheets to slide transversely when the SS belt meshes with the tooth-and-groove wheel;
alternatively: the SS holders can be of a circular shape, a rectangular shape, or a sector shape;
said infinitely meshing variable-tooth rack with SSFT meshes with a tooth-and-groove boss, the working surface of the tooth-and-groove boss comprises teeth and grooves; and the tooth-and-groove boss is classified into a rigid tooth-and-groove boss, and a flexible tooth-and-groove boss;
wherein, the flexible tooth-and-groove boss is a traction belt containing meshing convex teeth and concave grooves, or a tooth-and-groove driving belt of a tooth meshing type, this driving belt is classified into a pressing belt, and a tension belt;
the tension belt includes: being composed of a belt base (65), an enforced layer (66), and meshing support blocks (64); the transmission via meshing of convex teeth and concave grooves is realized by arranging the meshing support blocks (64) at intervals, the meshing support blocks can be arranged at regular intervals or at irregular intervals; alternatively, a plate-and-pin chain of meshing type: meshing blocks (78) are provided on chain pins (76) or chain plates (77), meshing blocks can be provided on the chain pins (76) or chain plates (77), or: meshing blocks can be provided on both the chain pins (76) and the chain plates (77); or: the metal ring driving belt: being configured by superposing a plurality of metal rings with convex teeth and concave grooves on both sides, in a manner of one corresponding to another; alternatively, Mode B driving belt; the belt base is made of non-metal materials, its enforced layer be enforced with steel strings or nylon strings, etc., the two sides are wearable wall surfaces, and are made into a shape of meshing convex teeth and concave grooves, in addition, its transverse convex and concave tooth profiles can extend all the way through the whole belt base; alternatively: the prior art belt or chain is refitted, and the working side surface of the belt or chain is a convex tooth and concave groove capable of meshing with the SSs;
the pressing belt includes: a metal belt of the meshing type, a metal belt with meshing convex teeth and concave grooves configured by alternately combining metal rings and wide, narrow metal blocks; or: a metal belt configured by firstly composing a wide metal block group from wide metal blocks and a narrow metal block group from narrow metal blocks and then alternately combining the wide metal block group with the narrow metal block group; or: the narrow metal blocks can employ "a cross section of an arc shape", the regions of both sides of the wide metal blocks that participate in meshing can be provided with slant surfaces, whereby the continuously variable transmission performance is basically improved by means of the self-locking meshing property; alternatively: the wide, narrow metal blocks can be replaced with "concave metal blocks" and "convex metal blocks" of the flexible metal belt for the transmission with variable-tooth conic gear of a small taper.

10. The infinitely meshing variable-tooth rack with SSFT according to claims 8 or 9, **characterized in that**: said SSs are SSs specialized for the variable-tooth cylindrical gear, SSs specialized for the variable-tooth conic gear that is of "the type in which one side works independently", SSs specialized for the variable-tooth conic gear that is of "the type in which both sides work integrally", SSs specialized for the SS variable-tooth conic gear with a small taper, SSs specialized for the variable-tooth gear of the rotary shaft roller gear CVTs, SSs specialized for the variable-tooth gear of returning in an oblique direction type, SSs specialized for the SS tension driving belt, or SSs of the returning via elastic force type, all of them include support SSs, fill SSs, the support SSs contact the wall of the wheel body holder to receive forces, and the fill SSs contact the support SSs to receive forces, being classified into an outside support type, an outside interaction crossing support type, a central support type, a central interaction crossing support type, an outside and central double support type, and an outside and central interaction crossing support type; the SSs can also be circular SSs; the working surfaces of the SSs can be of an arc shape, and the working surface can be further decreased so as to form "a local force-receiving zone in an arc shape", the arc-shaped profile of the working surface can be modified to a linear profile; a thick SS can be added to each end of the SS group, and the stop legs of the fill SSs can be as long as those of the support SSs, they can have one or two stop legs;
cross sections of the SSs can be cross sections of the same thickness or be of a segment shape, or be cross sections of different shapes; the cross section shapes of the contact regions of the SSs and the teeth and grooves can be: a single slant, double slants, circular surfaces, the contact section angle θ can coincide with the slanting angle of the wall surfaces of the teeth and grooves;
the constraining device for the SSs can be stop legs for SSs (25), and an outer constraining ring (23), wherein there can be one or two stop legs for a SS; the stop leg for a SS can be of a convex type or a concave type, alternatively, a constraining ring, string or rod can be inserted through a hole which is punched in the SS to carry out constraining;
there can be one or two stop legs for a SS; the stop leg for a SS can be of a convex type or a concave type, alternatively, a constraining ring, string or rod may be inserted through a hole which is punched in the SS to carry out constraining, or constraining is implemented by the outer constraining ring (23),
the SSs of returning via elastic force type include: Mode A fill SSs of returning via elastic force type, Mode A support SSs of returning via elastic force type, Mode B support SSs of returning via elastic force type, Mode B fill SSs of returning via elastic force type; the meshing surfaces on both sides of the SSs can be made into an arc shape or a rectangular shape; or: the returning of the SSs of the SS wheel can take a free returning manner, the SSs of returning via elastic force type are divided into two halves, and a returning spring wire (109) is interposed therebetween, so as to implement returning via spring forces; or injecting gas flow or liquid flow through a gas flow hole (110) to realize the returning type via flow impact forces ; or: an electromagnetic traction device is disposed on the conic disc tooth-and-groove wheel or at positions of equivalent effect, the returning type via electromagnetic forces can be realized in such a way that SSs on the SS wheel are electromagnetically attracted or repelled by electromagnetic traction forces; the stop legs for the SSs can be provided at the middle of the SSs, and the SSs can have one or two stop legs;
alternatively: the SSs of returning via spring force type can have returning spring wires arranged at the end thereof, the returning trajectories of the SSs can be of a type of returning in translation, or a type of returning in rotation; or: a flat spring, or a corrugated spring can be disposed on the bottom of the SSs;
alternatively: the SSs of a type of supporting on one side can also be employed, its corresponding variable-tooth gear body is a gear body (144) without a stop boss, which is superposed with a gear body having a stop boss to constrain and position the SSs;
alternatively: the SSs can be disposed as a needle shape or a block shape; and the cross section of the needle shape can be circular or rectangular,
the arrangement principle of the meshing points of said SS variable-tooth rack and the tooth-and-groove boss employs "the progressive toothwise differential principle".
